# EUROPEAN PATENT APPLICATION

(11) **EP 2 056 250 A1**
(43) Date of publication of application: **06.05.2009**
(21) Application number: 07792705.1
(22) Date of filing: 20.08.2007
(51) Int. Cl.: G06Q 50/00, G05B 19/418

(54) **PRODUCTION SYSTEM CREATING SYSTEM AND PRODUCTION SYSTEM CREATING METHOD**

(30) Priority: 25.08.2006 JP 2006228835
(71) Applicant: Class Technology Co., Ltd., Tokyo 151-0053 (JP)
(72) Inventor: YOTSUKURA, Mikio, Tokyo 151-0053 (JP); YOKOYAMA, Hiroshi, Tokyo 151-0053 (JP)
(74) Representative: Warren, Keith Stanley
(86) International application number: PCT/JP2007/066091
(87) International publication number: WO 2008/023655

(57) **Abstract**

To provide a production system creating system that can create production systems of various articles by freely combining a plurality of production factors of various types from a superordinate concept toward a subordinate concept thereof. In the production system creating system, while referring to a point in time when a three-term relationship creates a production system and a point in time when the three-term relationship separates from the production system, a plurality of three-term relationships of various types required for the creation of the production system at an arbitrary point in time are extracted from the relational database 18 and a plurality of production factors of various types corresponding to first to third production factors for forming the extracted three-term relationships are extracted from the factor-type database 17, these three-term relationship extracted from the relational database 18 are integrated, and these production factors extracted from the factor-type databases 17 are connected in series from a superordinate concept toward a subordinate concept thereof according to the integrated three-term relationship to thereby create production systems of various articles at the arbitrary point in time.

## Description

### TECHNICAL FIELD

The present invention relates to a production system creating system and a production system creating method for creating production systems of various articles from a combination of production factors branching from a superordinate concept toward a subordinate concept.

### BACKGROUND ART

There is disclosed a production management system that creates a component list of a mechanical apparatus by expanding a plurality of parts of various types constituting the mechanical apparatus into a tree structure (refer to Patent Document 1). This system sets a data number of the mechanical apparatus to 000, and sets first part numbers of a first part lying just below it to 100, 200, 300, and so on, sets second part numbers of a second part lying just below the first part number 100 to 110, 120, 130, and sets third part numbers of a third part lying just below the second part number 110 to 111, 112, 113. It is to be noted that the second part numbers lying below the first part number 200 are 210, 220, 230, and so on, and the second part numbers lying below the first part number 300 are 310, 320, 330, and so on. In addition, the third part numbers lying below the second part number 210 are 211, 212, 213, and the third part numbers lying below the second part number 310 are 311, 312, and 313. In this system, the first part numbers are connected to the data number of the mechanical apparatus, the second part numbers are connected to the first part number, and the third part numbers are connected to the second part number, thereby allowing a plurality of parts that form the mechanical apparatus to be expanded as the tree structure.
Patent Document 1: Japanese Unexamined Patent Publication (Kokai) No. 2004-62526

### DISCLOSURE OF THE INVENTION

### PROBLEM TO BE SOLVED BY THE INVENTION

According to the production management system disclosed in the aforementioned patent publication, the component parts of the mechanical apparatus are managed by the component numbers, and the first to third parts specified by the component numbers are arranged in the order of the numbers, so that the specific second part will lie just below the first part and the specific third part will lie just below the second part. Hence, the first to third parts arranged in a tree structure are uniquely defined in this system, and neither a different type of part can be arranged below the first part and a different type of part can be arranged below the second part, nor production factors other than the parts can be incorporated therein, thus making it difficult to create a constitution table in which production factors of different types are freely combined with each other. Additionally, since this system does not hold data at a point in time of creating the component list of the first to third parts or at a point in time of separating from the component list of the first to third parts, it is possible to create a component list at present but is not possible to create a component list at an arbitrary point in time going back to the past.

It is an object of the present invention to provide a production system creating system and a production system creating method that can create production systems of various articles by freely combining a plurality of production factors of different types from a superordinate concept toward a subordinate concept thereof. It is another object of the present invention to provide a production system creating system and a production system creating method that can create production systems of various articles at an arbitrary point in time going back to the past as well as at present.

### MEANS FOR SOLVING THE PROBLEM

The premise of the present invention for solving the aforementioned problems is a production system creating system for creating a production system of an article from a combination of production factors branching from a superordinate concept toward a subordinate concept.

The present invention in the aforementioned premise is characterized in that the production factors are linked with each other by an upper/lower two-term relationship between an arbitrary first production factor and a second production factor lying just below it and also linked with each other by an upper/lower three-term relationship among the first and second production factors, and a third production factor lying just below the second production factor, and the production system creating system is provided with a factor-type database for storing a plurality of the production factors of different types, and a point in time when the production factors create the production system and a point in time when the production factors separate from the production system, and a relational database for storing a plurality of the two-term relationships of different types and a plurality of the three-term relationships of different types, and a point in time when these two-term relationships and three-term relationships create the production system and a point in time when they separate from the production system, and uses these production factors to execute production system creating means for creating production systems at an arbitrary point in time from the past to the present corresponding to various articles. The production system creating means refers to the point in time when the three-term relationship creates the production system and the point in time when the three-term relationship separates from the production system to extract from the relational database a plurality of the three-term relationships of various types required for the creation of the production system at the arbitrary point in time and to extract from the factor-type database a plurality of production factors of various types corresponding to the first to third production factors for forming the extracted three-term relationships, integrates the three-term relationships extracted from the relational database, and connects in series these production factors extracted from the factor-type database from a superordinate concept toward a subordinate concept thereof according to the integrated three-term relationship to thereby create production systems of various articles at the arbitrary point in time.

As one example of the present invention, in the production system creating system, the factor-type database is classified into a plurality of first to n-th factor-type databases, first to n-th factor-type numbers for specifying a type of the production factor are individually set to these production factors, these production factors are stored in the first to n-th factor-type databases based on the first to n-th factor-type numbers, and the factor-type numbers of the first and second production factors for forming the two-term relationship and the factor-type numbers of the first to third production factors for forming the three-term relationship are stored in the relational database, wherein the production system creating means extracts a plurality of production factors of various types corresponding to the first to third production factors for forming these extracted three-term relationships from the first to n-th factor-type databases based on the first to n-th factor-type numbers, and while referring to the first to n-th factor-type numbers of the first to third production factors of the three-term relationship extracted from the relational database, combines production factors of the same factor-type number among the production factors for forming these three-term relationships with each other to thereby integrate a plurality of the extracted three-term relationships of various types thus extracted.

As another example of the present invention, in the production system creating system, first to n-th departmental numbers for sorting the production factors by department are individually set to these production factors, and departmental production system outputting means for outputting a departmental production system formed only of required production factors among the production systems created by the production system creating means is executed for every department, wherein the departmental production system outputting means refers to the first to n-th departmental numbers of a plurality of production factors of various types corresponding to the first to third production factors for forming these three-term relationships extracted from the relational database, and outputs the production system formed only of production factors corresponding to the same departmental number.

As still another example of the present invention, in the production system creating system, each of the production factors stored in the factor-type database can be altered going back to the present or the past, and at least one of the first to third production factors stored in the relational database can also be altered going back to the present or the past, and wherein when each of the production factors stored in the factor-type databases and the first to third production factors stored in the relational database are altered, the production system creating means integrates the three-term relationships again using altered new production factors and using new three-term relationships formed of the first to third production factors after the alteration, and re-creates production systems corresponding to the various articles according to the integrated three-term relationship.

As yet still another example of the present invention, in the production system creating system, the point in time when the production factors create the production system and the point in time when the production factors separate from the production system thereof can be changed going back to the past, and the point in time when the three-term relationship creates the production system and the point in time when the three-term relationship separates from the production system can also be changed going back to the past.

The second premise of the present invention for solving the aforementioned problems is a production system creating method, including: a factor-type database for storing a plurality of the production factors of different types, and for storing a point in time when these production factors create the production system and a point in time when the production factors separate from the production system; and a relational database for storing a plurality of the two-term relationships of various types between the production factors linked by an upper/lower two-term relationship between an arbitrary first production factor and a second production factor lying just below it, for storing a plurality of the three-term relationships of various types among the production factors linked by an the upper/lower three-term relationship among the first and second production factors, and a third production factor lying just below the second production factor, and also for storing the point in time when these two-term relationships and three-term relationships create the production system and the point in time when they separate from the production system, wherein while referring to the point in time when the three-term relationship creates the production system and the point in time when the three-term relationship separates from the production system, a plurality of the three-term relationships of various types required for the creation of the production system at the arbitrary point in time are extracted from the relational database and a plurality of production factors of various types corresponding to the first to third production factors for forming the extracted three-term relationships are also extracted from the factor-type database, the three-term relationships extracted from the relational database are integrated, these production factors extracted from the factor-type databases are connected in series from a superordinate concept toward a subordinate concept thereof according to the integrated three-term relationship to thereby create production systems of various articles at the arbitrary point in time, and created production systems are stored and outputted.

As one example of the aforementioned production system creating method, the factor-type database is classified into a plurality of first to n-th factor-type databases, first to n-th factor-type numbers for specifying a type of the production factor are individually set to these production factors, these production factors are stored in the first to n-th factor-type databases based on the first to n-th factor-type numbers, and the factor-type numbers of the first and second production factors for forming the two-term relationship and the factor-type numbers of the first to third production factors for forming the three-term relationship are stored in the relational database, wherein in the production system creating method, a plurality of production factors of various types corresponding to the first to third production factors for forming these extracted three-term relationships are extracted from the first to n-th factor-type databases based on the first to n-th factor-type numbers, and while referring to the first to n-th factor-type numbers of the first to third production factors of the three-term relationship extracted from the relational database, the production factors of the same factor-type number among the production factors for forming these three-term relationships are combined with each other to thereby integrate these extracted three-term relationships of various types.

As still another example of the aforementioned production system creating method, in the production system creating method, first to n-th departmental numbers for sorting the production factors by department are individually set to these production factors, and the first to n-th departmental numbers of a plurality of production factors of various types corresponding to the first to third production factors for forming these three-term relationships extracted from the relational database are referred to, and a departmental production system formed only of the production factors corresponding to the same departmental number among the created production systems is outputted.

As yet still another example of the aforementioned production system creating method, in the production system creating method, each of the production factors stored in the factor-type database can be altered going back to the present or the past and at least one of the first to third production factors stored in the relational database can also be altered, and when each of the production factors stored in the factor-type databases and the first to third production factors stored in the relational database are altered, altered new production factors are used, new three-term relationships formed of the first to third production factors after the alteration are used to thereby integrate the three-term relationships again, and production systems corresponding to the various articles are re-created according to the integrated three-term relationship.

As yet still another example of the aforementioned production system creating method, in the production system creating method, the point in time when the production factors create the production system and the point in time when the production factors separate from the production system can be changed going back to the past, and the point in time when the three-term relationship creates the production system and the point in time when the three-term relationship separates from the production system can also be changed going back to the past.

### EFFECT OF THE INVENTION

According to the production system creating system and production system creating method in accordance with the present invention, a plurality of three-term relationships of various types extracted from the relational database are integrated, and a plurality of production factors of various types extracted from the factor-type database are connected in series from a superordinate concept toward a subordinate concept thereof according to the integrated three-term relationship to thereby create the production system corresponding to each article, so that utilizing the three-term relationship formed of the first to third production factors makes it possible to create various production systems in which the production factors of different types are freely combined. In the production system creating system and the production system creating method, storing the point in time when the production factors create the production system and the point in time when the production factors separate from the production system allows the production factor to be managed in time series from the past toward the present, and storing the point in time when the three-term relationship creates the production system and the point in time when the three-term relationship separates from the production system thereof allows the three-term relationship to be managed in time series from the past toward the present, thus allowing the production system not only at the present time but also at an arbitrary point in time in the past to be created at present. In the production system creating system and the production system creating method, it is possible to create the production system at an arbitrary point in time, which can be shared by each of the departments, while each of the departments sharing the factor-type database and the relational database, thus allowing the production system to be managed in an integrated manner and in a time series by the relational database and the factor-type database. For that reason, each department does not need to create the production system independently, thus making it possible to omit useless time and labor due to each of the departments creating and managing a huge number of different production systems individually.

In the production system creating system and the production system creating method that refer to the factor-type numbers of the first to third production factors for forming a plurality of three-term relationships of various types extracted from the relational database, and combine the production factors of the same factor-type number to thereby integrate a plurality of three-term relationships of various types thus extracted, it is possible to reliably combine the mutually related production factors with each other, thus allowing various production systems to be created, in which a plurality of production factors of different types are freely combined by utilizing the three-term relationships. In the production system creating system and the production system creating method, since each of the production factors is classified into the first to n-th factor-type databases by the first to n-th factor-type numbers set thereto and stored in these factor-type databases, it is possible to group each of the production factors that can be shared by each department for every factor-type according to the first to n-th databases to thereby manage them in an integrated manner, thus making it possible to omit time and labor due to each of the departments managing these production factors individually. In the production system creating system and the production system creating method, it is possible to create the production system at an arbitrary point in time, which can be shared by each department, from each of the production factors stored in the first to n-th factor-type databases while each department sharing the relational database and the first to n-th factor-type databases, thus allowing the production system to be managed in an integrated manner and in a time series by the relational database and the first to n-th factor-type databases.

In the production system creating system and the production system creating method that output the departmental production system formed only of the required production factors for every department based on the first to n-th departmental numbers individually set to the production factors, since the production system including only the production factors required to be displayed to each department is outputted, the production factor which is not required to be displayed to each department can be omitted from the production system, thus allowing the production system having high utility value and ease-of-use for every department to be provided to the department in real time. In the production system creating system and the production system creating method, each department can utilize the production system formed only of the production factors required for it, thus allowing the working efficiency of each department to be improved.

In the production system creating system and the production system creating method, in which when the production factors stored in the factor-type database and the first to third production factors stored in the relational database are altered going back to the present or the past, the altered production factors are used and new three-term relationships formed of the first to third production factors after the alteration are used to thereby integrate the three-term relationships again, and the production system is re-created according to the three-term relationship thus integrated, it is possible to alter the production factors and the first to third production factors at an arbitrary point in time between the past and the present, thus allowing the new production system at an arbitrary point in time between the past and the present to be created using the altered production factors and first to third production factors. In the production system creating system and the production system creating method, it is possible to manage the alteration of the production factors in an integrated manner by the factor-type databases, and to manage the alteration of the three-term relationship due to the alteration of the first to third production factors by the relational database in an integrated manner. For that reason, it is not necessary to alter the production factor stored in the factor-type database, and the first to third production factors stored in the relational database for every department to thereby create and manage the production system, thus allowing time and labor due to each of the departments individually performing the alteration of the production factors and the alteration of the first to third production factors to be omitted.

In the production system creating system and the production system creating method, in which the point in time when the production factors create the production system and the point in time when the production factors separates from the production system can be changed going back to the past, and the point in time when the three-term relationship creates the production system and the point in time when the three-term relationship separates from the production system thereof can also be changed going back to the past, the point in time of creating the production system and the point in time of separating from the production system at an arbitrary point in time in the past can be changed, thus allowing the new production system at an arbitrary point in time between the past and the present to be created using the changed point in time of creating the production system and point in time of separating from the production system. In the production system creating system and the production system creating method, it is possible to manage the alteration of the point in time when the production factors create the production system and the point in time when the production factors separate from the production system thereof in an integrated manner by the factor-type database, and to manage the alteration of the point in time when the three-term relationship creates the production system and the point in time when the three-term relationship separates from the production system in an integrated manner by the relational database. For that reason, it is not necessary to alter the point in time of creating the production system and the point in time of separating from the production system for every department to thereby create and manage the production system, thus allowing time and labor due to each of the departments individually performing the alteration of the point in time of creating the production system and the point in time of separating from the production system to be omitted.

### BRIEF DESCRIPTION OF THE DRAWINGS

Fig. 1 is a schematic configuration view of a production system creating system shown as one example;
Fig. 2 is a view showing one example of a plurality of production factors of various types stored in a factor-type database;
Fig. 3 is a view showing one example of a plurality of production factors of various types stored in a factor-type database;
Fig. 4 is a view showing one example of two-term relationships and three-term relationships between and among the production factors stored in a relational database;
Fig. 5 is a view showing one example of two-term relationships and three-term relationships between and among the production factors stored in a relational database;
Fig. 6 is a view showing one example of two-term relationships and three-term relationships between and among the production factors stored in a relational database;
Fig. 7 is a view for explaining one example of relation integration performed by a computer;
Fig. 8 is a view showing departmental production systems outputted for every department;
Fig. 9 is a view showing a list of a start date and an end date of each of the production factors;
Fig. 10 is an explanatory view of production system creation on February 15;
Fig. 11 is an explanatory view of production system creation on May 31;
Fig. 12 is a view showing another example of a plurality of production factors of various types stored in the factor-type database;
Fig. 13 is a view showing another example of a plurality of production factors of various types stored in the factor-type database;
Fig. 14 is a view showing another example of the two-term relationships and the three-term relationships between and among the production factors stored in the relational database;
Fig. 15 is a view showing another example of the two-term relationships and the three-term relationships between and among the production factors stored in the relational database;
Fig. 16 is a view showing another example of the two-term relationships and the three-term relationships between and among the production factors stored in the relational database;
Fig. 17 is a view showing another example of the two-term relationships and the three-term relationships between and among the production factors stored in the relational database;
Fig. 18 is a view showing another example of the two-term relationships and the three-term relationships between and among the production factors stored in the relational database;
Fig. 19 is a view for explaining another example of the relation integration performed by the computer;
Fig. 20 is a view showing departmental production systems outputted for every department;
Fig. 21 is a view showing a list of a start date and an end date of each of the production factors;
Fig. 22 is an explanatory view of the production system creation on April 30;
Fig. 23 is a view showing another example of a plurality of production factors of various types stored in the factor-type database;
Fig. 24 is a view showing another example of a plurality of production factors of various types stored in the factor-type database;
Fig. 25 is a view showing another example of the two-term relationships and the three-term relationships between and among the production factors stored in the relational database;
Fig. 26 is a view showing another example of the two-term relationships and the three-term relationships between and among the production factors stored in the relational database;
Fig. 27 is a view showing another example of the two-term relationships and the three-term relationships between and among the production factors stored in the relational database;
Fig. 28 is a view showing another example of the two-term relationships and the three-term relationships between and among the production factors stored in the relational database;
Fig. 29 is a view for explaining another example of the relation integration performed by the computer;
Fig. 30 is a view showing departmental production systems outputted for every department;
Fig. 31 is a view showing a list of a start date and an end date of each of the production factors; and
Fig. 32 is an explanatory view of the production system creation on April 30.

### EXPLANATIONS OF LETTERS OR NUMERALS

- 10:: production system creating system
- 11:: computer
- 12:: design department
- 13:: manufacturing department
- 14:: purchasing department
- 15:: logistics department
- 16:: integrated management database
- 17:: factor-type database
- 18:: relational database
- 19:: item database (first type database)
- 20:: result database (second type database)
- 21:: process database (third factor-type database)
- 22:: resource database (fourth factor-type database)
- 23:: site database (fifth factor-type database)

### BEST MODE(S) FOR CARRYING OUT THE INVENTION

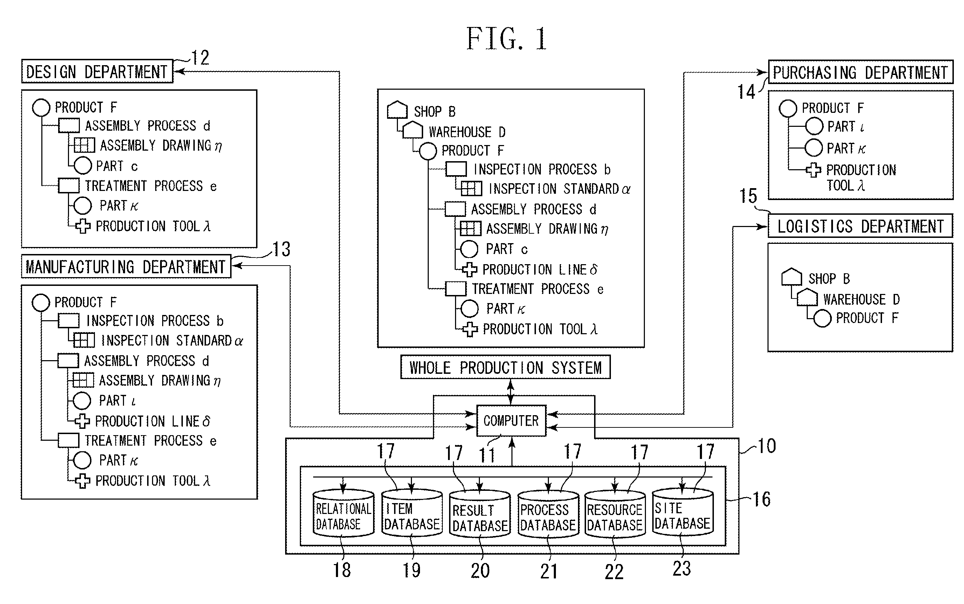

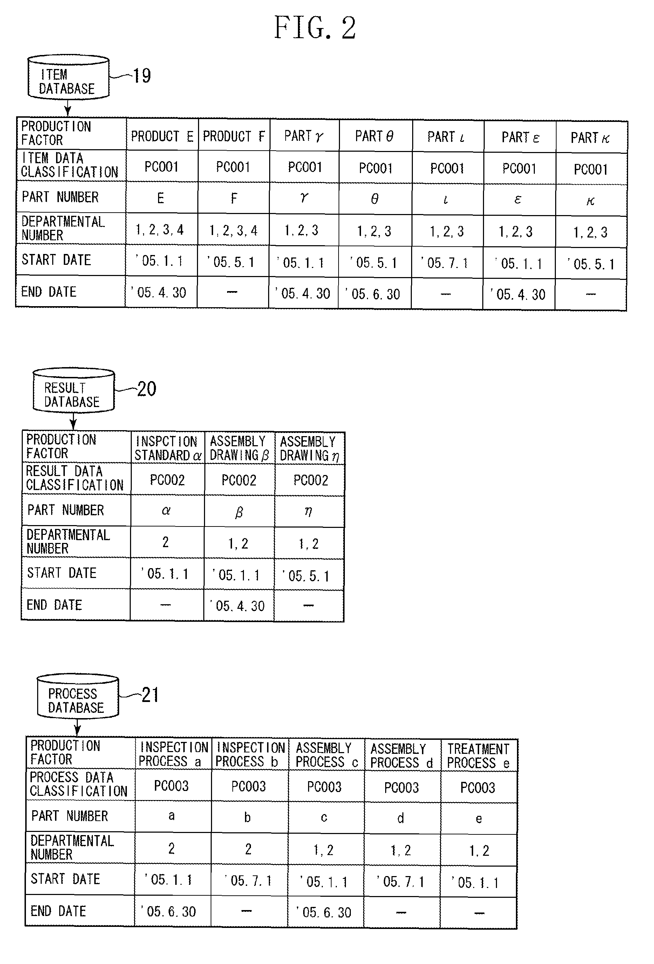

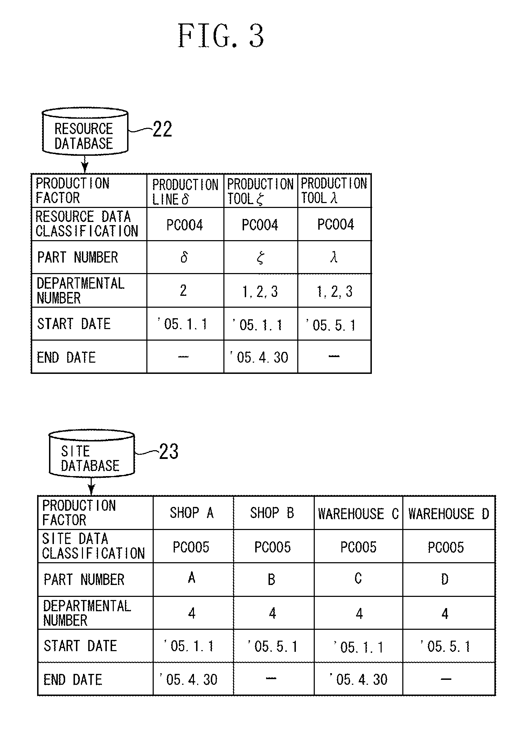

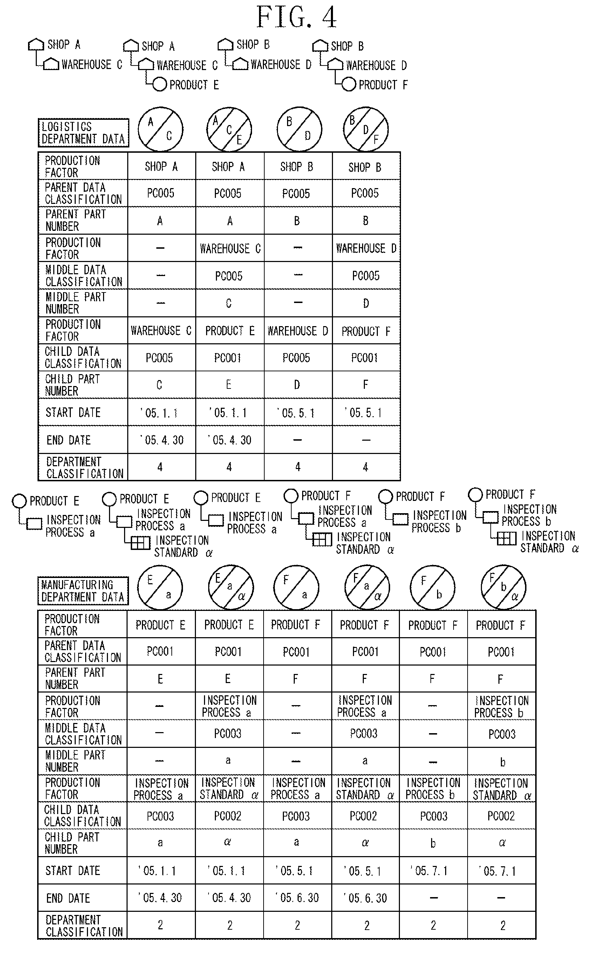

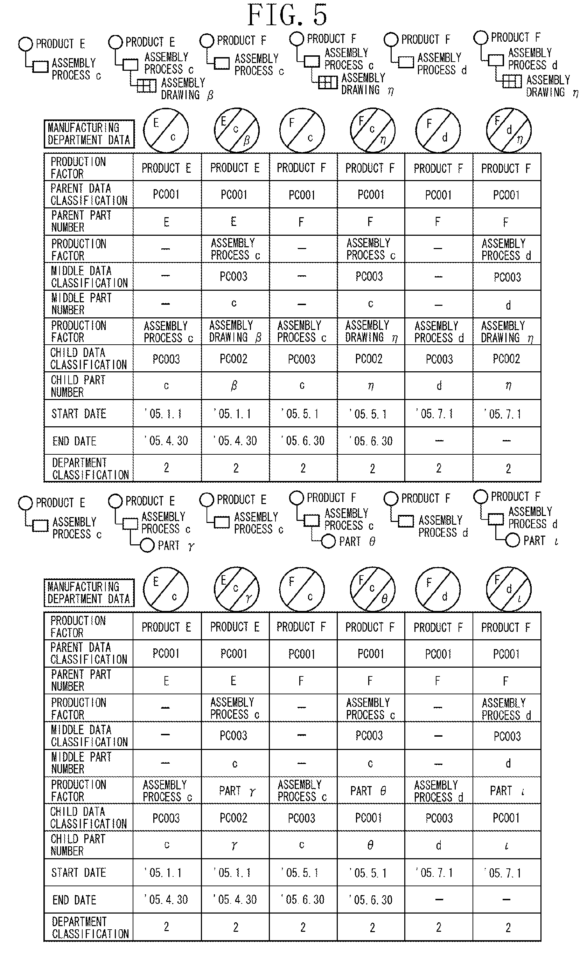

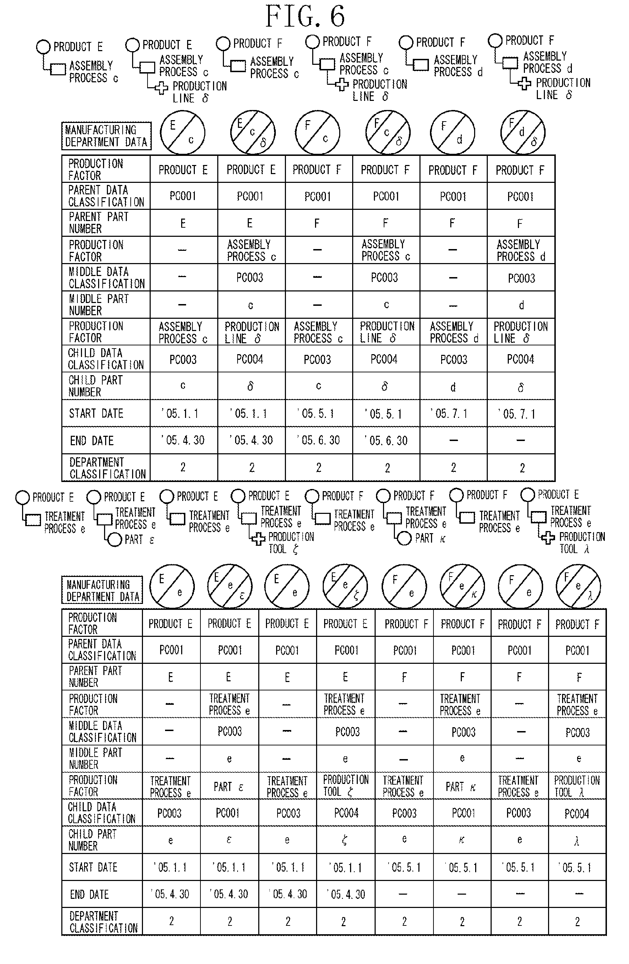

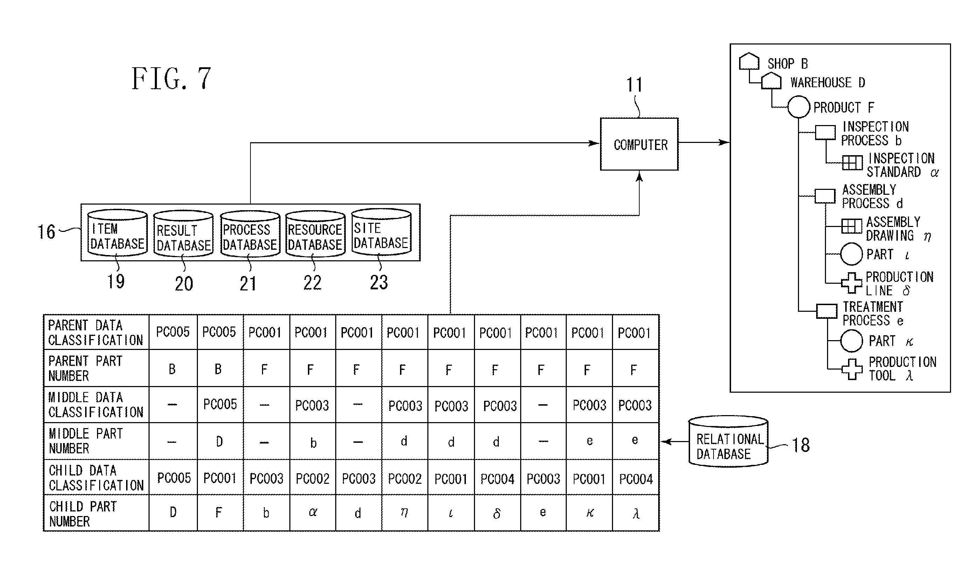

Referring to the appended drawings, details of a production system creating system and a production system creating method in accordance with the present invention will be described as follows. Fig. 1 is a schematic configuration view of a production system creating system 10 shown as one example, while Figs. 2 and 3 are views showing one example of a plurality of production factors of various types stored in a factor-type database 17. Fig. 4 through Fig. 6 are views showing one example of a two-term relationship and a three-term relationship between and among the production factors stored in a relational database 18, while Fig. 7 is a view for explaining one example of relation integration performed by a computer 11.

Fig. 1 illustrates a departmental production system formed only of production factors required for each of departments of a design department 12, a manufacturing department 13, a purchasing department 14, and a logistics department 15 as well as a created whole production system. Fig. 1 through Fig. 7 shall show a state on September 30, 2005, and sets the present to September 30, 2005. It is noted that the departments are not limited to those shown in the figure, but all the department classifications given by classifying the organizations of public offices, companies, and the like may be included. The production system creating system 10 is formed of the computer 11, and an integrated management database 16 for centrally controlling data, such as the production factors, the two-term relationship and the three-term relationship between and among the production factors, and the like. Although not shown, terminal devices (computers) connected to the computer 11 via interfaces (wire or wireless) are arranged in these departments 12, 13, 14, and 15.

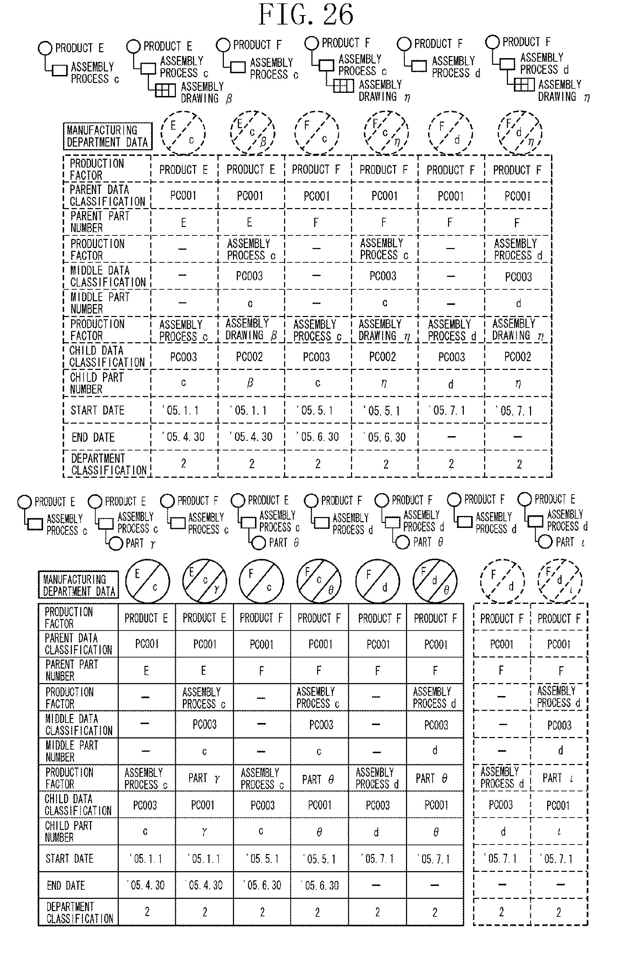

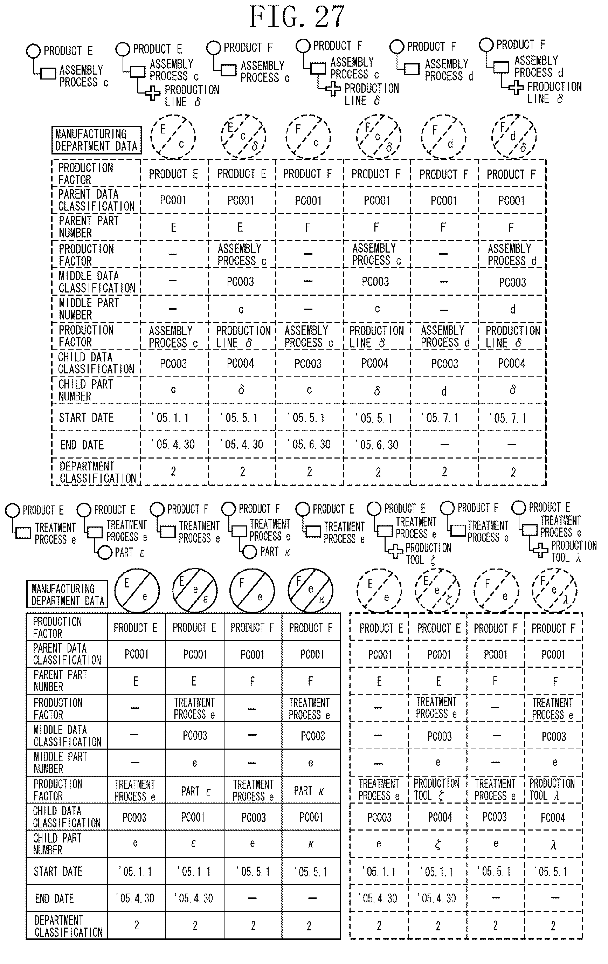

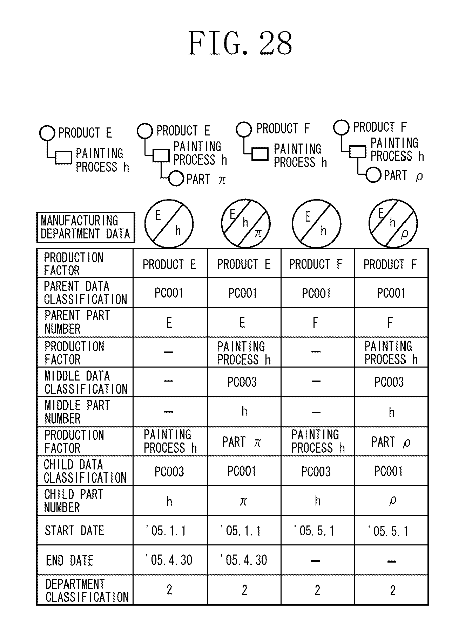

Here, the production factor means each piece of technical information (technical element) essential for manufacturing an article, and a shop, a warehouse, a product, an inspection process, an assembly process, a treatment process, a painting process, an inspection standard, an assembly drawing, parts, a production line, and a production tool are illustrated as the production factors in this embodiment (refer to Fig. 1 through Fig. 32). However, the production factors shown in the figures represent only one example, and the production factors are not limited thereto shown therein. The production factor includes all the production factors to be technical information of the article. The product and the part belong to an item (factor-type) which is a material factor of an article, the inspection standard and the assembly drawing belong to a result (factor-type) which is a design factor of the article, and the inspection process, the assembly process, the treatment process, and the painting process belong to a process (factor-type) which is a process factor of the article. The production line and the production tool belong to a resource (factor-type) which is a resource factor of the article, and the shop and the warehouse belong to a site (factor-type) which is a location factor. It is noted that not only a finished product but also a semifinished product are included in the article.

A factor-type number (first to n-th factor-type numbers) for specifying a type of the production factor corresponding to each factor-type is individually set to each of the production factors. The first factor-type number is set to each material factor belonging to the item, the second factor-type number is set to each design factor belonging to the result, and the third factor-type number is set to each process factor belonging to the process. The fourth factor-type number is set to each resource factor belonging to the resource, and the fifth factor-type number is set to the site factor belonging to the site. It is to be noted that the factor-type to which the production factor belongs is not limited to the item, the process, the result, the resource, and the site. The factor-type to which the production factor belongs includes all the other factor-types required to manufacture the article, and the sixth to n-th factor-type numbers for specifying it are set to the other factor-types. A departmental number (first to n-th departmental numbers) for sorting these factors by department is individually set to each of the production factors. In this embodiment, a departmental number of the design department 12 is set to No. 1, a departmental number of the manufacturing department 13 is set to No. 2, a departmental number of the purchasing department 14 is set to No. 3, and a departmental number of the logistics department 15 is set to No. 4.

The computer 11 has a central processing unit (CPU or MPU) and a storage unit, and incorporates a high-capacity hard disk therein. Although not shown, input devices such as a keyboard, a mouse, and the like, and output devices such as a display, a printer, and the like are connected to the computer 11 via the interface (wire or wireless). A production system creating program for executing each means of this system 10 is stored in an internal address file of the storage unit. The production system creating program is installed in the storage unit of the computer 11 from an optical disk (storage medium) that stores the program, such as a CD-ROM or the like. It is to be noted that a semiconductor memory and a magnetic disk other than the optical disk may also be used for the storage medium.

When the production system creating program is installed in the computer 11, not only a model of the factor-type of the item, the result, the process, the site, and the like, a model of a plurality of production factors of various types belonging to these factor-types, and a model of the factor-type number and the department corresponding to these factor-types, but also the departmental number for indicating each of the departments are stored in the storage unit of the computer 11 or the hard disk incorporated in the computer 11. Further, a database file used as the integrated management database 16 (later-described first to fifth factor-type databases 17 and relational database 18) is created in the hard disk incorporated in the computer 11. The computer 11 extracts required data from the storage unit or the integrated management database 16, and stores data in the storage unit or the integrated management database 16 as required. It is to be noted that a new factor-type, a new production factor, and a new department can be set freely other than the existing factor-type and production factor in this system 10, so that the production system may also be formed using these new production factors. The new factor-type, the new production factor, and the new department are inputted into the computer 11 from the input device, and are stored in the storage unit or the hard disk. In the system 10, the existing factor-type, production factor, and department may be deleted from the storage unit or the hard disk, and the new factor-type, new production factor, and new department, which are newly created may also be deleted from the storage unit or the hard disk.

The central processing unit of the computer 11 activates the production system creating program stored in the internal address file of the storage unit, and executes two-term relationship integrating means for integrating a plurality of two-term relationships of different types, three-term relationship integrating means for integrating a plurality of three-term relationships of different types, and two-term/three-term relationship integrating means for integrating a plurality of two-term relationships of different types and a plurality of three-term relationships of different types according to the program. The central processing unit executes production system creating means for creating the production system at an arbitrary point in time at present or in the past corresponding to each article in real time based on the integrated relation; production system storing means for storing the created production system in the storage unit or the hard disk; production system outputting means for outputting the created production system via the output device; and departmental production system outputting means for outputting the departmental production systems. Further, the central processing unit executes first alteration means for altering the production factor going back to the past; second alteration means for altering the two-term relationship and the three-term relationship going back to the past; first change means for changing a start date of the production factor (point in time when the production factors create the production system) and an end date of the production factor (point in time when the production factors separate from the production system) going back to the past; and second alteration means for changing a start date of the two-term relationship and the three-term relationship (point in time when the two-term relationship and the three-term relationship create the production system) and an end date of the two-term relationship and the three-term relationship (point in time when the two-term relationship and the three-term relationship separate from the production system) going back to the past. It is to be noted that input devices such as a keyboard, a mouse, and the like, and output devices such as a display, a printer, and the like are connected also to the terminal device arranged in each of the departments 12, 13, 14, and 15.

The integrated management database 16 is formed of the factor-type database 17 (first to n-th factor-type databases) that stores the data on each of the production factors, and the relational database 18 that stores the two-term relationships between the production factors. The integrated management database 16 transfers data to the computer 11 based on a data transfer instruction from the computer 11, and stores data based on a data storage instruction from the computer 11. In addition, data is altered based on a data alteration instruction from the computer 11. The factor-type database 17 is classified into an item database 19 (first factor-type database) corresponding to the first factor-type number; a result database 20 (second factor-type database) corresponding to the second factor-type number; a process database 21 (third factor-type database) corresponding to the third factor-type number; a resource database 22 (fourth factor-type database) corresponding to the fourth factor-type number; and a site database 23 (fifth factor-type database) corresponding to the fifth factor-type number. It is to be noted that the factor-type databases 17 are not limited to those described above, but sixth to n-th factor-type databases for classifying and storing other production factors essential for manufacturing the article for every factor-type may be set in the hard disk.

One example of a procedure for storing in the factor-type database 17 data on a plurality of production factors of various types which is technical information of an article (1), and one example of a procedure for storing in the relational database 18 the two-term relationship and the three-term relationship between and among the production factors will be described as follows. It is to be noted that data on a shop (A), a warehouse (C), a product (E), an inspection process (a), an assembly process (c), a treatment process (e), an inspection standard (α), an assembly drawing (β), a part (γ), a production line (δ), a part (ε), and a production tool (ζ) and the two-term relationship and the three-term relationship between and among them are data inputted on January 1, 2005.

When the item is selected from the factor-type displayed on the display, an item input area used as a production factor input area, a department classification input area corresponding to the item input area, a start date input area which is a point in time when the production factors create the production system, an end date input area which is a point in time when the production factors separate from the production system, and a production factor input area for end will be displayed on the display. The product (E), the part (γ), the part (ε), and their part numbers (E), (γ), (ε) (factor-type identification number) are inputted into the item input area via the input device, the department classification is inputted into the department classification input area, and the start date and the end date of the product (E), the part (γ), and the part (ε) are inputted into the start date input area and the end date input area, respectively. The computer 11 refers to the factor-type, the production factor, and the factor-type number stored in the storage unit or the hard disk to determine that the product (E), the part (γ), and the part (ε) belong to the item, gives an item data classification (PC001) (first factor-type number) to the product (E), the part (γ), and the part (ε), and gives the departmental numbers (1, 2, 3, 4) to the product (E), the part (γ), and the part (ε) based on the inputted department classification.

The computer 11 stores in the main file of the item database 19 the product data, such as the item data classification (PC001) and the departmental numbers (1, 2, 3, 4) of the product (E), a part number (E) for specifying the product (E), the start date of the product (E) (January 1, 2005), the end date (-) of the product (E), and the like, and stores in the main file of the item database 19 the part data, such as the item data classification (PC001) and the departmental numbers (1, 2, 3) of the part (γ), a part number (γ) for specifying the part (γ), the start date of the part (γ) (January 1, 2005), the end date (-) of the part (γ), and the like. The computer 11 stores in the main file of the item database 19 the part data, such as the item data classification (PC001) and the departmental numbers (1, 2, 3) of the part (ε), the part number (ε) for specifying the part (ε), the start date of the part (ε) (January 1, 2005), the end date (-) of the part (ε), and the like. The product data includes contents of the product (E) (product name, instruction for use, durable years, amount of money, delivery date, and the like), while the part data includes contents of the part (γ) and the part (ε) (part name, producing district, instruction for use, durable years, amount of money, delivery date, and the like).

When the result is selected from the factor-type displayed on the display, a result input area used as the production factor input area, a department classification input area corresponding to the result input area, a start date input area which is the point in time when the production factors create the production system, an end date input area which is the point in time when the production factors separate from the production system, and a production factor input area for end will be displayed on the display. The inspection standard (α), the assembly drawing (β), and their part numbers (α) and (β) (factor-type identification number) are inputted into the result input area via the input device, the department classification is inputted into the department classification input area, and the start date and the end date of the inspection standard (α) and the assembly drawing (β) are inputted into the start date input area and the end date input area, respectively.

The computer 11 refers to the factor-type, the production factor, and the factor-type number stored in the storage unit or the hard disk to determine that the inspection standard (α) and the assembly drawing (β) belong to the result, gives a result data classification (PC002) (second factor-type number) to the inspection standard (α) and the assembly drawing (β), and gives the departmental numbers (1, 2) to the inspection standard (α) and the assembly drawing (β) based on the inputted department classification. The computer 11 stores in the main file of the result database 20 the inspection standard data, such as the result data classification (PC002) and the departmental number (2) of the inspection standard (α), the part number (α) for specifying the inspection standard (α), the start date of the inspection standard (α) (January 1, 2005), the end date (-) of the inspection standard (α), and the like, and stores in the result database 20 the assembly drawing data, such as the result data classification (PC002) and the departmental numbers (1, 2) of the assembly drawing (β), a part number (β) for specifying the assembly drawing (β), the start date of the assembly drawing (β) (January 1, 2005), the end date (-) of the assembly drawing (β), and the like. The inspection standard data includes contents of the inspection standard (α) (details of the standard, creating department, inspection illustration, and the like), while the assembly drawing data includes contents of the assembly drawing (P) (details of the drawing, creating department, instruction for use, and the like).

When the process is selected from the factor-type displayed on the display, a process input area used as the production factor input area, a department classification input area corresponding to the process input area, a start date input area which is the point in time when the production factors create the production system, an end date input area which is the point in time when the production factors separate from the production system, and a production factor input area for end will be displayed on the display. The inspection process (a), the assembly process (c), the treatment process (e), and their part numbers (a), (c), and (e) (factor-type identification number) are inputted into the process input area via the input device, the department classification is inputted into the department classification input area, and the start date and the end date of the inspection process (a), the assembly process (c), and the treatment process (e) are inputted into the start date input area and the end date input area, respectively.

The computer 11 refers to the factor-type, the production factor, and the factor-type number stored in the storage unit or the hard disk to determine that the inspection process (a), the assembly process (c), and the treatment process (e) belong to the process, gives a process data classification (PC003) (third factor-type number) to the inspection process (a), the assembly process (c), and the treatment process (e), and gives the departmental numbers (1, 2) to the inspection process (a), the assembly process (c), and the treatment process (e) based on the inputted department classification. The computer 11 stores in the process database 21 the inspection process data, such as the process data classification (PC003) and the departmental number (2) of the inspection process (a), the part number (a) for specifying the inspection process (a), the start date of the inspection process (a) (January 1, 2005), the end date (-) of the inspection process (a), and the like, and stores in the process database 21 the assembly process data, such as the process data classification (PC003) and the departmental numbers (1, 2) of the assembly process (c), a part number (c) for specifying the assembly process (c), the start date of the assembly process (c) (January 1, 2005), the end date (-) of the assembly process (c), and the like. The computer 11 stores in the process database 21 the treatment process data, such as the process data classification (PC003) and the departmental numbers (1, 2) of the treatment process (e), a part number (e) for specifying the treatment process (e), the start date of the treatment process (e) (January 1, 2005), the end date (-) of the treatment process (e), and the like. The inspection process data includes contents of the inspection process (a) (details of the inspection process, inspection location, instruction for use, and the like), while the assembly process data includes contents of the assembly process (c) (details of the assembly process, assembly location, instruction for use, and the like). The treatment process data includes contents of the treatment process (e) (details of the treatment process, treatment location, instruction for use, and the like).

When the resource is selected from the factor-type displayed on the display, a resource input area used as the production factor input area, a department classification input area corresponding to the resource input area, a start date input area which is the point in time when the production factors create the production system, an end date input area which is the point in time when the production factors separate from the production system, and a production factor input area for end will be displayed on the display. The production line (δ), the production tool (ζ), and their part numbers (δ) and (ζ) (factor-type identification number) are inputted into the resource input area via the input device, the department classification is inputted into the department classification input area, and the start date and the end date of the production line (δ) and the production tool (ζ) are inputted into the start date input area and the end date input area, respectively.

The computer 11 refers to the factor-type, the production factor, and the factor-type number stored in the storage unit or the hard disk to determine that the production line (δ) and the production tool (ζ) belong to the resource, gives a resource data classification (PC004) (fourth factor-type number) to the production line (δ) and the production tool (ζ), and gives the departmental numbers (1, 2, 3) to the production line (δ) and the production tool (ζ) based on the inputted department classification. The computer 11 stores in the resource database 22 the production line data, such as the resource data classification (PC004) and the departmental number (2) of the production line (δ), a part number (δ) for specifying the production line (δ), the start date of the production line (δ) (January 1, 2005), the end date (-) of the production line (δ), and the like, and stores in the resource database 22 the production tool data, such as the resource data classification (PC004) and the departmental numbers (1, 2, 3) of the production tool (ζ), a part number (ζ) for specifying the production tool (ζ), the start date of the production tool (ζ) (January 1, 2005), the end date (-) of the production tool (ζ), and the like. The production line data includes contents of the production line (δ) (name of the production line, location of the production line, and the like), while the production tool data includes contents of the production tool (ζ) (application of the production tool, price, durable years, and the like).

When the site is selected from the factor-type displayed on the display, a site input area used as the production factor input area, a department classification input area corresponding to the site input area, a start date input area which is the point in time when the production factors create the production system, an end date input area which is the point in time when the production factors separate from the production system, and a production factor input area for end will be displayed on the display. The shop (A), the warehouses (C) and their part numbers (A) and (C) (factor-type identification number) are inputted into the site input area via the input device, the department classification is inputted into the department classification input area, and the start date and the end date of the shop (A) and the warehouse (C) are inputted into the start date input area and the end date input area, respectively.

The computer 11 refers to the factor-type, the production factor, and the factor-type number stored in the storage unit or the hard disk to determine that the shop (A) and the warehouse (C) belong to the site, gives a site data classification (PC005) (fifth factor-type number) to the shop (A) and the warehouse (C), and gives the departmental number (4) to the shop (A) and the warehouse (C) based on the inputted department classification. The computer 11 stores in the site database 23 the shop data, such as the site data classification (PC005) and the departmental number (4) of the shop (A), a part number (A) for specifying the shop (A), the start date of the shop (A) (January 1, 2005), the end date (-) of the shop (A), and the like, and stores in the site database 23 the warehouse data, such as the site data classification (PC005) and the departmental number (4) of the warehouse (C), a part number (C) for specifying the warehouse (C), the start date of the warehouse (C) (January 1, 2005), the end date (-) of the warehouse (C), and the like. The shop data includes contents of the shop (A) (name of the shop, location of the shop, and the like), while the warehouse data includes contents of the warehouse (C) (warehouse name, warehouse location, and the like). As of January 1, 2005, the shop (A), the warehouse (C), the product (E), the inspection process (a), the assembly process (c), the treatment process (e), the inspection standard (α), the assembly drawing (β), the part (γ), the production line (δ), the part (ε), and the production tool (ζ) serve as creation factors of the production system, so that the end dates thereof will result in blanks (-).

The upper/lower two-term relationship (child-parent relationship) and the upper/lower three-term relationship (parent-middle-child relationship) as manufacturing department data, and the upper/lower two-term relationship (child-parent relationship) and the upper/lower three-term relationship (parent-middle-child relationship) as logistics department data are stored in the relational database 18. In the two-term relationship, the production factors are linked with an arbitrary first production factor (parent production factor) and a second production factor (child production factor) lying just below the first production factor. Based on the two-term relationship, the second production factor is specified from the first production factor, and conversely, the first production factor is specified from the second production factor. In the three-term relationship, the production factors are linked with an arbitrary first production factor (parent production factor), a second production factor (middle production factor) lying just below the first production factor, and a third production factor (child production factor) lying just below the second production factor. Based on the three-term relationship, the second production factor is specified from the first production factor, and the third production factor is specified from the first and second factors of production. Here, when the three-term relationship is converted into the two-term relationship, the second production factor (middle production factor) of the three-term relationship will be the second production factor (child production factor) of the two-term relationship. In other words, the child production factor of the two-term relationship will be the middle production factor of the three-term relationship.

On January 1, 2005, a two-term relationship between the shop (A) and the warehouse (C), a three-term relationship among the shop (A), the warehouse (C), and the product (E), a two-term relationship between the product (E) and the inspection process (a), a three-term relationship among the product (E), the inspection process (a), and the inspection standard (α). a two-term relationship between the product (E) and the assembly process (c), a three-term relationship among the product (E), the assembly process (c), and the assembly drawing (β), a three-term relationship among the product (E), the assembly process (c), and the part (γ), a three-term relationship among the product (E), the assembly process (c), and the production line (δ), a two-term relationship between the product (E) and the treatment process (e), a three-term relationship among the product (E), the treatment process (e), and the part (ε), a three-term relationship among the product (E), the treatment process (e), and the production tool (ζ) are stored.

When the relation is selected from the items displayed on the display, a two-term relationship input area (1) to a two-term relationship input area (n) and a three-term relationship input area (1) to a three-term relationship input area (n) will be displayed on the display. The shop (A) and the warehouse (C) are inputted into the two-term relationship input area (1) via the input device, and a department classification (4) is inputted into the department classification input area corresponding to the two-term relationship input area (1). Next, the part number (A) for specifying the shop (A) as a parent part number (first production factor), a site number (PC005) (fifth factor-type number) as a parent data classification, the part number (C) for specifying the warehouse (C) as a child part number (second production factor), and the site number (PC005) (fifth factor-type number) as a child data classification are inputted. Further, the start date (January 1, 2005) and the end date (-) of the two-term relationship between the shop (A) and the warehouse (C) are inputted into a relation start date input area and a relation end date input area corresponding to the two-term relationship input area (1), respectively.

The shop (A), the warehouse (C), and the product (E) are inputted into the three-term relationship input area (1) displayed on the display via the input device, and the department classification (4) is inputted into the department classification input area corresponding to the three-term relationship input area (1). Next, the part number (A) for specifying the shop (A) as the parent part number (first production factor), the site number (PC005) (fifth factor-type number) as the parent data classification, the part number (C) for specifying the warehouse (C) as a middle part number (second production factor), the site number (PC005) (fifth factor-type number) as a middle data classification, the part number (E) for specifying the product (E) as the child part number (third production factor), and an item number (PC001) (first factor-type number) as the child data classification are inputted. Further, the start date (January 1, 2005) and the end date (-) of the three-term relationship among the shop (A), the warehouse (C), and the product (E) are inputted into the relation start date input area and the relation end date input area corresponding to the three-term relationship input area (1), respectively. Once these data are inputted, the computer 11 stores these data in the main file of the relational database 18. In the relational database 18, the shop (A) and the warehouse (C) are connected to each other, and the shop (A) and the warehouse (C) are linked with each other based on the two-term relationship; and the shop (A), the warehouse (C), and the product (E) are connected to each other, and the shop (A), the warehouse (C), and the product (E) are linked with each other based on the three-term relationship.

Here, the relation between the two-term relationship and the three-term relationship will be described using the two-term relationship between the shop (A) and the warehouse (C), and the three-term relationship among the shop (A), the warehouse (C), and the product (E) as an example as follows. The warehouse (C) which is the second production factor (child production factor) in the two-term relationship between the shop (A) and the warehouse (C) serves as the second production factor (middle production factor) in the three-term relationship among the shop (A), the warehouse (C), and the product (E). As a result, not only the connection between the shop (A) and the warehouse (C) but also the connection between the warehouse (C) and the product (E) are determined, and the product (E) is fixed based on the shop (A) and the warehouse (C). For that reason, in the two-term relationship between the shop (A) and the warehouse (C) and the three-term relationship among the shop (A), the warehouse (C), and the product (E), combinations of the production factors other than the product (E) are excluded (refer to Fig. 4). It is to be noted that, similarly in the following two-term relationship and the three-term relationship, the connection of the production factors is determined by the two-term relationship and the three-term relationship relating to each other.

The product (E) and the inspection process (a) are inputted into the two-term relationship input area (2) via the input device, and a department classification (2) is inputted into the department classification input area corresponding to the two-term relationship input area (2). Next, the part number (E) for specifying the product (E) as the parent part number (first production factor), the item number (PC001) (first factor-type number) as the parent data classification, the part number (a) for specifying the inspection process (a) as the child part number (second production factor), and a process number (PC003) (third factor-type number) as the child data classification are inputted. Further, the start date (January 1, 2005) and the end date (-) of the two-term relationship between the product (E) and the inspection process (a) are inputted into the relation start date input area and the relation end date input area corresponding to the two-term relationship input area (2), respectively.

The product (E), the inspection process (a), and the inspection standard (α) are inputted into the three-term relationship input area (2) displayed on the display via the input device, and the department classification (2) is inputted into the department classification input area corresponding to the three-term relationship input area (2). Next, the part number (E) for specifying the product (E) as the parent part number (first production factor), the item number (PC001) (first factor-type number) as the parent data classification, the part number (a) for specifying the inspection process (a) as the middle part number (second production factor), the process number (PC003) (third factor-type number) as the middle data classification, the part number (α) for specifying the inspection standard (α) as the child part number(third production factor), and a result number (PC002) (second factor-type number) as the child data classification are inputted. Further, the start date (January 1, 2005) and the end date (-) of the three-term relationship among the product (E), the inspection process (a), and the inspection standard (α) are inputted into the relation start date input area and the relation end date input area corresponding to the three-term relationship input area (2), respectively. Once these data are inputted, the computer 11 stores these data in the main file of the relational database 18. In the relational database 18, the product (E) and the inspection process (a) are connected to each other, and the product (E) and the inspection process (a) are linked with each other based on the two-term relationship; and the product (E), the inspection process (a), and the inspection standard (α) are connected to each other, and the product (E), the inspection process (a), and the inspection standard (α) are linked with each other based on the three-term relationship.

The product (E) and the assembly process (c) are inputted into the two-term relationship input area (3) via the input device, and the department classification (2) is inputted into the department classification input area corresponding to the two-term relationship input area (3). Next, the part number (E) for specifying the product (E) as the parent part number (first production factor), the item number (PC001) (first factor-type number) as the parent data classification, the part number (c) for specifying the assembly process (c) as the child part number (second production factor), and the process number (PC003) (third factor-type number) as the child data classification are inputted. Further, the start date (January 1, 2005) and the end date (-) of the two-term relationship between the product (E) and the assembly process (c) are inputted into the relation start date input area and the relation end date input area corresponding to the two-term relationship input area (3), respectively.

The product (E), the assembly process (c), and the assembly drawing (β) are inputted into the three-term relationship input area (3) displayed on the display via the input device, and the department classification (2) is inputted into the department classification input area corresponding to the three-term relationship input area (3). Next, the part number (E) for specifying the product (E) as the parent part number (first production factor), the item number (PC001) (first factor-type number) as the parent data classification, the part number (c) for specifying the assembly process (c) as the middle part number (second production factor), the process number (PC003) (third factor-type number) as the middle data classification, the part number (β) for specifying the assembly drawing (β) as the child part number (third production factor), and the result number (PC002) (second factor-type number) as the child data classification are inputted. Further, the start date (January 1, 2005) and the end date (-) of the three-term relationship among the product (E), the assembly process (c), and the assembly drawing (β) are inputted into the relation start date input area and the relation end date input area corresponding to the three-term relationship input area (3), respectively. Once these data are inputted, the computer 11 stores these data in the main file of the relational database 18. In the relational database 18, the product (E) and the assembly process (c) are connected to each other, and the product (E) and the assembly process (c) are linked with each other based on the two-term relationship; and the product (E), the assembly process (c), and the assembly drawing (β) are connected to each other, and the product (E), the assembly process (c), and the assembly drawing (β) are linked with each other based on the three-term relationship.

The product (E) and the assembly process (c) are inputted into the two-term relationship input area (4) via the input device, and the department classification (2) is inputted into the department classification input area corresponding to the two-term relationship input area (4). Next, the part number (E) for specifying the product (E) as the parent part number (first production factor), the item number (PC001) (first factor-type number) as the parent data classification, the part number (c) for specifying the assembly process (c) as the child part number (second production factor), and the process number (PC003) (third factor-type number) as the child data classification are inputted. Further, the start date (January 1, 2005) and the end date (-) of the two-term relationship between the product (E) and the assembly process (c) are inputted into the relation start date input area and the relation end date input area corresponding to the two-term relationship input area (4), respectively.

The product (E), the assembly process (c), and the part (γ) are inputted into the three-term relationship input area (4) displayed on the display via the input device, and the department classification (2) is inputted into the department classification input area corresponding to the three-term relationship input area (4). Next, the part number (E) for specifying the product (E) as the parent part number (first production factor), the item number (PC001) (first factor-type number) as the parent data classification, the part number (c) for specifying the assembly process (c) as the middle part number (second production factor), the process number (PC003) (third factor-type number) as the middle data classification, the part number (γ) for specifying the part (γ) as the child part number (third production factor), and the item number (PC001) (first factor-type number) as the child data classification are inputted. Further, the start date (January 1, 2005) and the end date (-) of the three-term relationship among the product (E), the assembly process (c), and the part (γ) are inputted into the relation start date input area and the relation end date input area corresponding to the three-term relationship input area (4), respectively. Once these data are inputted, the computer 11 stores these data in the main file of the relational database 18. In the relational database 18, the product (E) and the assembly process (c) are connected to each other, and the product (E) and the assembly process (c) are linked with each other based on the two-term relationship; and the product (E), the assembly process (c), and the part (γ) are connected to each other, and the product (E), the assembly process (c), and the part (γ) are linked with each other based on the three-term relationship.

The product (E) and the assembly process (c) are inputted into the two-term relationship input area (5) via the input device, and the department classification (2) is inputted into the department classification input area corresponding to the two-term relationship input area (5). Next, the part number (E) for specifying the product (E) as the parent part number (first production factor), the item number (PC001) (first factor-type number) as the parent data classification, the part number (c) for specifying the assembly process (c) as the child part number (second production factor), and the process number (PC003) (third factor-type number) as the child data classification are inputted. Further, the start date (January 1, 2005) and the end date (-) of the two-term relationship between the product (E) and the assembly process (c) are inputted into the relation start date input area and the relation end date input area corresponding to the two-term relationship input area (4), respectively.

The product (E), the assembly process (c), and the production line (δ) are inputted into the three-term relationship input area (5) displayed on the display via the input device, and the department classification (2) is inputted into the department classification input area corresponding to the three-term relationship input area (5). Next, the part number (E) for specifying the product (E) as the parent part number (first production factor), the item number (PC001) (first factor-type number) as the parent data classification, the part number (c) for specifying the assembly process (c) as the middle part number (second production factor), the process number (PC003) (third factor-type number) as the middle data classification, the part number (δ) for specifying the production line (δ) as the child part number (third production factor), and a resource number (PC004) (fourth factor-type number) as the child data classification are inputted. Further, the start date (January 1, 2005) and the end date (-) of the three-term relationship among the product (E), the assembly process (c), and the production line (δ) are inputted into the relation start date input area and the relation end date input area corresponding to the three-term relationship input area (5), respectively. Once these data are inputted, the computer 11 stores these data in the main file of the relational database 18. In the relational database 18, the product (E) and the assembly process (c) are connected to each other, and the product (E) and the assembly process (c) are linked with each other based on the two-term relationship; and the product (E), the assembly process (c), and the production line (δ) are connected to each other, and the product (E), the assembly process (c), and the production line (δ) are linked with each other based on the three-term relationship.

The product (E) and the treatment process (e) are inputted into the two-term relationship input area (6) via the input device, and the department classification (2) is inputted into the department classification input area corresponding to the two-term relationship input area (6). Next, the part number (E) for specifying the product (E) as the parent part number (first production factor), the item number (PC001) (first factor-type number) as the parent data classification, the part number (e) for specifying the treatment process (e) as the child part number (second production factor), and the process number (PC003) (third factor-type number) as the child data classification are inputted. Further, the start date (January 1, 2005) and the end date (-) of the two-term relationship between the product (E) and the treatment process (e) are inputted into the relation start date input area and the relation end date input area corresponding to the two-term relationship input area (6), respectively.

The product (E), the treatment process (e), and the part (ε) are inputted into the three-term relationship input area (6) displayed on the display via the input device, and the department classification (2) is inputted into the department classification input area corresponding to the three-term relationship input area (6). Next, the part number (E) for specifying the product (E) as the parent part number (first production factor), the item number (PC001) (first factor-type number) as the parent data classification, the part number (e) for specifying the treatment process (e) as the middle part number (second production factor), the process number (PC003) (third factor-type number) as the middle data classification, the part number (ε) for specifying the part (ε) as the child part number (third production factor), and the item number (PC001) (first factor-type number) as the child data classification are inputted. Further, the start date (January 1, 2005) and the end date (-) of a three-term relationship among the product (E), the treatment process (e), and the part (ε) are inputted into the relation start date input area and the relation end date input area corresponding to the three-term relationship input area (6), respectively. Once these data are inputted, the computer 11 stores these data in the main file of the relational database 18. In the relational database 18, the product (E) and the treatment process (e) are connected to each other, and the product (E) and the treatment process (e) are linked with each other based on the two-term relationship; and the product (E), the treatment process (e), and the part (ε) are connected to each other, and the product (E), the treatment process (e), and the part (ε) are linked with each other based on the three-term relationship.

The product (E) and the treatment process (e) are inputted into the two-term relationship input area (7) via the input device, and the department classification (2) is inputted into the department classification input area corresponding to the two-term relationship input area (7). Next, the part number (E) for specifying the product (E) as the parent part number (first production factor), the item number (PC001) (first factor-type number) as the parent data classification, the part number (e) for specifying the treatment process (e) as the child part number (second production factor), and the process number (PC003) (third factor-type number) as the child data classification are inputted. Further, the start date (January 1, 2005) and the end date (-) of the two-term relationship between the product (E) and the treatment process (e) are inputted into the relation start date input area and the relation end date input area corresponding to the two-term relationship input area (7), respectively.

The product (E), the treatment process (e), and the production tool (ζ) are inputted into the three-term relationship input area (7) displayed on the display via the input device, and the department classification (2) is inputted into the department classification input area corresponding to the three-term relationship input area (7). Next, the part number (E) for specifying the product (E) as the parent part number (first production factor), the item number (PC001) (first factor-type number) as the parent data classification, the part number (e) for specifying the treatment process (e) as the middle part number (second production factor), the process number (PC003) (third factor-type number) as the middle data classification, the part number (ζ) for specifying the production tool (ζ) as the child part number (third production factor), and the resource number (PC004) (fourth factor-type number) as the child data classification are inputted. Further, the start date (January 1, 2005) and the end date (-) of the three-term relationship among the product (E), the treatment process (e), and the production tool (ζ) are inputted into the relation start date input area and the relation end date input area corresponding to the three-term relationship input area (7), respectively. Once these data are inputted, the computer 11 stores these data in the main file of the relational database 18. In the relational database 18, the product (E) and the treatment process (e) are connected to each other, and the product (E) and the treatment process (e) are linked with each other based on the two-term relationship; and the product (E), the treatment process (e), and the production tool (ζ) are connected to each other, and the product (E), the treatment process (e), and the production tool (ζ) are linked with each other based on the three-term relationship.

The two-term relationship between the shop (A) and the warehouse (C) and the three-term relationship among the shop (A), the warehouse (C), and the product (E) are treated as data of the logistics department 15 based on the department classification. The two-term relationship between the product (E) and the inspection process (a), the three-term relationship among the product (E), the inspection process (a), and the inspection standard (α), the two-term relationship between the product (E) and the assembly process (c), the three-term relationship among the product (E), the assembly process (c), and the assembly drawing (β), the three-term relationship among the product (E), the assembly process (c), and the part (γ), the three-term relationship among the product (E), the assembly process (c), and the production line (δ), the two-term relationship between the product (E) and the treatment process (e), the three-term relationship among the product (E), the treatment process (e), and the part (ε), and the three-term relationship among the product (E), the treatment process (e), and the production tool (ζ) are treated as data of the manufacturing department 13 based on the department classification.

As of January 1, 2005, the two-term relationship between the shop (A) and the warehouse (C), the three-term relationship among the shop (A), the warehouse (C), and the product (E), the two-term relationship between the product (E) and the inspection process (a), the three-term relationship among the product (E), the inspection process (a), and the inspection standard (α). the two-term relationship between the product (E) and the assembly process (c), the three-term relationship among the product (E), the assembly process (c), and the assembly drawing (β), the three-term relationship among the product (E), the assembly process (c), and the part (γ), the three-term relationship among the product (E), the assembly process (c), and the production line (δ), the two-term relationship between the product (E) and the treatment process (e), the three-term relationship among the product (E), the treatment process (e), and the part (ε), and the three-term relationship among the product (E), the treatment process (e), and the production tool (ζ) serve as the creation factors of the production system, so that the end dates of these the two-term relationships and the three-term relationships will result in a blank (-).

On May 1, 2005, the data on the shop (B), the warehouse (D), the product (F), the assembly drawing (η), the part (θ), the part (κ), and the production tool (λ) are stored in the factor-type database 17. Further, a two-term relationship between the shop (B) and the warehouse (D), a three-term relationship among the shop (B), the warehouse (D), and the product (F), a two-term relationship between the product (F) and the inspection process (a), a three-term relationship among the product (F), the inspection process (a), and the inspection standard (α), a two-term relationship between the product (F) and the assembly process (c), a three-term relationship among the product (F), the assembly process (c), and the assembly drawing (η), a three-term relationship among the product (F), the assembly process (c), and the part (θ), a three-term relationship among the product (F), the assembly process (c), and the production line (δ), a two-term relationship between the product (F) and the treatment process (e), a three-term relationship among the product (F), the treatment process (e), and the part (κ), and a three-term relationship among the product (F), the treatment process (e), and the production tool (λ) are stored in the relational database 18.

One example of the procedure of storing in the factor-type database 17 the data on each of the production factors on May 1, 2005 will be described as follows. The product (F), the part (θ), the part (κ), and their part numbers (F), (θ), and (κ)) (factor-type identification number) are inputted into the item input area displayed on the display via the input device, the department classification is inputted into the department classification input area, and the start date and the end date of the product (F), the part (θ), and the part (κ) are inputted into the start date input area and the end date input area, respectively. Further, the product (E), the part (γ), the part (ε), and the end dates thereof are inputted into the production factor input area for end displayed on the display. The computer 11 refers to the factor-type, the production factor, and the factor-type number stored in the storage unit or the hard disk to determine that the product (F), the part (θ), and the part (κ) belong to the item, gives the item data classification (PC001) (first factor-type number) to the product (F), the part (θ), and the part (κ), and gives the departmental numbers (1, 2, 3, 4) to the product (F), the part (θ), and the part (κ) based on the inputted department classification.

The computer 11 stores in the main file of the item database 19 the product data, such as the item data classification (PC001) and the departmental numbers (1, 2, 3, 4) of the product (F), the part number (F) for specifying the product (F), the start date of the product (F) (May 1, 2005), the end date (-) of the product (F), and the like; and the end date of the product (E) (April 30, 2005). The product data includes contents of the product (F) (product name, instruction for use, durable years, amount of money, delivery date, and the like). The computer 11 stores in the main file of the item database 19 the product data, such as the item data classification (PC001) and the departmental numbers (1, 2, 3) of the part (θ) and the part (κ), the part numbers (θ) and (κ) for specifying the part (θ) and the part (κ), the start date of the part (θ) and the part (κ) (May 1, 2005), the end date (-) of the part (θ) and the part (κ), and the like; and the end date of the part (γ) and the part (ε) (April 31, 2005). The part data includes contents of the part (θ) and the part (κ) (part name, producing district, instruction for use, durable years, amount of money, delivery date, and the like).

The assembly drawing (η) and its part number (η) (factor-type identification number) are inputted into the result input area displayed on the display via the input device, and the department classification is inputted into the department classification input area, and the start date and the end date of the assembly drawing (η) are inputted into the start date input area and the end date input area, respectively. Further, the assembly drawing (β) and its end date are inputted into the production factor input area for end displayed on the display. The computer 11 refers to the factor-type, the production factor, and the factor-type number stored in the storage unit or the hard disk to determine that the assembly drawing (η) belongs to the result, gives the result data classification (PC002) (second factor-type number) to the assembly drawing (η), and gives the departmental numbers (1, 2) to the assembly drawing (η) based on the inputted department classification. The computer 11 stores in the main file of the result database 20 the assembly drawing data, such as the result data classification (PC002) and the departmental numbers (1, 2) of the assembly drawing (η), the part number (η) for specifying the assembly drawing (η), the start date of the assembly drawing (η) (May 1, 2005), the end date (-) of the assembly drawing (η), and the like; and the end date of the assembly drawing (β) (April 30, 2005). The assembly drawing data includes contents of the assembly drawing (η) (details of the drawing, creating department, instruction for use, and the like).

The production tool (λ) and its part number (λ) (factor-type identification number) are inputted into the resource input area displayed on the display via the input device, and the department classification is inputted into the department classification input area, and the start date and the end date of the production tool (λ) are inputted into the start date input area and the end date input area, respectively. Further, the production tool (ζ) and its end date are inputted into the production factor input area for end displayed on the display. The computer 11 refers to the factor-type, the production factor, and the factor-type number stored in the storage unit or the hard disk to determine that the production tool (λ) belongs to the resource, gives the resource data classification (PC004) (fourth factor-type number) to the production tool (λ), and gives the departmental numbers (1, 2, 3) to the production tool (λ) based on the inputted department classification. The computer 11 stores in the main file of the resource data base 22 the production tool data, such as the resource data classification (PC004) and the departmental numbers (1, 2, 3) of the production tool (λ), the part number (λ) for specifying the production tool (λ), the start date of the production tool (λ) (May 1, 2005), the end date (-) of the production tool (λ), and the like; and the end date of the production tool (ζ) (April 30, 2005). The production tool data includes contents of the production tool (ζ) (application of the production tool, price, durable years, and the like).

The shop (B), the warehouses (D), and their part numbers (B) and (D) (factor-type identification number) are inputted into the site input area displayed on the display via the input device, the department classification is inputted into the department classification input area, and the start date and the end date of the shop (B) and the warehouse (D) are inputted into the start date input area and the end date input area, respectively. Further, the shop (A), the warehouses (C), and the end dates thereof are inputted into the production factor input area for end displayed on the display. The computer 11 refers to the factor-type, the production factor, and the factor-type number stored in the storage unit or the hard disk to determine that the shop (B) and the warehouse (D) belong to the site, gives the site data classification (PC005) (fifth factor-type number) to the shop (B) and the warehouse (D), and gives the departmental number (4) to the shop (B) and the warehouse (D) based on the inputted department classification.

The computer 11 stores in a main file of the site database 23 the shop data, such as the site data classification (PC005) and the departmental number (4) of the shop (B), a part number (B) for specifying the shop (B), the start date of the shop (B) (May 1, 2005), the end date (-) of the shop (B), and the like; and the end date of the shop (A) (April 30, 2005). The shop data includes contents of the shop (B) (name of the shop, location of the shop, and the like). The computer 11 stores in the main file of the site database 23 the warehouse data, such as the site data classification (PC005) and the departmental number (4) of the warehouse (D), a part number (D) for specifying the warehouse (D), the start date of the warehouse (D) (May 1, 2005), the end date (-) of the warehouse (D), and the like; and the end date of the warehouse (C) (April 30, 2005). The warehouse data includes contents of the warehouse (D) (warehouse name, warehouse location, and the like).

As of May 1, 2005, the shop (B), the warehouse (D), the product (F), the assembly drawing (η), the part (θ), the part (κ), and the production tool (λ) serve as the creation factors of the production system, so that the end dates thereof will result in blanks (-). The shop (A), the warehouse (c), the product (E), the assembly drawing (β), the part (γ), the part (ε), and the production tool (ζ) are separated from the creation factors of the production system on April 30, 2005 based on the setting of the end date (separation).

An example of the procedure of storing in the relational database 18 the two-term relationship and the three-term relationship between and among the production factors on May 1, 2005 will be described as follows. The shop (B) and the warehouse (D) are inputted into the two-term relationship input area (8) via the input device, and the department classification (4) is inputted into the department classification input area corresponding to the two-term relationship input area (8). Next, the part number (B) for specifying the shop (B) as the parent part number (first production factor), the site number (PC005) (fifth factor-type number) as the parent data classification, the part number (D) for specifying the warehouse (D) as the child part number (second production factor), and the site number (PC005) (fifth factor-type number) as the child data classification are inputted. The start date (May 1, 2005) and the end date (-) of the two-term relationship between the shop (B) and the warehouse (D) are inputted into the relation start date input area and the relation end date input area corresponding to the two-term relationship input area (8), respectively. Further, the two-term relationship between the shop (A) and the warehouse (C), and its end date (April 30, 2005) are inputted into a two-term relationship input area for end corresponding to the two-term relationship input area (8).

The shop (B), the warehouse (D), and the product (F) are inputted into the three-term relationship input area (8) displayed on the display via the input device, and the department classification (4) is inputted into the department classification input area corresponding to the three-term relationship input area (8). Next, the part number (B) for specifying the shop (B) as the parent part number (first production factor), the site number (PC005) (fifth factor-type number) as the parent data classification, the part number (D) for specifying the warehouse (D) as the middle part number (second production factor), the site number (PC005) (fifth factor-type number) as the middle data classification, the part number (F) for specifying the product (F) as the child part number (third production factor), and the item number (PC001) (first factor-type number) as the child data classification are inputted. The start date (January 1, 2005) and the end date (-) of the three-term relationship among the shop (B), the warehouse (D), and the product (E) are inputted into the relation start date input area and the relation end date input area corresponding to the three-term relationship input area (8), respectively. Further, the three-term relationship among the shop (A), the warehouse (C), and the product (E), and its end date (April 30, 2005) are inputted into a three-term relationship input area for end corresponding to the three-term relationship input area (8).

Once these data are inputted, the computer 11 stores these data in the main file of the relational database 18. In the relational database 18, the shop (B) and the warehouse (D) are connected to each other, and the shop (B) and the warehouse (D) are linked with each other based on the two-term relationship; and the shop (B), the warehouse (D), and the product (F) are connected to each other, and the shop (B), the warehouse (D), and the product (F) are linked with each other based on the three-term relationship. The three-term relationship among the shop (A), the warehouse (C), and the product (E) is separated from the creation factors of the production system on April 30, 2005 based on the setting of the end date (separation). In addition, the two-term relationship between the shop (A) and the warehouse (C) serving as a basis of the three-term relationship among the shop (A), the warehouse (C), and the product (E) is also separated from the creation factors of the production system on April 30, 2005 by the setting of the end date (separation).

The product (F) and the inspection process (a) are inputted into the two-term relationship input area (9) via the input device, and the department classification (2) is inputted into the department classification input area corresponding to the two-term relationship input area (9). Next, the part number (F) for specifying the product (F) as the parent part number (first production factor), the item number (PC001) (first factor-type number) as the parent data classification, the part number (a) for specifying the inspection process (a) as the child part number (second production factor), and the process number (PC003) (third factor-type number) as the child data classification are inputted. The start date (May 1, 2005) and the end date (-) of the two-term relationship between the product (F) and the inspection process (a) are inputted into the relation start date input area and the relation end date input area corresponding to the two-term relationship input area (9), respectively. Further, the two-term relationship between the product (E) and the inspection process (a), and its end date (April 30, 2005) are inputted into the two-term relationship input area for end corresponding to the two-term relationship input area (9).

The product (F), the inspection process (a), and the inspection standard (α) are inputted into the three-term relationship input area (9) displayed on the display via the input device, and the department classification (2) is inputted into the department classification input area corresponding to the three-term relationship input area (9). Next, the part number (F) for specifying the product (F) as the parent part number (first production factor), the item number (PC001) (first factor-type number) as the parent data classification, the part number (a) for specifying the inspection process (a) as the middle part number (second production factor), the process number (PC003) (third factor-type number) as the middle data classification, the part number (α) for specifying the inspection standard (α) as the child part number(third production factor), and the result number (PC002) (second factor-type number) as the child data classification are inputted. The start date (May 1, 2005) and the end date (-) of the three-term relationship among the product (F), the inspection process (a), and the inspection standard (α) are inputted into the relation start date input area and the relation end date input area corresponding to the three-term relationship input area (9), respectively. Further, the three-term relationship among the product (E), the inspection process (a), and the inspection standard (α), and its end date (April 30, 2005) are inputted into the three-term relationship input area for end corresponding to the three-term relationship input area (9).

Once these data are inputted, the computer 11 stores these data in the main file of the relational database 18. In the relational database 18, the product (F) and the inspection process (a) are connected to each other, and the product (F) and the inspection process (a) are linked with each other based on the two-term relationship; and the product (F), the inspection process (a), and the inspection standard (α) are connected to each other, and the product (F), the inspection process (a), and the inspection standard (α) are linked with each other based on the three-term relationship. The three-term relationship among the product (E), the inspection process (a), and the inspection standard (α) is separated from the creation factors of the production system on April 30, 2005 based on the setting of the end date (separation). In addition, the two-term relationship between the product (E) and the inspection process (a) serving as a basis of the three-term relationship among the product (E), the inspection process (a), and the inspection standard (α) is also separated from the creation factors of the production system on April 30, 2005 by the setting of the end date (separation).

The product (F) and the assembly process (c) are inputted into the two-term relationship input area (10) via the input device, and the department classification (2) is inputted into the department classification input area corresponding to the two-term relationship input area (10). Next, the part number (F) for specifying the product (F) as the parent part number (first production factor), the item number (PC001) (first factor-type number) as the parent data classification, the part number (c) for specifying the assembly process (c) as the child part number (second production factor), and the process number (PC003) (third factor-type number) as the child data classification are inputted. The start date (May 1, 2005) and the end date (-) of the two-term relationship between the product (F) and the assembly process (c) are inputted into the relation start date input area and the relation end date input area corresponding to the two-term relationship input area (10), respectively. Further, the two-term relationship between the product (E) and the assembly process (c), and its end date (April 30, 2005) are inputted into the two-term relationship input area for end corresponding to the two-term relationship input area (10).

The product (F), the assembly process (c), and the assembly drawing (η) are inputted into the three-term relationship input area (10) displayed on the display via the input device, and the department classification (2) is inputted into the department classification input area corresponding to the three-term relationship input area (10). Next, the part number (F) for specifying the product (F) as the parent part number (first production factor), the item number (PC001) (first factor-type number) as the parent data classification, the part number (c) for specifying the assembly process (c) as the middle part number (second production factor), the process number (PC003) (third factor-type number) as the middle data classification, the part number (η) for specifying the assembly drawing (η) as the child part number (third production factor), and the result number (PC002) (second factor-type number) as the child data classification are inputted. The start date (January 1, 2005) and the end date (-) of the three-term relationship among the product (F), the assembly process (c), and the assembly drawing (η) are inputted into the relation start date input area and the relation end date input area corresponding to the three-term relationship input area (10), respectively. Further, the three-term relationship among the product (E), the assembly process (c), and the assembly drawing (β), and its end date (April 30, 2005) are inputted into the three-term relationship input area for end corresponding to the three-term relationship input area (10).

Once these data are inputted, the computer 11 stores these data in the main file of the relational database 18. In the relational database 18, the product (F) and the assembly process (c) are connected to each other, and the product (F) and the assembly process (c) are linked with each other based on the two-term relationship; and the product (F), the assembly process (c), and the assembly drawing (η) are connected to each other, and the product (F), the assembly process (c), and the assembly drawing (η) are linked with each other based on the three-term relationship. The three-term relationship among the product (E), the assembly process (c), and the assembly drawing (β) is separated from the creation factors of the production system on April 30, 2005 based on the setting of the end date (separation). In addition, the two-term relationship between the product (E) and the assembly process (c) serving as a basis of the three-term relationship among the product (E), the assembly process (c), and the assembly drawing (β) is also separated from the creation factors of the production system on April 30, 2005 by the setting of the end date (separation).

The product (F) and the assembly process (c) are inputted into the two-term relationship input area (11) via the input device, and the department classification (2) is inputted into the department classification input area corresponding to the two-term relationship input area (11). Next, the part number (F) for specifying the product (F) as the parent part number (first production factor), the item number (PC001) (first factor-type number) as the parent data classification, the part number (c) for specifying the assembly process (c) as the child part number (second production factor), and the process number (PC003) (third factor-type number) as the child data classification are inputted. The start date (May 1, 2005) and the end date (-) of the two-term relationship between the product (F) and the assembly process (c) are inputted into the relation start date input area and the relation end date input area corresponding to the two-term relationship input area (11), respectively. Further, the two-term relationship between the product (E) and the assembly process (c), and its end date (April 30, 2005) are inputted into the two-term relationship input area for end corresponding to the two-term relationship input area (11).

The product (F), the assembly process (c), and the part (θ) are inputted into the three-term relationship input area (11) displayed on the display via the input device, and the department classification (2) is inputted into the department classification input area corresponding to the three-term relationship input area (11). Next, the part number (F) for specifying the product (F) as the parent part number (first production factor), the item number (PC001) (first factor-type number) as the parent data classification, the part number (c) for specifying the assembly process (c) as the middle part number (second production factor), the process number (PC003) (third factor-type number) as the middle data classification, the part number (θ) for specifying the part (θ) as the child part number (third production factor), and the item number (PC001) (first factor-type number) as the child data classification are inputted. The start date (January 1, 2005) and the end date (-) of the three-term relationship among the product (F), the assembly process (c), and the part (θ) are inputted into the relation start date input area and the relation end date input area corresponding to the three-term relationship input area (11), respectively. Further, the three-term relationship among the product (E), the assembly process (c), and the part (γ), and its end date (April 30, 2005) are inputted into the three-term relationship input area for end corresponding to the three-term relationship input area (11).

Once these data are inputted, the computer 11 stores these data in the main file of the relational database 18. In the relational database 18, the product (F) and the assembly process (c) are connected to each other, and the product (F) and the assembly process (c) are linked with each other based on the two-term relationship; and the product (F), the assembly process (c), and the part (θ) are connected to each other, and the product (F), the assembly process (c), and the part (θ) are linked with each other based on the three-term relationship. The three-term relationship among the product (E), the assembly process (c), and the assembly drawing (β) is separated from the creation factors of the production system on April 31, 2005 based on the setting of the end date (separation). In addition, the two-term relationship between the product (E) and the assembly process (c) serving as a basis of the three-term relationship among the product (E), the assembly process (c), and the assembly drawing (β) is also separated from the creation factors of the production system on April 30, 2005 by the setting of the end date (separation).

The product (F) and the assembly process (c) are inputted into the two-term relationship input area (12) via the input device, and the department classification (2) is inputted into the department classification input area corresponding to the two-term relationship input area (12). Next, the part number (F) for specifying the product (F) as the parent part number (first production factor), the item number (PC001) (first factor-type number) as the parent data classification, the part number (c) for specifying the assembly process (c) as the child part number (second production factor), and the process number (PC003) (third factor-type number) as the child data classification are inputted. The start date (May 1, 2005) and the end date (-) of the two-term relationship between the product (F) and the assembly process (c) are inputted into the relation start date input area and the relation end date input area corresponding to the two-term relationship input area (12), respectively. Further, the two-term relationship between the product (E) and the assembly process (c), and its end date (April 30, 2005) are inputted into the two-term relationship input area for end corresponding to the two-term relationship input area (12).

The product (F), the assembly process (c), and the production line (δ) are inputted into the three-term relationship input area (12) displayed on the display via the input device, and the department classification (2) is inputted into the department classification input area corresponding to the three-term relationship input area (12). Next, the part number (F) for specifying the product (F) as the parent part number (first production factor), the item number (PC001) (first factor-type number) as the parent data classification, the part number (c) for specifying the assembly process (c) as the middle part number (second production factor), the process number (PC003) (third factor-type number) as the middle data classification, the part number (δ) for specifying the production line (δ) as the child part number (third production factor), and the resource number (PC004) (fourth factor-type number) as the child data classification are inputted. The start date (January 1, 2005) and the end date (-) of the three-term relationship among the product (F), the assembly process (c), and the production line (δ) are inputted into the relation start date input area and the relation end date input area corresponding to the three-term relationship input area (12), respectively. Further, the three-term relationship among the product (E), the assembly process (c), and the production line (δ), and its end date (April 30, 2005) are inputted into the three-term relationship input area for end corresponding to the three-term relationship input area (12).

Once these data are inputted, the computer 11 stores these data in the main file of the relational database 18. In the relational database 18, the product (F) and the assembly process (c) are connected to each other, and the product (F) and the assembly process (c) are linked with each other based on the two-term relationship; and the product (F), the assembly process (c), and the production line (δ) are connected to each other, and the product (F), the assembly process (c), and the production line (δ) are linked with each other based on the three-term relationship. The three-term relationship among the product (E), the assembly process (c), and the production line (δ) is separated from the creation factors of the production system on April 31, 2005 based on the setting of the end date (separation). In addition, the two-term relationship between the product (E) and the assembly process (c) serving as a basis of the three-term relationship among the product (E), the assembly process (c), and the production line (δ) is also separated from the creation factors of the production system on April 30, 2005 by the setting of the end date (separation).

The product (F) and the treatment process (e) are inputted into the two-term relationship input area (13) via the input device, and the department classification (2) is inputted into the department classification input area corresponding to the two-term relationship input area (13). Next, the part number (F) for specifying the product (F) as the parent part number (first production factor), the item number (PC001) (first factor-type number) as the parent data classification, the part number (e) for specifying the treatment process (e) as the child part number (second production factor), and the process number (PC003) (third factor-type number) as the child data classification are inputted. The start date (May 1, 2005) and the end date (-) of the two-term relationship between the product (F) and the treatment process (e) are inputted into the relation start date input area and the relation end date input area corresponding to the two-term relationship input area (13), respectively. Further, the two-term relationship between the product (E) and the treatment process (e), and its end date (April 30, 2005) are inputted into the two-term relationship input area for end corresponding to the two-term relationship input area (13).

The product (F), the treatment process (e), and the part (κ) are inputted into the three-term relationship input area (13) displayed on the display via the input device, and the department classification (2) is inputted into the department classification input area corresponding to the three-term relationship input area (13). Next, the part number (F) for specifying the product (F) as the parent part number (first production factor), the item number (PC001) (first factor-type number) as the parent data classification, the part number (e) for specifying the treatment process (e) as the middle part number (second production factor), the process number (PC003) (third factor-type number) as the middle data classification, the part number (κ) for specifying the part (κ) as the child part number (third production factor), and the item number (PC001) (first factor-type number) as the child data classification are inputted. The start date (January 1, 2005) and the end date (-) of the three-term relationship among the product (F), the treatment process (e), and the part (κ) are inputted into the relation start date input area and the relation end date input area corresponding to the three-term relationship input area (13), respectively. Further, the three-term relationship among the product (E), the treatment process (e), and the part (ε), and its end date (April 30, 2005) are inputted into the three-term relationship input area for end corresponding to the three-term relationship input area (13).

Once these data are inputted, the computer 11 stores these data in the main file of the relational database 18. In the relational database 18, the product (F) and the treatment process (e) are connected to each other, and the product (F) and the treatment process (e) are linked with each other based on the two-term relationship; and the product (F), the treatment process (e), and the part (κ) are connected to each other, and the product (F), the treatment process (e), and the part (κ) are linked with each other based on the three-term relationship. The three-term relationship among the product (E), the treatment process (e), and the part (ε) is separated from the creation factors of the production system on April 31, 2005 based on the setting of the end date (separation). In addition, the two-term relationship between the product (E) and the treatment process (e) serving as a basis of the three-term relationship among the product (E), the treatment process (e), and the part (ε) is also separated from the creation factors of the production system on April 30, 2005 by the setting of the end date (separation).

The product (F) and the treatment process (e) are inputted into the two-term relationship input area (14) via the input device, and the department classification (2) is inputted into the department classification input area corresponding to the two-term relationship input area (14). Next, the part number (F) for specifying the product (F) as the parent part number (first production factor), the item number (PC001) (first factor-type number) as the parent data classification, the part number (e) for specifying the treatment process (e) as the child part number (second production factor), and the process number (PC003) (third factor-type number) as the child data classification are inputted. The start date (May 1, 2005) and the end date (-) of the two-term relationship between the product (F) and the treatment process (e) are inputted into the relation start date input area and the relation end date input area corresponding to the two-term relationship input area (14), respectively. Further, the two-term relationship between the product (E) and the treatment process (e), and its end date (April 30, 2005) are inputted into the two-term relationship input area for end corresponding to the two-term relationship input area (14).

The product (F), the treatment process (e), and the production tool (λ) are inputted into the three-term relationship input area (14) displayed on the display via the input device, and the department classification (2) is inputted into the department classification input area corresponding to the three-term relationship input area (14). Next, the part number (F) for specifying the product (F) as the parent part number (first production factor), the item number (PC001) (first factor-type number) as the parent data classification, the part number (e) for specifying the treatment process (e) as the middle part number (second production factor), the process number (PC003) (third factor-type number) as the middle data classification, the part number (λ) for specifying the production tool (λ) as the child part number (third production factor), and the resource number (PC004) (fourth factor-type number) as the child data classification are inputted. The start date (January 1, 2005) and the end date (-) of the three-term relationship among the product (F), the treatment process (e), and the production tool (λ) are inputted into the relation start date input area and the relation end date input area corresponding to the three-term relationship input area (14), respectively. Further, the three-term relationship among the product (E), the treatment process (e), and the production tool (ζ), and its end date (April 30, 2005) are inputted into the three-term relationship input area for end corresponding to the three-term relationship input area (14).

Once these data are inputted, the computer 11 stores these data in the main file of the relational database 18. In the relational database 18, the product (F) and the treatment process (e) are connected to each other, and the product (F) and the treatment process (e) are linked with each other based on the two-term relationship; and the product (F), the treatment process (e), and the production tool (λ) are connected to each other, and the product (F), the treatment process (e), and the production tool (λ) are linked with each other based on the three-term relationship. The three-term relationship among the product (E), the treatment process (e), and the production tool (ζ) is separated from the creation factors of the production system on April 31, 2005 based on the setting of the end date (separation). In addition, the two-term relationship between the product (E) and the treatment process (e) serving as a basis of the three-term relationship among the product (E), the treatment process (e), and the production tool (ζ) is also separated from the creation factors of the production system on April 30, 2005 by the setting of the end date (separation).

The data on the inspection process (b), the assembly process (d), and the part (l) are stored in the factor-type database 17 on July 1, 2005. Further, a two-term relationship between the product (F) and the inspection process (b), a three-term relationship among the product (F), the inspection process (b), and the inspection standard (α), a two-term relationship between the product (F) and the assembly process (d), a three-term relationship among the product (F), the assembly process (d), and the assembly drawing (η), a three-term relationship among the product (F), the assembly process (d), and the part (l), and a three-term relationship among the product (F), the assembly process (d), and the production line (δ) are stored in the relational database 18. One example of the procedure of storing in the factor-type database 17 the data on each of the production factors on July 1, 2005 will be described as follows.

The part (l) and its part number (l) (factor-type identification number) are inputted into the item input area displayed on the display via the input device, the department classification is inputted into the department classification input area, and the start date and the end date of the part (l) are inputted into the start date input area and the end date input area, respectively. Further, the part (θ) and its end date are inputted into the production factor input area for end displayed on the display. The computer 11 refers to the factor-type, the production factor, and the factor-type number stored in the storage unit or the hard disk to determine that the part (l) belongs to the item, gives the item data classification (PC001) (first factor-type number) to the part (l), and gives the departmental numbers (1, 2, 3) to the part (l) based on the inputted department classification. The computer 11 stores the part data, such as the item data classification (PC001) and the departmental numbers (1, 2, 3) of the part (l), the part number (l) for specifying the part (l), the start date of the part (l) (July 1, 2005), the end date (-) of the part (l), and the like; and the end date of the part (θ) (June 30, 2005) in the main file of the item database 19. The part data includes contents of the part (l) (part name, producing district, instruction for use, durable years, amount of money, delivery date, and the like).

The inspection process (b), the assembly process (d), and their part numbers (b) and (d) (factor-type identification number) are inputted into the process input area displayed on the display via the input device, the department classification is inputted into the department classification input area, and the start date and the end date of the inspection process (b) and the assembly process (d) are inputted into the start date input area and the end date input area, respectively. Further, the inspection process (a), the assembly processes (c), and the end dates thereof are inputted into the production factor input area for end displayed on the display. The computer 11 refers to the factor-type, the production factor, and the factor-type number stored in the storage unit or the hard disk to determine that the inspection process (b) and the assembly process (d) belong to the process, gives the process data classification (PC003) (third factor-type number) to the inspection process (b) and the assembly process (d), and gives the departmental numbers (1, 2) to the inspection process (b) and the assembly process (d) based on the inputted department classification.

The computer 11 stores in the process database 21 the inspection process data, such as the process data classification (PC003) and the departmental number (2) of the inspection process (b), the part number (b) for specifying the inspection process (b), the start date of the inspection process (b) (July 1, 2005), the end date (-) of the inspection process (b), and the like; and stores in the process database 21 the assembly process data, such as the process data classification (PC003) and the departmental numbers (1, 2) of the assembly process (d), a part number (d) for specifying the assembly process (d), the start date of the assembly process (d) (July 1, 2005), the end date (-) of the assembly process (d), and the like. The inspection process data includes contents of the inspection process (b) (details of the inspection process, inspection location, instruction for use, and the like), while the assembly process data includes contents of the assembly process (d) (details of the assembly process, assembly location, instruction for use, and the like).

As of July 1, 2005, the inspection process (b), the assembly process (d), and the part (l) serve as the creation factors of the production system, so that the end dates thereof will result in blanks (-). The inspection process (a), the assembly process (c), and the part (θ) are separated from the creation factors of the production system on June 30, 2005 based on the setting of the end date (separation).

One example of the procedure of storing in the relational database 18 the two-term relationship and the three-term relationship between and among the production factors on July 1, 2005 will be described as follows. The product (F) and the inspection process (b) are inputted into the two-term relationship input area (15) via the input device, and the department classification (2) is inputted into the department classification input area corresponding to the two-term relationship input area (15). Next, the part number (F) for specifying the product (F) as the parent part number (first production factor), the item number (PC001) (first factor-type number) as the parent data classification, the part number (b) for specifying the inspection process (b) as the child part number (second production factor), and the process number (PC003) (third factor-type number) as the child data classification are inputted. The start date (July 1, 2005) and the end date (-) of the two-term relationship between the product (F) and the inspection process (b) are inputted into the relation start date input area and the relation end date input area corresponding to the two-term relationship input area (15), respectively. Further, the two-term relationship between the product (F) and the inspection process (a), and its end date (June 30, 2005) are inputted into the two-term relationship input area for end corresponding to the two-term relationship input area (15).

The product (F), the inspection process (b), and the inspection standard (α) are inputted into the three-term relationship input area (15) displayed on the display via the input device, and the department classification (2) is inputted into the department classification input area corresponding to the three-term relationship input area (15). Next, the part number (F) for specifying the product (F) as the parent part number (first production factor), the item number (PC001) (first factor-type number) as the parent data classification, the part number (b) for specifying the inspection process (b) as the middle part number (second production factor), the process number (PC003) (third factor-type number) as the middle data classification, the part number (α) for specifying the inspection standard (α) as the child part number(third production factor), and the result number (PC002) (second factor-type number) as the child data classification are inputted. The start date (July 1, 2005) and the end date (-) of the three-term relationship among the product (F), the inspection process (b), and the inspection standard (α) are inputted into the relation start date input area and the relation end date input area corresponding to the three-term relationship input area (15), respectively. Further, the three-term relationship among the product (F), the inspection process (a), and the inspection standard (α), and its end date (June 30, 2005) are inputted into the three-term relationship input area for end corresponding to the three-term relationship input area (15).

Once these data are inputted, the computer 11 stores these data in the main file of the relational database 18. In the relational database 18, the product (F) and the inspection process (b) are connected to each other, and the product (F) and the inspection process (b) are linked with each other based on the two-term relationship; and the product (F), the inspection process (b), and the inspection standard (α) are connected to each other, and the product (F), the inspection process (b), and the inspection standard (α) are linked with each other based on the three-term relationship. The three-term relationship among the product (F), the inspection process (a), and the inspection standard (α) is separated from the creation factors of the production system on June 30, 2005 based on the setting of the end date (separation). In addition, the two-term relationship between the product (F) and the inspection process (a) serving as a basis of the three-term relationship among the product (F), the inspection process (a), and the inspection standard (α) is also separated from the creation factors of the production system on June 30, 2005 by the setting of the end date (separation).

The product (F) and the assembly process (d) are inputted into the two-term relationship input area (16) via the input device, and the department classification (2) is inputted into the department classification input area corresponding to the two-term relationship input area (16). Next, the part number (F) for specifying the product (F) as the parent part number (first production factor), the item number (PC001) (first factor-type number) as the parent data classification, the part number (d) for specifying the assembly process (d) as the child part number (second production factor), and the process number (PC003) (third factor-type number) as the child data classification are inputted. The start date (July 1, 2005) and the end date (-) of the two-term relationship between the product (F) and the assembly process (d) are inputted into the relation start date input area and the relation end date input area corresponding to the two-term relationship input area (16), respectively. Further, the two-term relationship between the product (F) and the assembly process (c), and its end date (June 30, 2005) are inputted into the two-term relationship input area for end corresponding to the two-term relationship input area (16).

The product (F), the assembly process (d), and the assembly drawing (η) are inputted into the three-term relationship input area (16) displayed on the display via the input device, and the department classification (2) is inputted into the department classification input area corresponding to the three-term relationship input area (16). Next, the part number (F) for specifying the product (F) as the parent part number (first production factor), the item number (PC001) (first factor-type number) as the parent data classification, the part number (d) for specifying the assembly process (d) as the middle part number (second production factor), the process number (PC003) (third factor-type number) as the middle data classification, the part number (η) for specifying the assembly drawing (η) as the child part number (third production factor), and the result number (PC002) (second factor-type number) as the child data classification are inputted. The start date (July 1, 2005) and the end date (-) of the three-term relationship among the product (F), the assembly process (d), and the assembly drawing (η) are inputted into the relation start date input area and the relation end date input area corresponding to the three-term relationship input area (16), respectively. Further, the three-term relationship among the product (F), the assembly process (c), and the assembly drawing (η), and its end date (June 30, 2005) are inputted into the three-term relationship input area for end corresponding to the three-term relationship input area (16).

Once these data are inputted, the computer 11 stores these data in the main file of the relational database 18. In the relational database 18, the product (F) and the assembly process (d) are connected to each other, and the product (F) and the assembly process (d) are linked with each other based on the two-term relationship; and the product (F), the assembly process (d), and the assembly drawing (η) are connected to each other, and the product (F), the assembly process (d), and the assembly drawing (η) are linked with each other based on the three-term relationship. The three-term relationship among the product (F), the assembly process (c), and the assembly drawing (η) is separated from the creation factors of the production system on June 30, 2005 based on the setting of the end date (separation). In addition, the two-term relationship between the product (F) and the assembly process (c) serving as a basis of the three-term relationship among the product (F), the assembly process (c), and the assembly drawing (η) is also separated from the creation factors of the production system on June 30, 2005 by the setting of the end date (separation).

The product (F) and the assembly process (d) are inputted into the two-term relationship input area (17) via the input device, and the department classification (2) is inputted into the department classification input area corresponding to the two-term relationship input area (17). Next, the part number (F) for specifying the product (F) as the parent part number (first production factor), the item number (PC001) (first factor-type number) as the parent data classification, the part number (d) for specifying the assembly process (d) as the child part number (second production factor), and the process number (PC003) (third factor-type number) as the child data classification are inputted. The start date (July 1, 2005) and the end date (-) of the two-term relationship between the product (F) and the assembly process (d) are inputted into the relation start date input area and the relation end date input area corresponding to the two-term relationship input area (17), respectively. Further, the two-term relationship between the product (F) and the assembly process (c), and its end date (June 30, 2005) are inputted into the two-term relationship input area for end corresponding to the two-term relationship input area (17).

The product (F), the assembly process (d), and the part (l) are inputted into the three-term relationship input area (17) displayed on the display via the input device, and the department classification (2) is inputted into the department classification input area corresponding to the three-term relationship input area (17). Next, the part number (F) for specifying the product (F) as the parent part number (first production factor), the item number (PC001) (first factor-type number) as the parent data classification, the part number (d) for specifying the assembly process (d) as the middle part number (second production factor), the process number (PC003) (third factor-type number) as the middle data classification, the part number (l) for specifying the part (l) as the child part number (third production factor), and the item number (PC001) (first factor-type number) as the child data classification are inputted. The start date (July 1, 2005) and the end date (-) of the three-term relationship among the product (F), the assembly process (d), and the part (l) are inputted into the relation start date input area and the relation end date input area corresponding to the three-term relationship input area (17), respectively. Further, the three-term relationship among the product (F), the assembly process (c), and the part (θ), and its end date (June 30, 2005) are inputted into the three-term relationship input area for end corresponding to the three-term relationship input area (17).

Once these data are inputted, the computer 11 stores these data in the main file of the relational database 18. In the relational database 18, the product (F) and the assembly process (d) are connected to each other, and the product (F) and the assembly process (d) are linked with each other based on the two-term relationship; and the product (F), the assembly process (d), and the part (l) are connected to each other, and the product (F), the assembly process (d), and the part (l) are linked with each other based on the three-term relationship. The three-term relationship among the product (F), the assembly process (c), and the part (θ) is separated from the creation factors of the production system on June 30, 2005 based on the setting of the end date (separation). In addition, the two-term relationship between the product (F) and the assembly process (c) serving as a basis of the three-term relationship among the product (F), the assembly process (c), and the part (θ) is also separated from the creation factors of the production system on June 30, 2005 by the setting of the end date (separation).

The product (F) and the assembly process (d) are inputted into the two-term relationship input area (18) via the input device, and the department classification (2) is inputted into the department classification input area corresponding to the two-term relationship input area (18). Next, the part number (F) for specifying the product (F) as the parent part number (first production factor), the item number (PC001) (first factor-type number) as the parent data classification, the part number (d) for specifying the assembly process (d) as the child part number (second production factor), and the process number (PC003) (third factor-type number) as the child data classification are inputted. The start date (July 1, 2005) and the end date (-) of the two-term relationship between the product (F) and the assembly process (d) are inputted into the relation start date input area and the relation end date input area corresponding to the two-term relationship input area (18), respectively. Further, the two-term relationship between the product (F) and the assembly process (c), and its end date (June 30, 2005) are inputted into the two-term relationship input area for end corresponding to the two-term relationship input area (18).

The product (F), the assembly process (d), and the production line (δ) are inputted into the three-term relationship input area (18) displayed on the display via the input device, and the department classification (2) is inputted into the department classification input area corresponding to the three-term relationship input area (18). Next, the part number (F) for specifying the product (F) as the parent part number (first production factor), the item number (PC001) (first factor-type number) as the parent data classification, the part number (d) for specifying the assembly process (d) as the middle part number (second production factor), the process number (PC003) (third factor-type number) as the middle data classification, the part number (δ) for specifying the production line (δ) as the child part number (third production factor), and the resource number (PC004) (fourth factor-type number) as the child data classification are inputted. The start date (July 1, 2005) and the end date (-) of the three-term relationship among the product (F), the assembly process (d), and the production line (δ) are inputted into the relation start date input area and the relation end date input area corresponding to the three-term relationship input area (18), respectively. Further, the three-term relationship among the product (F), the assembly process (c), and the production line (δ), and its end date (June 30, 2005) are inputted into the three-term relationship input area for end corresponding to the three-term relationship input area (18).

Once these data are inputted, the computer 11 stores these data in the main file of the relational database 18. In the relational database 18, the product (F) and the assembly process (d) are connected to each other, and the product (F) and the assembly process (d) are linked with each other based on the two-term relationship; and the product (F), the assembly process (d), and the production line (δ) are connected to each other, and the product (F), the assembly process (d), and the production line (δ) are linked with each other based on the three-term relationship. The three-term relationship among the product (F), the assembly process (c), and the production line (δ) is separated from the creation factors of the production system on June 30, 2005 based on the setting of the end date (separation). In addition, the two-term relationship between the product (F) and the assembly process (c) serving as a basis of the three-term relationship among the product (F), the assembly process (c), and the production line (δ) is also separated from the creation factors of the production system on June 30, 2005 by the setting of the end date (separation).

In this system 10, while integrating a plurality of two-term relationships of different types (by department, by factor-type, by factor) extracted from the relational database 18 and integrating a plurality of three-term relationships of different types (by department, by factor-type, by factor) extracted from the relational database 18, the two-term relationship and the three-term relationship are integrated, and a plurality of production factors of different types extracted from the first to fifth factor-type databases 19, 20, 21, 22, and 23 are connected in series from a superordinate concept toward a subordinate concept thereof according to the integrated two-term relationship, the integrated three-term relationship, and the integrated two-term/three-term relationship to thereby create the production system corresponding to the article (1). The creation of the production system of the article (1) performed by the computer 11 will be described based on Fig. 7 as follows. It is to be noted that the creation of the production system shown in Fig. 7 shall be performed on September 30, 2005.

When the creation of the production system on September 30, 2005 is instructed via the input device, the computer 11 refer to the start dates and the end dates of the production factors, the two-term relationship, and the three-term relationship, extracts from the relational database 18 the two-term relationship and the three-term relationship which will serve as the creation factors of the production system at the date of September 30, 2005, and extracts from the factor-type database 17 the production factors for forming the extracted two-term relationship and three-term relationship. The computer 11 extracts from the relational database 18 the two-term relationship between the shop (B) and the warehouse (D) and the three-term relationship among the shop (B), the warehouse (D), and the product (F), as the logistics department data. Next, the computer 11 interprets the site number (PC005) of the parent data classification of the shop (B) as the site data classification (PC005) of the site database 23 to extract the data of the shop (B) from the site database 23 based on the part number (B) and the site data classification (PC005), and interprets the site number (PC005) of the middle data classification of the warehouse (D) as the site data classification (PC005) (fifth factor-type number) of the site database 23 to extract the warehouse data from the site database 23 based on the part number (D) and the site data classification (PC005). Further, it interprets the item number (PC001) of the child data classification of the product (F) as the item data classification (PC001) (first factor-type number) of the item database 19 to extract the data of the product (F) from the item database 19 based on the part number (F) and the item data classification (PC001).

The computer 11 extracts from the relational database 18 the two-term relationship between the product (F) and the inspection process (b) and the three-term relationship among the product (F), the inspection process (b), and the inspection standard (α), as the manufacturing department data. Next, the computer 11 interprets the process number (PC003) of the middle data classification of the inspection process (b) as the process data classification (PC003) (third factor-type number) of the process database 21 to extract the data of the inspection process (b) from the process database 21 based on the part number (b) and the process data classification (PC003), and interprets the result number (PC002) of the child data classification of the inspection standard (α) as the result data classification (PC002) (second factor-type number) of the result database 20 to extract the data of the inspection standard (α) from the result database 20 based on the part number (α) and the result data classification (PC002).

The computer 11 extracts from the relational database 18 the two-term relationship between the product (F) and the assembly process (d), the three-term relationship among the product (F), the assembly process (d), and the assembly drawing (η), the three-term relationship among the product (F), the assembly process (d), and the part (l), and the three-term relationship among the product (F), the assembly process (d), and the production line (δ), as the manufacturing department data. Next, the computer 11 interprets the process number (PC003) of the middle data classification of the assembly process (d) as the process data classification (PC003) (third factor-type number) of the process database 21 to extract the data of the assembly process (d) from the process database 21 based on the part number (d) and the process data classification (PC003), and interprets the result number (PC002) of the child data classification of the assembly drawing (η) as the result data classification (PC002) (second factor-type number) of the result database 20 to extract the data of the assembly drawing (η) from the result database 20 based on the part number (η) and the result data classification (PC002). The computer 11 interprets the item number (PC001) of the child data classification of the part (l) as the item data classification (PC001) (first factor-type number) of the item database 19 to extract the data of the part (l) from the item database 19 based on the part number (l) and the item data classification (PC001), and interprets the resource number (PC004) of the child data classification of the production line (δ) as the resource data classification (PC004) (fourth factor-type number) of the resource data base 22 to extract the data of the production line (δ) from the resource data base 22 based on the part number (δ) and the resource data classification (PC004).

The computer 11 extracts from the relational database 18 the two-term relationship between the product (F) and the treatment process (e), the three-term relationship among the product (F), the treatment process (e), and the part (κ), and the three-term relationship among the product (F), the treatment process (e), and the production tool (λ), as the manufacturing department data. Next, the computer 11 interprets the process number (PC003) of the middle data classification of the treatment process (e) as the process data classification (PC003) (third factor-type number) of the process database 21 to extract the data of the treatment process (e) from the process database 21 based on the part number (e) and the process data classification (PC003), and interprets the item number (PC001) of the child data classification of the part (κ) as the item data classification (PC001) (first factor-type number) of the item database 19 to extract the data of the part (κ) from the item database 19 based on the part number (κ) and the item data classification (PC001). The computer 11 interprets the resource number (PC004) of the child data classification of the production tool (λ) as the resource data classification (PC004) (fourth factor-type number) of the resource database 22 to extract the data of the production tool (λ) from the resource database 22 based on the part number (λ) and the resource data classification (PC004).

When extracting a plurality of two-term relationships of various types between the production factors and a plurality of three-term relationships of various types from the relational database 18, and also extracting a plurality of production factors of various types for forming the two-term relationship and the three-term relationship from the factor-type database 17, the computer 11 refers to the parent data classification of the first production factor and the child data classification of the second production factor that form the two-term relationship, and combines the production factors of the same data classification in these two-term relationships to thereby integrate a plurality of two-term relationships of various types thus extracted. While referring to the parent data classification of the first production factor and the child data classification of the second production factor that form the two-term relationship, the computer 11 refers to the parent data classification of the first production factor, the middle data classification of the second production factor, and the child data classification of the third production factor that form the three-term relationship, and combines the production factors of the same data classification in these two-term relationships and three-term relationships to thereby integrate a plurality of two-term relationships of various types and a plurality of three-term relationships of various types thus extracted. Further, the computer 11 refers to the parent data classification of the first production factor, the middle data classification of the second production factor, and the child data classification of the third production factor that form the three-term relationship, and combines the production factors of the same data classification in these three-term relationships to thereby integrate a plurality of three-term relationships of various types thus extracted. One concrete example will be as follows.

The computer 11 determines based on the data classification (PC001) and the part number (F) that the products (F) are the same common production factor among the three-term relationship among the shop (B), the warehouse (D), and the product (F), the three-term relationship among the product (F), the inspection process (b), and the inspection standard (α), the two-term relationship between the product (F) and the assembly process (d) and the two-term relationship between the product (F) and the treatment process (e), and combines the products (F) in the two-term relationships and the three-term relationships. Thereby, these two-term relationships are integrated (two-term relationship integrating means), these three-term relationships are integrated (three-term relationship integrating means), and these two-term relationships and these three-term relationships are integrated (two-term/three-term relationship integrating means). A route (technical information route) in which the warehouse (D) lies just below the shop (B); the product (F) lies just below the warehouse (D); the inspection process (b), the assembly process (d), and the treatment process (e) lie just below the product (F) in parallel; and the inspection standard (α) lies just below the inspection process (b) is built by integrating these relationships.

The computer 11 determines based on the data classification (PC001) and the part number (F) that the products (F) are the same common production factor among the three-term relationship among the product (F), the assembly process (d), and the assembly drawing (η), the three-term relationship among the product (F), the assembly process (d), and the part (l), and the three-term relationship among the product (F), the assembly process (d), and the production line (δ), the three-term relationship among the product (F), the treatment process (e), and the part (k), and the three-term relationship among the product (F), the treatment process (e), and the production tool (λ), and combines the products (F) in these three-term relationships. Thereby, these three-term relationships are integrated (three-term relationship integrating means). A route (technical information route) in which the assembly process (d) and the treatment process (e) lie just below the product (F) in parallel, and the assembly drawing (η), the part (l), and the production line (δ) lie just below the assembly process (d) in parallel, and the part (κ) and the production tool (λ) lie just below the treatment process (e) in parallel is built by integrating these relationships.

Next, the computer 11 determines based on the data classification (PC001) and the part number (F), and the data classification (PC003) and the part numbers (d) and (e) that the products (F), the assembly processes (d), and the treatment processes (e) are the same common production factors, respectively, among the built route of the shop (B), the warehouse (D), the product (F), the inspection process (b), the assembly process (d), the treatment process (e), the inspection standard (α), and route of the product (F), the assembly process (d), the treatment process (e), the assembly drawing (η), the part (l), the production line (δ), the part (κ), the production tool (λ), and combines the products (F), the assembly processes (d), and the treatment processes (e) in these routes. As a result, it builds a route in which the warehouse (D) is connected below the shop (B); the product (F), below the warehouse (D); the inspection process (b), the assembly process (d), and the treatment process (e), below the product (F); the inspection standard (α), below the inspection process (b); the assembly drawing (η), the part (l), and the production line (δ), below the assembly process (d); and the part (κ) and the production tool (λ), below the treatment process (e), in series.

When integrating the two-term relationships and the three-term relationships, and building the route connected in series from the higher level toward the lower level, the computer 11 incorporates each of the production factors extracted from the factor-type database in the route, and creates a production system in which a plurality of production factors of various types are connected in series from a superordinate concept toward a subordinate concept thereof (production system creating means). In the created production system, the shop (B) lies at the top, and the warehouse (D), the product (F), the inspection process (b), the assembly process (d), the treatment process (e), the inspection standard (α), the assembly drawing (η), the part (l), the production line (δ), the part (κ), and the production tool (λ) are located in a line toward the lower level therefrom, as shown in Fig. 7. The computer 11 stores the created production system of the article (1) in the storage unit or the hard disk (production system storing means), and outputs the created production system of the article (1) via the output device (production system outputting means). It is to be noted that after creating the production system of the article (1), production systems to an article (2) to an article (n) can be created, and the created production systems of the article (2) to the article (n) can be stored in the storage unit or the hard disk (production system storing means); and any one of the created production systems of the article (1) to article (n) can be outputted via the output device (production system outputting means). In the creation of the production system of the new article, not only the existing production factors, two-term relationships, and three-term relationships can be used, but also a plurality of newly defined production factors of various types can be used, and a plurality of two-term relationships of various types and a plurality of three-term relationships of various types which are newly set can also be used.

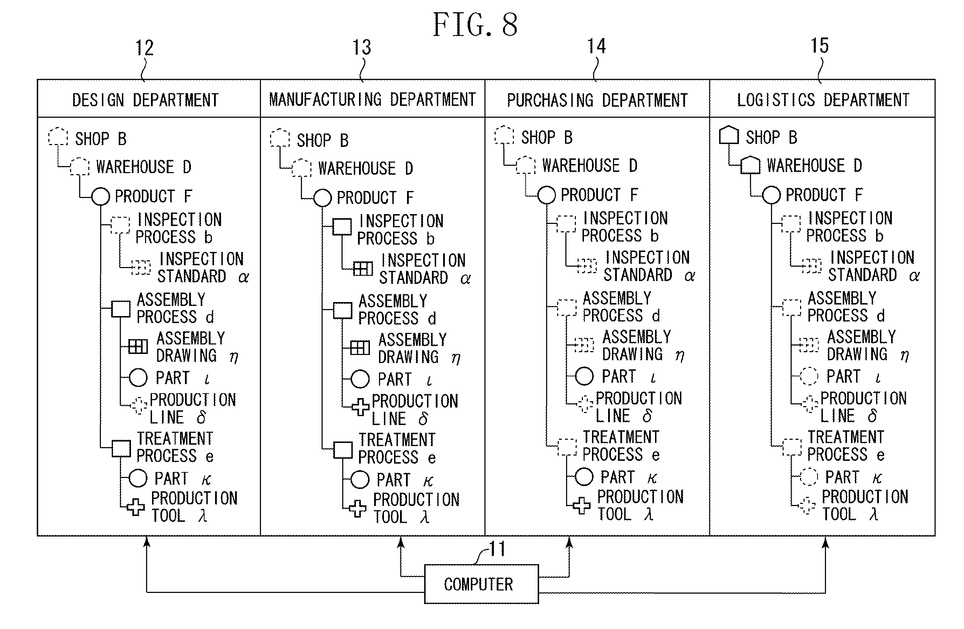

Fig. 8 is a view showing departmental production systems outputted for each of the departments 12, 13, 14, and 15. In this system 10, only the production factors represented by the solid lines shown in Fig. 8 are outputted from the output device arranged in each of the departments 12, 13, 14, and 15, whereas the production factors represented by the dotted lines are not outputted in principle. The computer 11 transfers the created whole production system to the terminal device arranged in each department 12, 13, 14, and 15, causes the display arranged in each of the departments to display the departmental production system formed only of the required production factors for each of the departments 12, 13, 14, and 15 based on the department-type numbers (1, 2, 3, 4) (departmental production system outputting means), and causes the printer arranged in each of the departments 12, 13, 14, and 15 to print the departmental production system (departmental production system outputting means).

For example, as shown in Figs. 1 and 8, the production system of the article (1) formed of the product (F), the assembly process (d), the treatment process (e), the assembly drawing (η), the part (l), the part (κ), and the production tool (λ) to which the departmental number 1 is set will be displayed on the display arranged in the design department 12, but the shop (B) and the warehouse (D) to which the departmental number 4 is set, and the inspection process (b), the inspection standard (α), and the production line (δ) to which the departmental number 2 is set will not be displayed thereon. The production system of the article (1) formed of the product (F), the inspection process (b), the assembly process (d), the treatment process (e), the inspection standard (α), the assembly drawing (η), the part (l), the production line (δ), the part (κ), and the production tool (λ) to which the departmental number 2 is set will be displayed on the display arranged in the manufacturing department 13, but the shop (B) and the warehouse (D) to which the departmental number 4 is set will not be displayed thereon. Meanwhile, the production system of the article (1) formed of the product (F), the part (l), the part (κ), and the production tool (λ) to which the departmental number 3 is set will be displayed on the display arranged in the purchasing department 14, but the shop (B) and the warehouse (D) to which the departmental number 4 is set, and the inspection process (b), the assembly process (d), the treatment process (e), the inspection standard (α), the assembly drawing (η), and the production line (δ) to which the departmental numbers 1 and 2 are set will not be displayed thereon. The production system of the article (1) formed of the shop (B), the warehouse (D), and the product (F) to which the departmental number 4 is set will be displayed on the display arranged in the logistics department 15, but the inspection process (b), the assembly process (d), the treatment process (e), the inspection standard (α), the assembly drawing (η), the part (l), the production line (δ), the part (κ), and the production tool (λ) to which the departmental numbers 1, 2, and 3 are set will not be displayed thereon. However, the whole production system may also be displayed on the display in each of the departments 12, 13, 14, and 15 by selecting an overall display.

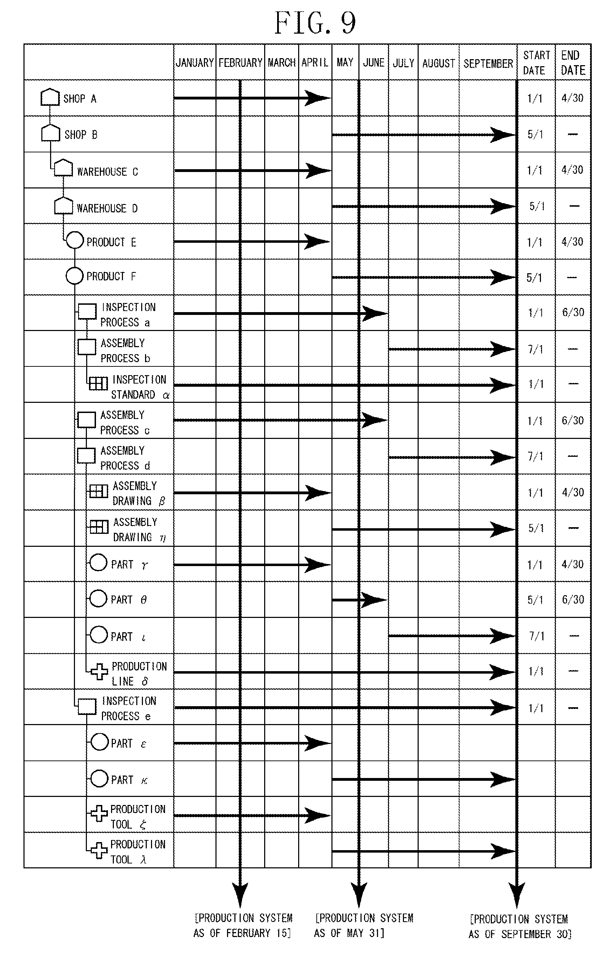

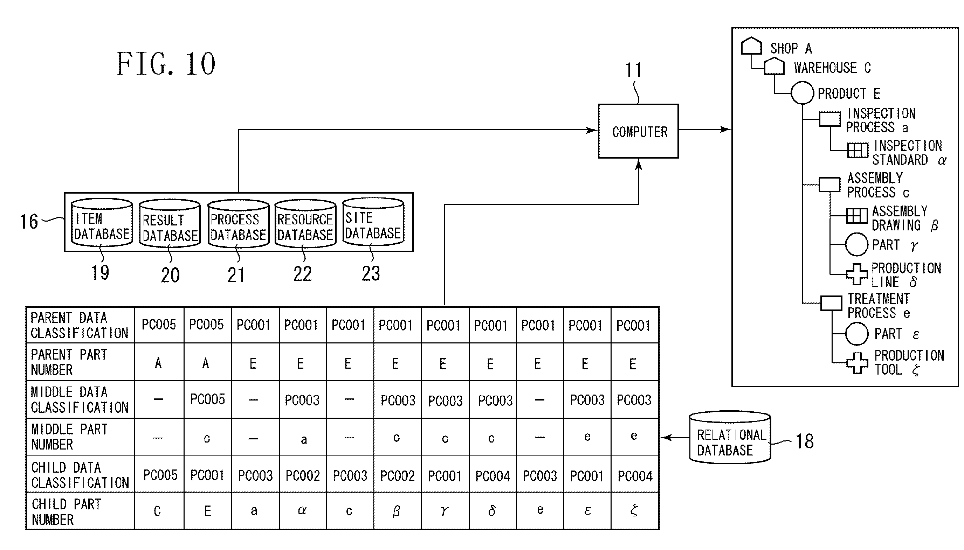

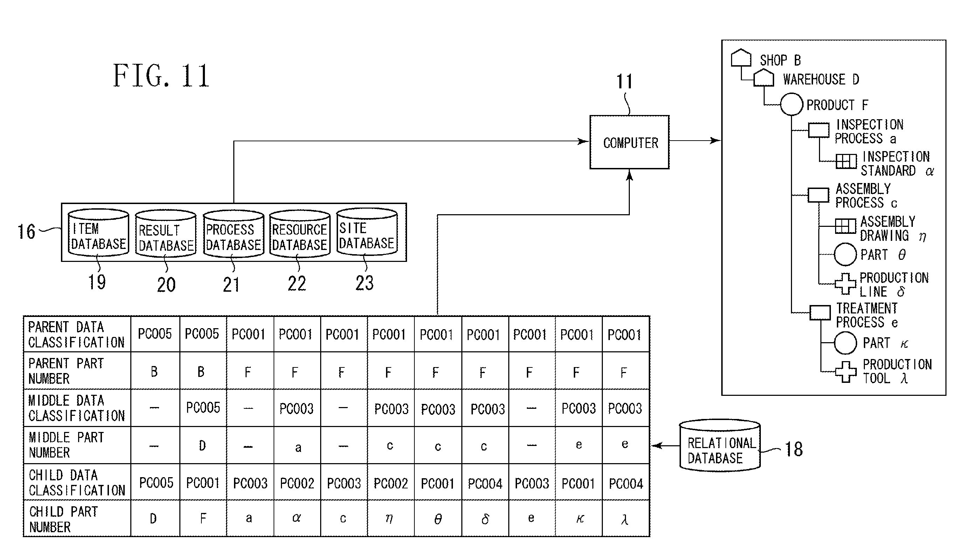

Fig. 9 is a view showing a list of the start date and the end date of each of the production factors, while Fig. 10 is an explanatory view of production system creation on February 15. Fig. 11 is an explanatory view of the production system creation on May 31. A period from January 1, 2005 to September 30 is shown in Fig. 9. This system 10 allows the production system at an arbitrary point in time going back to the past to be created. For example, when the creation of the production system on February 15 and May 31 is instructed via the input device as shown in Fig. 9, the computer 11 extracts from the relational database 18 a plurality of two-term relationships of various types and a plurality of three-term relationships of various types on February 15 and May 31 while referring to the start dates and the end dates of the two-term relationship and the three-term relationship, and extracts from the first to fifth factor-type databases 19, 20, 21, 22, and 23 each of the production factors for forming the extracted two-term relationship and three-term relationship while referring to the start date and the end date of the production factor. Next, the computer 11 integrates the extracted two-term relationships and the three-term relationships, and connects in series a plurality of production factors of various types thus extracted, from a superordinate concept toward a subordinate concept thereof according to the integrated relationship to thereby create the production system of the article (1) on those dates. The creation of the production system on February 15 will be described as follows.

When the creation of the production system on February 15, 2005 is instructed via the input device, the computer 11 refers to the start dates and the end dates of the production factors, the two-term relationship, and the three-term relationship, extracts from the relational database 18 the two-term relationship and the three-term relationship which will serve as the creation factors of the production system at the date of February 15, 2005, and extracts from the factor-type database 17 the production factors for forming the extracted two-term relationship and three-term relationship. The computer 11 extracts from the relational database 18 the two-term relationship between the shop (A) and the warehouse (C), and the three-term relationship among the shop (A), the warehouse (C), and the product (E), as the logistics department data. Next, the computer 11 interprets the site number (PC005) of the parent data classification of the shop (A) as the site data classification (PC005) of the site database 23 to extract the data of the shop (A) from the site database 23 based on the part number (A) and the site data classification (PC005), and interprets the site number (PC005) of the middle data classification of the warehouse (C) as the site data classification (PC005) (fifth factor-type number) of the site database 23 to extract the warehouse data from the site database 23 based on the part number (C) and the site data classification (PC005). Further, it interprets the item number (PC001) of the child data classification of the product (E) as the item data classification (PC001) (first factor-type number) of the item database 19 to extract the data of the product (E) from the item database 19 based on the part number (E) and the item data classification (PC001).

The computer 11 extracts from the relational database 18 the two-term relationship between the product (E) and the inspection process (a), and the three-term relationship among the product (E), the inspection process (a), and the inspection standard (α), as the manufacturing department data. Next, the computer 11 interprets the process number (PC003) of the middle data classification of the inspection process (a) as the process data classification (PC003) (third factor-type number) of the process database 21 to extract the data of the inspection process (a) from the process database 21 based on the part number (a) and the process data classification (PC003), and interprets the result number (PC002) of the child data classification of the inspection standard (α) as the result data classification (PC002) (second factor-type number) of the result database 20 to extract the data of the inspection standard (α) from the result database 20 based on the part number (α) and the result data classification (PC002).

The computer 11 extracts from the relational database 18 the two-term relationship between the product (E) and the assembly process (c), the three-term relationship among the product (E), the assembly process (c), and the assembly drawing (β), the three-term relationship among the product (E), the assembly process (c), and the part (γ), and the three-term relationship among the product (E), the assembly process (c), and the production line (δ), as the manufacturing department data. Next, the computer 11 interprets the process number (PC003) of the middle data classification of the assembly process (c) as the process data classification (PC003) (third factor-type number) of the process database 21 to extract the data of the assembly process (c) from the process database 21 based on the part number (c) and the process data classification (PC003), and interprets the result number (PC002) of the child data classification of the assembly drawing (β) as the result data classification (PC002) (second factor-type number) of the result database 20 to extract the data of the assembly drawing (β) from the result database 20 based on the part number (β) and the result data classification (PC002). The computer 11 interprets the item number (PC001) of the child data classification of the part (γ) as the item data classification (PC001) (first factor-type number) of the item database 19 to extract the data of the part (γ) from the item database 19 based on the part number (γ) and the item data classification (PC001), and interprets the resource number (PC004) of the child data classification of the production line (δ) as the resource data classification (PC004) (fourth factor-type number) of the resource data base 22 to extract the data of the production line (δ) from the resource data base 22 based on the part number (δ) and the resource data classification (PC004).

The computer 11 extracts from the relational database 18 the two-term relationship between the product (E) and the treatment process (e), the three-term relationship among the product (E), the treatment process (e), and the part (ε), and the three-term relationship among the product (E), the treatment process (e), and the production tool (ζ), as the manufacturing department data. Next, the computer 11 interprets the process number (PC003) of the middle data classification of the treatment process (e) as the process data classification (PC003) (third factor-type number) of the process database 21 to extract the data of the treatment process (e) from the process database 21 based on the part number (e) and the process data classification (PC003), and interprets the item number (PC001) of the child data classification of the part (ε) as the item data classification (PC001) (first factor-type number) of the item database 19 to extract the data of the part (ε) from the item database 19 based on the part number (ε) and the item data classification (PC001). The computer 11 interprets the resource number (PC004) of the child data classification of the production tool (ζ) as the resource data classification (PC004) (fourth factor-type number) of the resource database 22 to extract the data of the production tool (ζ) from the resource data base 22 based on the part number (ζ) and the resource data classification (PC004).

The computer 11 determines based on the data classification (PC001) and the part number (E) that the products (E) are the same common production factor among the three-term relationship among the shop (A), the warehouse (C), and the product (E), the three-term relationship among the product (E), the inspection process (a), and the inspection standard (α), the two-term relationship between the product (E) and the assembly process (c), and the two-term relationship between the product (E) and the treatment process (e), and combines the products (E) in the two-term relationships and the three-term relationships. Thereby, these two-term relationships are integrated (two-term relationship integrating means), these three-term relationships are integrated (three-term relationship integrating means), and these two-term relationships and these three-term relationships are integrated (two-term/three-term relationship integrating means). A route (technical information route) in which the warehouse (C) lies just below the shop (A), the product (E) lies just below the warehouse (C), the inspection process (a), the assembly process (c), and the treatment process (e) lie just below the product (E) in parallel, and the inspection standard (α) lies just below the inspection process (a) is built by integrating these relationships.

The computer 11 determines based on the data classification (PC001) and the part number (E) that the products (E) are the same common production factor among the three-term relationship among the product (E), the assembly process (c), and the assembly drawing (β), the three-term relationship among the product (E), the assembly process (c), and the part (γ), the three-term relationship among the product (E), the assembly process (c), and the production line (δ), the three-term relationship among the product (E), the treatment process (e), and the part (ε), and the three-term relationship among the product (E), the treatment process (e), and the production tool (ζ), and combines the products (E) in these three-term relationships. Thereby, these three-term relationships are integrated (three-term relationship integrating means). A route (technical information route) in which the assembly process (c) and the treatment process (e) lie just below the product (E) in parallel, the assembly drawing (β), the part (γ), and the production line (δ) lie just below the assembly process (c) in parallel, and the part (ε) and the production tool (ζ) lie just below the treatment process (e) in parallel is built by integrating these relationships.

Next, the computer 11 determines based on the data classification (PC001) and the part number (E), and the data classification (PC003) and the part numbers (c) and (e) that the products (E), the assembly processes (c), and the treatment processes (e) are the same common production factors, respectively, among the built route of the shop (A), the warehouse (C), the product (E), the inspection process (a), the assembly process (c), the treatment process (e), and the inspection standard (α), and route of the product (E), the assembly process (c), the treatment process (e), the assembly drawing (β), the part (γ), the production line (δ), the part (ε), and the production tool (ζ), and combines the products (E), the assembly processes (c), and the treatment processes (e) in these routes. As a result, it build a route in which the warehouse (C) is connected below the shop (A); the product (E), below the warehouse (C); the inspection process (a), the assembly process (c), and the treatment process (e), below the product (E); the inspection standard (α), below the inspection process (a); the assembly drawing (β), the part (γ), and the production line (δ), below the assembly process (c); and the part (ε) and the production tool (ζ), below the treatment process (e), in series (refer to Figs. 9 and 10).

When integrating the two-term relationships and the three-term relationships, and building the route connected in series from the higher level toward the lower level, the computer 11 incorporates each of the production factors extracted from the factor-type database 17 in the route, and creates a production system in which a plurality of production factors of various types are connected in series from a superordinate concept toward a subordinate concept thereof (production system creating means). In the created production system, the shop (A) lies at the top, and the warehouse (C), the product (E), the inspection process (a), the assembly process (c), the treatment process (e), the inspection standard (α), the assembly drawing (β), the part (γ), the production line (δ), the part (ε), and the production tool (ζ) are located in a line toward the lower level therefrom, as shown in Fig. 10. The computer 11 stores the created production system of the article (1) in the storage unit or the hard disk (production system storing means), and outputs the created production system of the article (1) via the output device (production system outputting means).

When the creation of the production system on May 31, 2005 is instructed via the input device, the computer 11 refers to the start dates and the end dates of the production factors, the two-term relationship, and the three-term relationship, extracts from the relational database 18 the two-term relationship and the three-term relationship which will serve as the creation factors of the production system at the date of May 31, 2005, and extracts from the factor-type database 17 the production factors for forming the extracted two-term relationship and three-term relationship. The computer 11 extracts from the relational database 18 the two-term relationship between the shop (B) and the warehouse (D) and the three-term relationship among the shop (B), the warehouse (D), and the product (F), as the logistics department data. Next, the computer 11 interprets the site number (PC005) of the parent data classification of the shop (B) as the site data classification (PC005) of the site database 23 to extract the data of the shop (B) from the site database 23 based on the part number (B) and the site data classification (PC005), and interprets the site number (PC005) of the middle data classification of the warehouse (D) as the site data classification (PC005) (fifth factor-type number) of the site database 23 to extract the warehouse data from the site database 23 based on the part number (D) and the site data classification (PC005). Further, it interprets the item number (PC001) of the child data classification of the product (F) as the item data classification (PC001) (first factor-type number) of the item database 19 to extract the data of the product (F) from the item database 19 based on the part number (F) and the item data classification (PC001).

The computer 11 extracts from the relational database 18 the two-term relationship between the product (F) and the inspection process (a) and the three-term relationship among the product (F), the inspection process (a), and the inspection standard (α), as the manufacturing department data. Next, the computer 11 interprets the process number (PC003) of the middle data classification of the inspection process (a) as the process data classification (PC003) (third factor-type number) of the process database 21 to extract the data of the inspection process (a) from the database 21 based on the part number (a) and the process data classification (PC003), and interprets the result number (PC002) of the child data classification of the inspection standard (α) as the result data classification (PC002) (second factor-type number) of the result database 20 to extract the data of the inspection standard (α) from the result database 20 based on the part number (α) and the result data classification (PC002).

The computer 11 extracts from the relational database 18 the two-term relationship between the product (F) and the assembly process (c), the three-term relationship among the product (F), the assembly process (c), and the assembly drawing (η), the three-term relationship among the product (F), the assembly process (c), and the part (θ), and the three-term relationship among the product (F), the assembly process (c), and the production line (δ), as the manufacturing department data. Next, the computer 11 interprets the process number (PC003) of the middle data classification of the assembly process (c) as the process data classification (PC003) (third factor-type number) of the process database 21 to extract the data of the assembly process (c) from the process database 21 based on the part number (c) and the process data classification (PC003), and interprets the result number (PC002) of the child data classification of the assembly drawing (η) as the result data classification (PC002) (second factor-type number) of the result database 20 to extract the data of the assembly drawing (η) from the result database 20 based on the part number (η) and the result data classification (PC002). The computer 11 interprets the item number (PC001) of the child data classification of the part (θ) as the item data classification (PC001) (first factor-type number) of the item database 19 to extract the data of the part (θ) from the item database 19 based on the part number (θ) and the item data classification (PC001), and interprets the resource number (PC004) of the child data classification of the production line (δ) as the resource data classification (PC004) (fourth factor-type number) of the resource database 20 to extract the data of the production line (δ) from the resource data base 20 based on the part number (δ) and the resource data classification (PC004).

The computer 11 extracts from the relational database 18 the two-term relationship between the product (F) and the treatment process (e), the three-term relationship among the product (F), the treatment process (e), and the part (κ), and the three-term relationship among the product (F), the treatment process (e), and the production tool (λ), as the manufacturing department data. Next, the computer 11 interprets the process number (PC003) of the middle data classification of the treatment process (e) as the process data classification (PC003) (third factor-type number) of the process database 21 to extract the data of the treatment process (e) from the process database 21 based on the part number (e) and the process data classification (PC003), and interprets the item number (PC001) of the child data classification of the part (κ) as the item data classification (PC001) (first factor-type number) of the item database 19 to extract the data of the part (κ) from the item database 19 based on the part number (κ) and the item data classification (PC001). The computer 11 interprets the resource number (PC004) of the child data classification of the production tool (λ) as the resource data classification (PC004) (fourth factor-type number) of the resource database 22 to extract the data of the production tool (λ) from the resource database 22 based on the part number (λ) and the resource data classification (PC004).

The computer 11 determines based on the data classification (PC001) and the part number (F) that the products (F) are the same common production factor among the three-term relationship among the shop (B), the warehouse (D), and the product (F), the three-term relationship among the product (F), the inspection process (a), and the inspection standard (α), the two-term relationship between the product (F) and the assembly process (c), and the two-term relationship between the product (F) and the treatment process (e), and combines the products (F) in the two-term relationships and the three-term relationships. Thereby, these two-term relationships are integrated (two-term relationship integrating means), these three-term relationships are integrated (three-term relationship integrating means), and these two-term relationships and these three-term relationships are integrated (two-term/three-term relationship integrating means). A route (technical information route) in which the warehouse (D) lies just below the shop (B), the product (F) lies just below the warehouse (D), the inspection process (a), the assembly process (c), and the treatment process (e) lie just below the product (F) in parallel, and the inspection standard (α) lies just below the inspection process (a) is built by integrating these relationships.

The computer 11 determines based on the data classification (PC001) and the part number (F) that the products (F) are the same common production factor among the three-term relationship among the product (F), the assembly process (c), and the assembly drawing (η), the three-term relationship among the product (F), the assembly process (c), and the part (θ), the three-term relationship among the product (F), the assembly process (c), and the production line (δ), the three-term relationship among the product (F), the treatment process (e), and the part (κ), the three-term relationship among the product (F), the treatment process (e), and the production tool (λ), and combines the products (F) in these three-term relationships. Thereby, these three-term relationships are integrated (three-term relationship integrating means). A route (technical information route) in which the assembly process (c) and the treatment process (e) lie just below the product (F) in parallel, the assembly drawing (η), the part (θ), and the production line (δ) lie just below the assembly process (c) in parallel, and the part (κ) and the production tool (λ) lie just below the treatment process (e) in parallel is built by integrating these relationships.

Next, the computer 11 determines based on the data classification (PC001) and the part number (F), and the data classification (PC003) and the part numbers (c) and (e) that the products (F), the assembly processes (c), and the treatment processes (e) are the same common production factors, respectively, among the built route of the shop (A), the warehouse (D), the product (F), the inspection process (a), the assembly process (c), the treatment process (e), and the inspection standard (α), and route of the product (F), the assembly process (c) the treatment process (e), the assembly drawing (η), the part (θ), the production line (δ), the part (κ), and the production tool (λ), and combines the products (F), the assembly processes (c), and the treatment processes (e) in these routes. As a result, it build a route in which the warehouse (D) is connected below the shop (B); the product (F), below the warehouse (D); the inspection process (a), the assembly process (c), and the treatment process (e), below the product (F); the inspection standard (α), below the inspection process (a); the assembly drawing (η), the part (θ), and the production line (δ), below the assembly process (c); and the part (κ) and the production tool (λ), below the treatment process (e), in series (refer to Figs. 9 and 11).

When integrating the two-term relationships and the three-term relationships, and building the route connected in series from the higher level toward the lower level, the computer 11 incorporates each of the production factors extracted from the factor-type database 17 in the route, and creates a production system in which a plurality of production factors of various types are connected in series from a superordinate concept toward a subordinate concept thereof (production system creating means). In the created production system, the shop (B) lies at the top, and the warehouse (D), the product (F), the inspection process (a), the assembly process (c), the treatment process (e), the inspection standard (α), the assembly drawing (η), the part (θ), the production line (δ), the part (κ), and the production tool (λ) are located in a line toward the lower level therefrom, as shown in Fig. 11. The computer 11 stores the created production system of the article (1) in the storage unit or the hard disk (production system storing means), and outputs the created production system of the article (1) via the output device (production system outputting means).

The production system creating system 10 and the production system creating method integrates a plurality of two-term relationships of various types extracted from the relational database 18, integrates a plurality of three-term relationships of various types extracted from the relational database 18, integrates a plurality of two-term relationships of various types and a plurality of three-term relationships of various types, and connects in series a plurality of production factors of various types extracted from the factor-type database 17 from a superordinate concept toward a subordinate concept thereof according to the integrated two-term relationship, the integrated three-term relationship, and the integrated two-term/three-term relationship to thereby create the production system corresponding to each article, so that utilizing the two-term relationship formed of the first and second production factors and the three-term relationship formed of the first to third production factors makes it possible to create various production systems in which the production factors of different types are freely combined.

It is to be noted that if the production system is built only by the two-term relationship, a plurality of second production factors whose factor-type is different from that of the first production factor are linked just below the first production factor, so that a plurality of different production systems may be built to the same article, thus not allowing the production system for every specific condition to be represented. However, in the production system creating system 10 and the production system creating method, the specific second production factor is linked just below the first production factor and the specific third production factor is also linked just below the second production factor, by adding the three-term relationship to the two-term relationship, thus allowing only the production systems of the specific condition corresponding to various articles to be built using these production factors.

The production system creating system 10 and the production system creating method refers to the factor-type numbers of the first and second production factors of the two-term relationship and the factor-type numbers of the first to third production factors of the three-term relationship, extracted from the relational database 18, combines the production factors of the same factor-type number among these two-term relationships to thereby integrate a plurality of two-term relationships of various types thus extracted, combines the production factors of the same factor-type number among these three-term relationships to thereby integrate a plurality of three-term relationships of various types thus extracted, and combines the production factors of the same factor-type number among the two-term relationship and the three-term relationship to thereby integrate the two-term relationship and the three-term relationship, so that it is possible to reliably combine the mutually related production factors with each other, thus allowing the production system in which the production factors serving as the technical information of the article are connected in series to be reliably created.

In the production system creating system 10 and the production system creating method, each of the production factors is classified into the first to fifth factor-type databases 19, 20, 21, 22, and 23 based on the first to fifth factor-type numbers set to them, and is stored in these factor-type databases 19, 20, 21, 22, and 23, so that it is possible to group each of the production factors that can be shared by each of the departments 12, 13, 14, and 15, for every factor-type according to the first to fifth factor-type databases 19, 20, 21, 22, and 23 to thereby manage them in an integrated manner. In addition, a plurality of two-term relationships of various types and a plurality of three-term relationships of various types are managed in an integrated manner using the relational database 18, so that it is possible to create the production system that can be shared by each of the departments based on each of the production factors stored in the first to fifth factor-type databases 19, 20, 21, 22, and 23, and the two-term relationships and the three-term relationships stored in the relational database 18 while each of the departments 12, 13, 14, and 15 sharing the first to fifth factor-type databases 19, 20, 21, 22, and 23 and the relational database 18, thus allowing the production system to be managed in an integrated manner, and also allowing the created production system to be provided to each department in real time. For that reason, it is not necessary for each of the departments 12, 13, 14, and 15 to individually manage each production factor, and for each of the departments 12, 13, 14, and 15 to independently create the production system, thus making it possible to omit useless time and labor due to each of the departments 12, 13, 14, and 15 creating and managing a huge number of production systems which are different from each other.

The production system creating system 10 and the production system creating method output the departmental production system formed only of the required production factors for each of the departments 12, 13, 14, and 15 based on the first to fourth departmental numbers (first to n-th departmental numbers) individually set to the production factors, so that the production factor which is not required to be displayed to each of the departments 12, 13, 14, and 15 may be omitted from the production system, thus allowing the production system having high utility value and ease-of-use for each of the departments 12, 13, 14, and 15 to be provided to the department in real time. In the production system creating system 10 and the production system creating method, each of the departments 12, 13, 14, and 15 may utilize the production system formed only of production factors required for it, thus allowing the working efficiency of each of the departments 12, 13, 14, and 15 to be improved.

The production system creating system 10 and the production system creating method can manage the production factors in time series from the past toward the present by storing the start date of the production factor (point in time when the production factors create the production system) and the end date of the production factor (point in time when the production factors separate from the production system), and can manage the two-term relationship and the three-term relationship in time series from the past toward the present by storing the start date of the two-term/three-term relationship (point in time when the two-term relationship creates the production system) and the end date of the two-term/three-term relationship (point in time when the two-term relationship separates from the production system), thus allowing the production system not only at the present time but also at an arbitrary point in time in the past to be created at present.

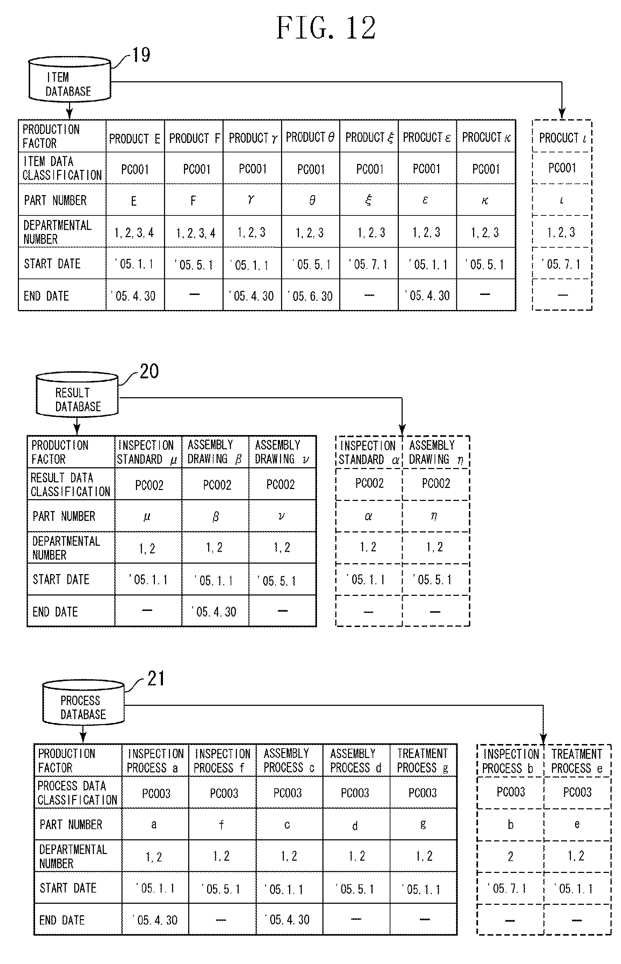

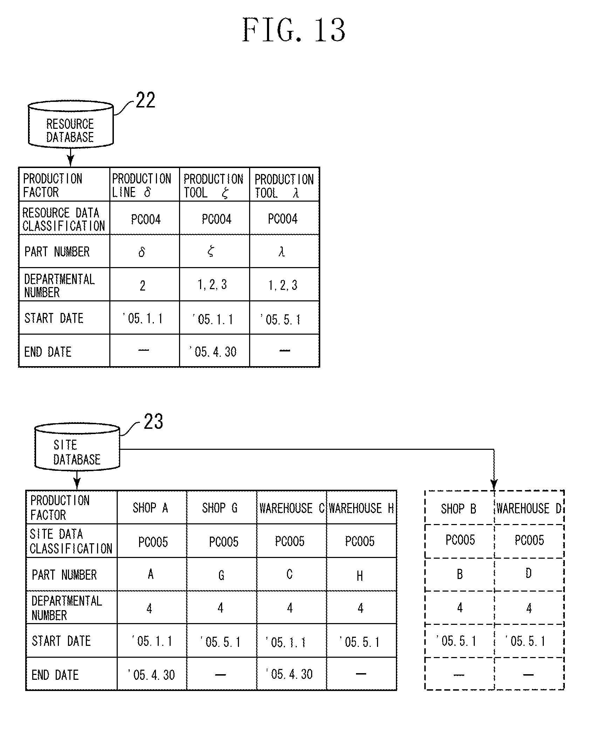

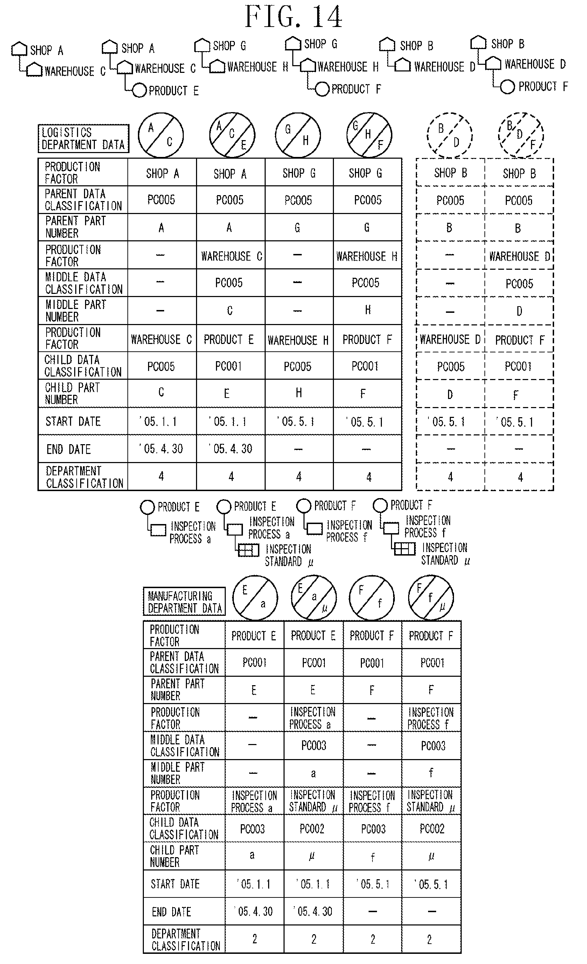

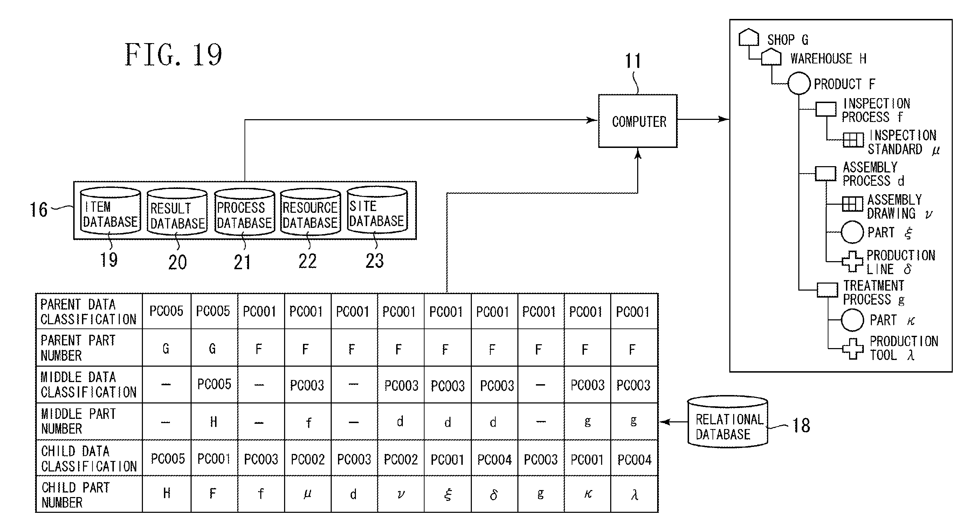

Figs. 12 and 13 are views showing another example of a plurality of production factors of various types stored in the factor-type database 17, while Fig. 14 through Fig. 18 are views showing another example of the two-term relationship and the three-term relationship between and among the production factors stored in the relational database 18. Fig. 19 is a view for explaining another example of the relation integration performed by the computer 11. Fig. 12 through Fig. 19 shall show the state on September 30, 2005.

In the embodiments shown in Fig. 12 through Fig. 19, a part of the production factors stored in the main file of the factor-type database 17 is changed (altered) going back to the past (first alteration means), and a part of the first production factors or the second production factors stored in the main file of the relational database 18 is changed (altered) going back to the past (second alteration means). Moreover, the start date of the production factor (point in time when the production factors create the production system) and the end date of the production factor (point in time when the production factors separate from the production system) are changed going back to the past (first change means), and the start date of the two-term/three-term relationship (point in time when the two-term/three-term relationship creates the production system) and the end date of the two-term/three-term relationship (point in time when the two-term/three-term relationship separates from the production system) are changed going back to the past (second alteration means). In this system 10, each of the production factors stored in the factor-type database 17 can be altered going back to the past via the input device, and at least one of the first production factor, second production factor, and third production factor stored in the relational database 18 can be altered going back to the past. The alteration of the production factors and the alteration of the first to third production factors include change, addition, and deletion thereof.

One example of the change of the production factors stored in the factor-type database 17 will be described using a case in which the shop (B) is changed to the shop (G); the warehouse (D), to the warehouse (H); the inspection process (b), to the inspection process (f); the treatment process (e), to the treatment process (g); the inspection standard (α), to the inspection standard (µ); the assembly drawing (η), to the assembly drawing (v); and the part (l), to the part (ζ), from the example shown in Fig. 1 as an example as follows. It is to be noted that as for the start date of the production factor and the end date of the production factor, the end date of the inspection process (a) is changed from June 30 to April 30; the end date of the assembly process (c), from June 30 to April 30; and the start date of the assembly process (d), from July 1 to May 1. The start date of the two-term/three-term relationship and the end date of the two-term/three-term relationship are changed with the changes of these production factors and two-term/three-term relationships, and the start date and the end date of the production factor.

When a production factor change is selected from the items displayed on the display, a production factor change area, a department classification input area, a start date input area of the production factor, and an end date of the production factor input area will be displayed on the display. The shop (B) before the change is inputted into an old site area (1) among the production factor change areas, the shop (G) after the change and its part number (G) (factor-type identification number) are inputted into a new site area (1) among them, and the departmental number (4) is inputted into the department classification input area corresponding to the new site area (1). The warehouse (D) before the change is inputted into an old site area (2) among the production factor change areas, the warehouse (H) after the change and its part number (H) (factor-type identification number) are inputted into a new site area (2) among them, and the departmental number (4) is inputted into the department classification input area corresponding to the new site area (2). Next, the start date and the end date of the shop (G) and the warehouse (H) are inputted into the start date input area and the end date input area via the input device, respectively.

When a change instruction of the production factor is inputted from the input device after inputting these data, the computer 11 rewrites the data of the shop (B) stored in the main file of the site database 23 to the data of the shop (G), and rewrites the warehouse data (D) to the warehouse data (H). The computer 11 stores in the main file of the site database 23 the shop data and the warehouse data, such as the site data classification (PC005) and the departmental number (4) of the shop (G) and the warehouse (H), the part numbers (G) and (H) for specifying the shop (G) and the warehouse (H), the start date of the shop (G) and the warehouse (H) (May 1, 2005), the end date (-) of the shop (G) and the warehouse (H), and the like. The shop data includes contents of the shop (G) (name of the shop, location of the shop, and the like), while the warehouse data includes contents of the warehouse (H) (warehouse name, warehouse location, and the like). The computer 11 stores the data of the shop (B) and the warehouse (D) in a subfile of the site database 23.

The inspection process (b) before the change is inputted into an old process area (1) among the production factor change areas, the inspection process (f) after the change and its part number (f) (factor-type identification number) are inputted into a new process area (1) among them, and the departmental numbers (1, 2) are inputted into the department classification input area corresponding to the new process area (1). Next, the start date and the end date of the inspection process (f) are inputted into the start date input area and the end date input area via the input device, respectively. The treatment process (e) before the change is inputted into an old process area (2) among the production factor change areas, the treatment process (g) after the change and its part number (g) (factor-type identification number) are inputted into a new process area (2) among them, and the departmental numbers (1, 2) are inputted into the department classification input area corresponding to the new process area (2). Next, the start date and the end date of the treatment process (g) are inputted into the start date input area and the end date input area via the input device, respectively.

When the change instruction of the production factor is inputted from the input device, the computer 11 rewrites the data of the inspection process (b) stored in the main file of the process database 21 to the data of the inspection process (f), and rewrites the data of the treatment process (e) to the data of the treatment process (g). The computer 11 stores in the main file of the process database 21 the inspection process data and the treatment process data, such as the process data classification (PC003) and the departmental numbers (1, 2) of the inspection process (f) and the treatment process (g), part numbers (f) and (g) for specifying the inspection process (f) and the treatment process (g), the start date of the inspection process (f) and the treatment process (g) (May 1, 2005), the end date (-) of the inspection process (f) and the treatment process (g), and the like. The inspection process data includes contents of the inspection process (f) (details of the inspection process, inspection location, instruction for use, and the like), while the treatment process data includes contents of the treatment process (g) (details of the treatment process, treatment location, instruction for use, and the like). The computer 11 stores the data of the inspection process (b) and the treatment process (e) in the subfile of the process database 21. Incidentally, the departmental number of the inspection process is changed from (2) to (1, 2).

The inspection standard (α) before the change is inputted into an old result area (1) among the production factor change areas, the inspection standard (µ) after the change and its part number (µ) (factor-type identification number) are inputted into a new result area (1) among them, and the departmental numbers (1, 2) are inputted into the department classification input area corresponding to the new result area (1). Next, the start date and the end date of the inspection standard (µ) are inputted into the start date input area and the end date input area via the input device, respectively. The assembly drawing (η) before the change is inputted into an old result area (2) among the production factor change areas, the assembly drawing (v) after the change and its part number (v) (factor-type identification number) are inputted into a new result area (2) among them, and the departmental numbers (1, 2) are inputted into the department classification input area corresponding to the new process area (2). Next, the start date and the end date of assembly drawing (v) are inputted into the start date input area and the end date input area via the input device, respectively.

When the change instruction of the production factor is inputted from the input device, the computer 11 rewrites the data of the inspection standard (α) stored in the main file of the result database 20 to the data of the inspection standard (µ), and rewrites the data of the assembly drawing (η) to the data of the assembly drawing (v). The computer 11 stores in the result database 20 the inspection standard data and the assembly drawing data, such as the result data classification (PC002) and the departmental numbers (1, 2) of the inspection standard (µ) and the assembly drawing (v), the part numbers (µ) and (v) for specifying the inspection standard (µ) and the assembly drawing (v), the start date (May 1, 2005) of the inspection standard (µ) and the assembly drawing (v), the end date (-) of the inspection standard (µ) and the assembly drawing (v), and the like. The inspection standard data includes contents of the inspection standard (µ) (details of the standard, creating department, inspection illustration, and the like), while the assembly drawing data includes contents of the assembly drawing (v) (details of the drawing, creating department, instruction for use, and the like). The computer 11 stores the data of the inspection standard (α) and the assembly drawing (η) in the subfile of the result database 20.

The part (l) before the change is inputted into an old item area (1) among the production factor change areas, the part (ζ) after the change and its part number (ξ) (factor-type identification number) are inputted into a new item area (1) among them, and the departmental numbers (1, 2, 3) are inputted into the department classification input area corresponding to the new result area (1). Next, the start date and the end date of the part (ξ) are inputted into the start date input area and the end date input area via the input device, respectively. When the change instruction of the production factor is inputted from the input device, the computer 11 rewrites the data of the part (l) stored in the main file of the item database 19 to the data of the part (ξ). The computer 11 stores in the item database 19 the part data, such as the item data classification (PC001) and the departmental numbers (1, 2, 3) of the part (ξ), the part number (ξ) for specifying the part (ξ), the start date (May 1, 2005) of the part (ξ), the end date (-) of the part (ξ), and the like. The part data includes contents of the part (ξ) (part name, producing district, instruction for use, durable years, amount of money, delivery date, and the like). The computer 11 stores the data of the part (l) in the subfile of the item database 19.

One example of the change of the first to third production factors stored in the relational database 18 will be described using a case in which the shop (B) (first production factor) is changed to the shop (G) (first production factor); the warehouse (D) (second production factor), to the warehouse (H) (second production factor); the inspection process (b) (second production factor), to the inspection process (f) (second production factor); the treatment process (e) (second production factor), to the treatment process (g) (second production factor); the inspection standard (α) (third production factor), to the inspection standard (µ) (third production factor); the assembly drawing (η) (third production factor), to the assembly drawing (v) (third production factor); and the part (l) (third production factor), to the part (ξ) (third production factor) as an example as follows. When a relation change is selected from the items displayed on the display, a two-term relationship change area, a relation start date input area of the two-term relationship, a relation end date input area of the two-term relationship, a three-term relationship change area, a relation start date input area of the three-term relationship, and a relation end date input area of the three-term relationship will be displayed on the display.

Among the two-term relationship change areas, the shop (B) before the change is inputted into an old first production factor area (1) and the shop (G) after the change is inputted into a new first production factor area (1). Further, the part number (G) (factor-type identification number) for specifying the shop (G) as the parent part number and the site number (PC005) (fifth factor-type number) as the parent data classification are inputted, and the department classification (4) is inputted into the department classification input area corresponding to the new first production factor area (1). The warehouse (D) before the change is inputted into the old second production factor area (1), and the warehouse (H) after the change is inputted into the new second production factor area (1). Further, the part number (H) (factor-type identification number) for specifying the warehouse (H) as the child part number, and the site number (PC005) (fifth factor-type number) as the child data classification are inputted, and the department classification (4) is inputted into the department classification input area corresponding to the new second production factor area (1). Once these data are inputted, the computer 11 refers to the start dates and the end dates of the shop (B), the shop (G), the warehouse (D), and the warehouse (H) stored in the factor-type database 17, and displays the two-term relationship between the shop (B) and the warehouse (D) before the change, a two-term relationship between the shop (G) and the warehouse (H) after the change, and the relation start date input area and the relation end date input area of the two-term relationship between the shop (G) and the warehouse (H) on the display. The start date (May 1, 2005) and the end date (-) of the two-term relationship between the shop (G) and the warehouse (H) are inputted into the relation start date input area and the relation end date input area, respectively. When the change instruction of the two-term relationship and the three-term relationship is inputted from the input device after these data are inputted, the computer 11 refers to the start date and the end date of the two-term relationship between the shop (B) and the warehouse (D), and also refers to the start date and the end date of the two-term relationship between the shop (G) and the warehouse (H), and changes the two-term relationship between the shop (B) and the warehouse (D) stored in the main file of the relational database 18 to the two-term relationship between the shop (G) and the warehouse (H).

When the two-term relationship is changed, the part number (G) for specifying the shop (G) as the parent part number (first production factor), the site number (PC005) (fifth factor-type number) which is the parent data classification of the shop (G), the part number (H) for specifying the warehouse (H) as the child part number (second production factor), and the site number (PC005) (fifth factor-type number) which is the child data classification of the warehouse (H) are stored in the relational database 18, and the start date (May 1, 2005) and the end date (-) of the two-term relationship between the shop (G) and the warehouse (H) are stored therein. It is to be noted that when the two-term relationship between the shop (B) and the warehouse (D) is changed to the two-term relationship between the shop (G) and the warehouse (H), the computer 11 extracts the three-term relationship among the shop (B), the warehouse (D), and the product (F) corresponding to the two-term relationship before the change, refers to the start dates and the end dates of the shop (B), the shop (G), the warehouse (D), the warehouse (H), and the product (F) stored in the factor-type database 17, and automatically changes the three-term relationship among the shop (B), the warehouse (D), and the product (F) to a three-term relationship among the shop (G), the warehouse (H), and the product (F).

When the three-term relationship is changed, the part number (G) for specifying the shop (G) as the parent part number (first production factor), the site number (PC005) (fifth factor-type number) which is the parent data classification of the shop (G), the part number (H) for specifying the warehouse (H) as the middle part number (second production factor), the site number (PC005) (fifth factor-type number) which is the middle data classification of the warehouse (H), the part number (F) for specifying the product (F) as the child part number (third production factor), and the item number (PC001) which is the child data classification of the product (F) (first factor-type number) are stored in the relational database 18. The start date (May 1, 2005) and the end date (-) of the three-term relationship among the shop (G), the warehouse (H), and the product (F) are stored in the relational database 18.

The two-term relationship between the shop (G) and the warehouse (H), and the three-term relationship among the shop (G), the warehouse (H), and the product (F) are treated as the data of the logistics department 15 based on the department classification (4). The three-term relationship among the shop (B), the warehouse (D), and the product (F), and the two-term relationship between the shop (B), and the warehouse (D) serving as a basis therefor are stored in a subfile of the relational database 18, as shown in Fig. 14 by the dotted lines. In the relational database 18, the shop (G) and the warehouse (H) are connected to each other, and the shop (G) and the warehouse (H) are linked with each other based on the two-term relationship; and the shop (G), the warehouse (H), and the product (F) are connected to each other, and the shop (G), the warehouse (H), and the product (F) are linked with each other based on the three-term relationship.

The inspection process (b) before the change is inputted into the old second production factor area (2) among the two-term relationship change areas, and the inspection process (f) after the change is inputted into the new second production factor area (2) among them. Further, the part number (f) (factor-type identification number) for specifying the inspection process (f) as the child part number, and the process number (PC003) (third factor-type number) as the child data classification are inputted, and the department classification (2) is inputted into the department classification input area corresponding to the new second production factor area (2). The inspection standard (α) before the change is inputted into the old third production factor area (1) among the three-term relationship change areas, and the inspection standard (µ) after the change is inputted into the new third production factor area (1) among them. Further, the part number (µ) (factor-type identification number) for specifying the inspection standard (µ) as the child part number, and the result number (PC002) (second factor-type number) as the child data classification are inputted, and the department classification (2) is inputted into the department classification input area corresponding to the new third production factor area (1). Once these data are inputted, the computer 11 refers to the start dates and the end dates of the product (E), the product (F), the inspection process (b), the inspection process (f), the inspection standard (α), and the inspection standard (µ) stored in the factor-type database 17, and displays the two-term relationship before the change, the three-term relationship before the change, the two-term relationship after the change, the three-term relationship after the change, and the relation start date input area and the relation end date input area of the two-term relationship and the three-term relationship after the change on the display.

The two-term relationship before the change is the two-term relationship between the product (F) and the inspection process (b), and the two-term relationship after the change is a two-term relationship between the product (F) and the inspection process (f). The three-term relationship before the change is the three-term relationship among the product (E), the inspection process (a), and the inspection standard (α), the three-term relationship among the product (F), the inspection process (a), and the inspection standard (α), and the three-term relationship among the product (F), the inspection process (b), and the inspection standard (α), and the three-term relationship after the change is a three-term relationship among the product (F), the inspection process (a), and the inspection standard (µ) and a three-term relationship among the product (F), the inspection process (f), and the inspection standard (µ). The start date (May 1, 2005) and the end date (-) of the two-term relationship between the product (F) and the inspection process (f) are inputted into the relation start date input area and the relation end date input area, respectively, and the start date (May 1, 2005) and the end date (-) of the three-term relationship among the product (F), the inspection process (a), and the inspection standard (µ) and the three-term relationship among the product (F), the inspection process (f), and the inspection standard (µ) are inputted thereinto, respectively.

When the change instruction of the two-term relationship and the three-term relationship is inputted from the input device after these data are inputted, the computer 11 refers to the start date and the end date of the two-term relationship between the product (F) and the inspection process (b) and also refers to the start date and the end date of the two-term relationship between the product (F) and the inspection process (f), and changes the two-term relationship between the product (F) and the inspection process (b) stored in the main file of the relational database 18 to the two-term relationship between the product (F) and the inspection process (f). When the two-term relationship is changed, the part number (F) for specifying the product (F) as the parent part number (first production factor), the item number (PC001) (first factor-type number) which is the parent data classification of the product (F), the part number (f) for specifying the inspection process (f) as the child part number (second production factor), and the process number (PC003) (third factor-type number) which is the child data classification of the inspection process (f) are stored in the relational database 18, and the start date (May 1, 2005) and the end date (-) of the two-term relationship between the product (F) and the inspection process (f) are stored therein.

The computer 11 refers to the start dates and the end dates of the three-term relationship among the product (E), the inspection process (a), and the inspection standard (α), the three-term relationship among the product (F), the inspection process (a), and the inspection standard (α), and the three-term relationship among the product (F), the inspection process (b), and the inspection standard (α) and also refers to the start dates and the end dates of the three-term relationship among the product (F), the inspection process (a), and the inspection standard (µ) and the three-term relationship among the product (F), the inspection process (f), and the inspection standard (µ), changes the three-term relationship among the product (E), the inspection process (a), and the inspection standard (α) to the three-term relationship among the product (F), the inspection process (a), and the inspection standard (µ), and changes the three-term relationship among the product (F), the inspection process (a), and the inspection standard (α) and the three-term relationship among the product (F), the inspection process (b), and the inspection standard (α) to the three-term relationship among the product (F), the inspection process (f), and the inspection standard (µ).

When the three-term relationship is changed, the part number (E) for specifying the product (E) as the parent part number (first production factor), the item number (PC001) (first factor-type number) which is the parent data classification of the product (E), the part number (a) for specifying the inspection process (a) as the middle part number (second production factor), the process number (PC003) (third factor-type number) which is the middle data classification of the inspection process (a), the part number (µ) for specifying the inspection standard (µ) as the child part number(third production factor), and the result number (PC002) (second factor-type number) which is the child data classification of the inspection standard (µ) are stored in the relational database 18, and the start date (January 1, 2005) and the end date (April 30, 2005) of the three-term relationship among the product (F), the inspection process (a), and the inspection standard (µ) are stored therein. Further, the part number (F) for specifying the product (F) as the parent part number (first production factor), the item number (PC001) (first factor-type number) which is the parent data classification of the product (F), the part number (f) for specifying the inspection process (f) as the middle part number (second production factor), the process number (PC003) (third factor-type number) which is the middle data classification of the inspection process (f), the part number (µ) for specifying the inspection standard (µ) as the child part number(third production factor), and the result number (PC002) (second factor-type number) which is the child data classification of the inspection standard (µ) are stored in the relational database 18, and the start date (May 1, 2005) and the end date (-) of the three-term relationship among the product (F), the inspection process (f), and the inspection standard (µ) are stored therein.

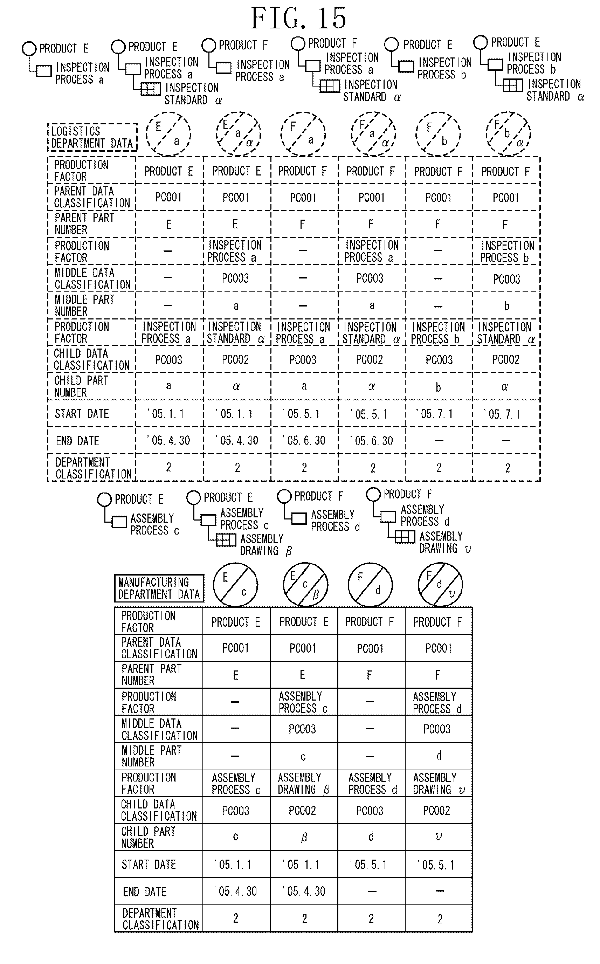

The two-term relationship between the product (F) and the inspection process (f), the three-term relationship among the product (F), the inspection process (a), and the inspection standard (µ), and the three-term relationship among the product (F), the inspection process (f), and the inspection standard (µ) are treated as the data of the manufacturing department 13 based on the department classification (2). The three-term relationship among the product (E), the inspection process (a), and the inspection standard (α), and the two-term relationship between the product (E) and the inspection process (a) serving as a basis therefor; the three-term relationship among the product (F), the inspection process (a), and the inspection standard (α) and the two-term relationship between the product (F) and the inspection process (a) serves as a basis therefor; and the three-term relationship among the product (F), the inspection process (b), and the inspection standard (α), and the two-term relationship between the product (F) and the inspection process (b) serving as a basis therefor are stored in the subfile of the relational database 18, as shown in Fig. 15 by the dotted lines. In the relational database 18, the product (E) and the inspection process (a) are connected to each other, and the product (E) and the inspection process (a) are linked with each other based on the two-term relationship; and the product (E), the inspection process (a), and the inspection standard (µ) are connected to each other, and the product (E), the inspection process (a), and the inspection standard (µ) are linked with each other based on the three-term relationship. Further, the product (F) and the inspection process (f) are connected to each other, and the product (F) and the inspection process (f) are linked with each other based on the two-term relationship; and the product (F), the inspection process (f), and the inspection standard (µ) are connected to each other, and the product (F), the inspection process (f), and the inspection standard (µ) are linked with each other based on the three-term relationship.

The assembly drawing (η) before the change is inputted into the old third production factor area (2) among the three-term relationship change area, and the assembly drawing (v) after the change is inputted into the new third production factor area (2) among them. Further, the part number (v) (factor-type identification number) for specifying the assembly drawing (v) as the child part number, and the result number (PC002) (second factor-type number) as the child data classification are inputted, and the department classification (2) is inputted into the department classification input area corresponding to the new third production factor area (2). Once these data are inputted, the computer 11 refers to the start dates and the end dates of the product (E), the product (F), the assembly process (c), the assembly process (d), the assembly drawing (β), and assembly drawing (v) stored in the factor-type database 17, and displays the three-term relationship before the change, the three-term relationship after the change, and the relation start date input area and the relation end date input area of the three-term relationship after the change on the display.

The three-term relationship before the change is the three-term relationship among the product (F), the assembly process (c), and the assembly drawing (η) and the three-term relationship among the product (F), the assembly process (d), and the assembly drawing (η), and the three-term relationship after the change is a three-term relationship among the product (E), the assembly process (c), and the assembly drawing (β) and a three-term relationship among the product (F), the assembly process (d), and the assembly drawing (v). The start date (January 1, 2005) and the end date (April 30, 2005) of the three-term relationship among the product (E), the assembly process (c), and the assembly drawing (β) are inputted into the relation start date input area and the relation end date input area, respectively, and the start date (May 1, 2005) and the end date (-) of the three-term relationship among the product (F), the assembly process (d), and the assembly drawing (v) are inputted thereinto, respectively.

When the change instruction of the two-term relationship and the three-term relationship is inputted from the input device after these data are inputted, the computer 11 refers to the start date and the end date of the two-term relationship between the product (E) and the assembly process (c) and also refers to the start date and the end date of the two-term relationship between the product (F) and the assembly process (d), changes the end date of the two-term relationship between the product (E) and the assembly process (c) stored in the main file of the relational database 18 from June 30, 2005 to April 30, 2005, and changes the start date of the two-term relationship between the product (F) and the assembly process (d) from July 1, 2005 to May 1, 2005.

The computer 11 refers to the start dates and the end dates of the three-term relationship among the product (F), the assembly process (c), and the assembly drawing (η), and the three-term relationship among the product (F), the assembly process (d), and the assembly drawing (η) and also refers to the start dates and the end dates of the three-term relationship among the product (E), the assembly process (c), and the assembly drawing (β), and the three-term relationship among the product (F), the assembly process (d), and assembly drawing (v), changes the three-term relationship among the product (F), the assembly process (c), and the assembly drawing (η) to the three-term relationship among the product (E), the assembly process (c), and the assembly drawing (β), and changes the three-term relationship among the product (F), the assembly process (d), and the assembly drawing (η) to the three-term relationship among the product (F), the assembly process (d), and the assembly drawing (v).

When the three-term relationship is changed, the part number (E) for specifying the product (E) as the parent part number (first production factor), the item number (PC001) (first factor-type number) which is the parent data classification of the product (E), the part number (c) for specifying the assembly process (c) as the middle part number (second production factor), the process number (PC003) (third factor-type number) which is the middle data classification of the assembly process (c), the part number (β) for specifying the assembly drawing (β) as the child part number (third production factor), and the result number (PC002) (second factor-type number) which is the child data classification of the assembly drawing (β) are stored in the relational database 18, and the start date (January 1, 2005) and the end date (April 30, 2005) of the three-term relationship among the product (E), the assembly process (c), and the assembly drawing (β) are stored therein. Further, the part number (F) for specifying the product (F) as the parent part number (first production factor), the item number (PC001) (first factor-type number) which is the parent data classification of the product (F), the part number (d) for specifying the assembly process (d) as the middle part number (second production factor), the process number (PC003) (third factor-type number) which is the middle data classification of the assembly process (d), the part number (v) for specifying the assembly drawing (v) as the child part number (third production factor), and the result number (PC002) (second factor-type number) which is the child data classification of the assembly drawing (v) are stored in the relational database 18, and the start date (May 1, 2005) and the end date (-) of a three-term relationship among the product (F), the assembly process (d), and assembly drawing (v) are stored therein.

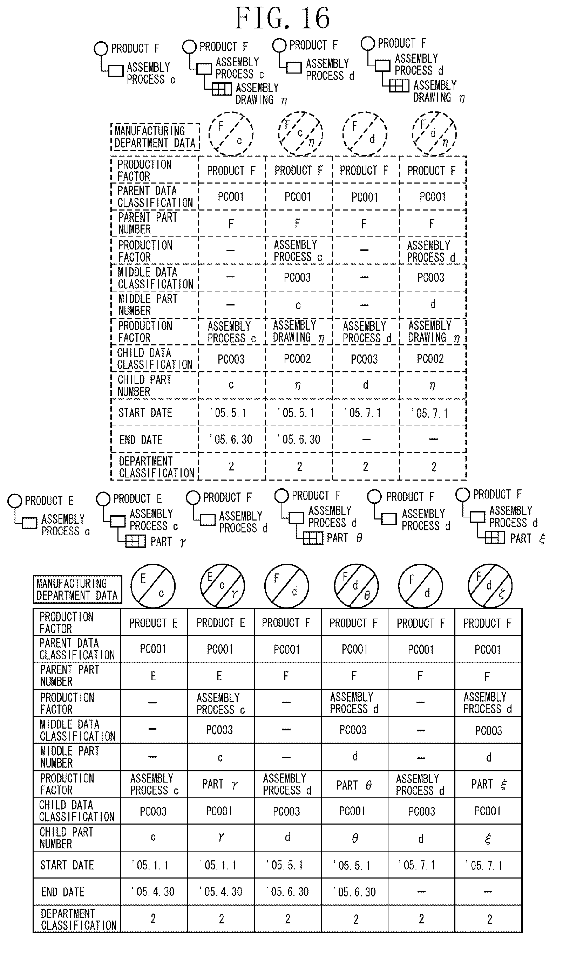

The three-term relationship among the product (E), the assembly process (c), and the assembly drawing (β) and the three-term relationship among the product (F), the assembly process (d), and assembly drawing (v) are treated as the data of the manufacturing department 13 based on the department classification (2). The three-term relationship among the product (F), the assembly process (c), and the assembly drawing (η), and the two-term relationship between the product (F) and the assembly process (c) serving as a basis therefor; and the three-term relationship among the product (F), the assembly process (d), and the assembly drawing (η), and the two-term relationship between the product (F) and the assembly process (d) serving as a basis therefor are stored in the subfile of the relational database 18, as shown in Fig. 16 by the dotted lines. In the relational database, the product (E) and the assembly process (c) are connected to each other, and the product (E) and the assembly process (c) are linked with each other based on the two-term relationship; and the product (E), the assembly process (c), and the assembly drawing (β) are connected to each other, and the product (E), the assembly process (c), and the assembly drawing (β) are linked with each other based on the three-term relationship. Further, the product (F) and the assembly process (d) are connected to each other, and the product (F) and the assembly process (d) are linked with each other based on the two-term relationship; and the product (F), the assembly process (d), and assembly drawing (v) are connected to each other, and the product (F), the assembly process (d), and assembly drawing (v) are linked with each other based on the three-term relationship.

The part (l) before the change is inputted into the old third production factor area (3) among the three-term relationship change area, and the part (ξ) after the change is inputted into new third production factor area (3) among them. Further, the part number (ξ) (factor-type identification number) for specifying the part (ξ) as the child part number, and the item number (PC001) (first factor-type number) as the child data classification are inputted, and the department classification (2) is inputted into the department classification input area corresponding to new third production factor area (3). Once these data are inputted, the computer 11 refers to the start dates and the end dates of the product (E), the product (F), the assembly process (c), the assembly process (d), the parts (γ), (θ), (l), and (ξ) stored in the factor-type database 17, and displays the three-term relationship before the change, the three-term relationship after the change, and the relation start date input area and the relation end date input area of the three-term relationship after the change on the display.

The three-term relationship before the change is the three-term relationship among the product (F), the assembly process (c), and the part (θ) and the three-term relationship among the product (F), the assembly process (d), and the part (l), and the three-term relationship after the change is a three-term relationship among the product (E), the assembly process (c), and the part (γ), a three-term relationship among the product (F), the assembly process (d), and the part (θ), and a three-term relationship among the product (F), the assembly process (d), and the part (ξ). The start date (January 1, 2005) and the end date (April 30, 2005) of the three-term relationship among the product (E), the assembly process (c), and the part (γ) are inputted into the relation start date input area and the relation end date input area, respectively, the start date (May 1, 2005) and the end date (June 30, 2005) of the three-term relationship among the product (F), the assembly process (d), and the part (θ) are inputted thereinto, respectively, and the start date (July 1, 2005) and the end date (-) of the three-term relationship among the product (F), the assembly process (d), and the part (ξ) are inputted thereinto, respectively.

When the change instruction of the two-term relationship and the three-term relationship is inputted from the input device after these data are inputted, the computer 11 refers to the start date and the end date of the two-term relationship between the product (F) and the assembly process (c) and also refers to the start date and the end date of the two-term relationship between the product (F) and the assembly process (d), and changes the two-term relationship between the product (F) and the assembly process (c) to the two-term relationship between the product (F) and an assembly process (d). The computer 11 refers to the start dates and the end dates of the three-term relationship among the product (F), the assembly process (c), and the part (θ), the three-term relationship among the product (F), the assembly process (d), and the part (l), the three-term relationship among the product (E), the assembly process (c), and the part (γ), the three-term relationship among the product (F), the assembly process (d), and the part (θ), and the three-term relationship among the product (F), the assembly process (d), and the part (ξ), changes the three-term relationship among the product (F), the assembly process (c), and the part (θ) to the three-term relationship among the product (F), an assembly process (d), and the part (θ), and changes the three-term relationship among the product (F), the assembly process (d), and the part (l) to the three-term relationship among the product (F), the assembly process (d), and the part (ξ).

When the two-term relationship is changed, the part number (F) for specifying the product (F) as the parent part number (first production factor), the item number (PC001) (first factor-type number) which is the parent data classification of the product (F), the part number (d) for specifying the assembly process (d) as the child part number (third production factor), and the process number (PC003) (third factor-type number) which is the child data classification of the assembly process (d) are stored in the relational database 18, and the start date (May 1, 2005) and the end date (June 30, 2005) of the two-term relationship between the product (F) and the assembly process (d) are stored therein. When the three-term relationship is changed, the part number (F) for specifying the product (F) as the parent part number (first production factor), the item number (PC001) (first factor-type number) which is the parent data classification of the product (F), the part number (d) for specifying the assembly process (d) as the middle part number (second production factor), the process number (PC003) (third factor-type number) which is the middle data classification of the assembly process (d), the part number (θ) for specifying the part (θ) as the child part number (third production factor), and the item number (PC001) (first factor-type number) which is the child data classification of the part (θ) are stored in the relational database 18, and the start date (January 1, 2005) and the end date (June 30, 2005) of the three-term relationship among the product (F), the assembly process (d), and the part (θ) are stored therein. Further, the part number (F) for specifying the product (F) as the parent part number (first production factor), the item number (PC001) (first factor-type number) which is the parent data classification of the product (F), the part number (d) for specifying the assembly process (d) as the middle part number (second production factor), the process number (PC003) (third factor-type number) which is the middle data classification of the assembly process (d), the part number (ξ) for specifying the part (ξ) as the child part number (third production factor), and the item number (PC001) (first factor-type number) which is the child data classification of the part (ξ) are stored in the relational database 18, and the start date (July 1, 2005) and the end date (-) of the three-term relationship among the product (F), the assembly process (d), and the part (ξ) are stored therein.

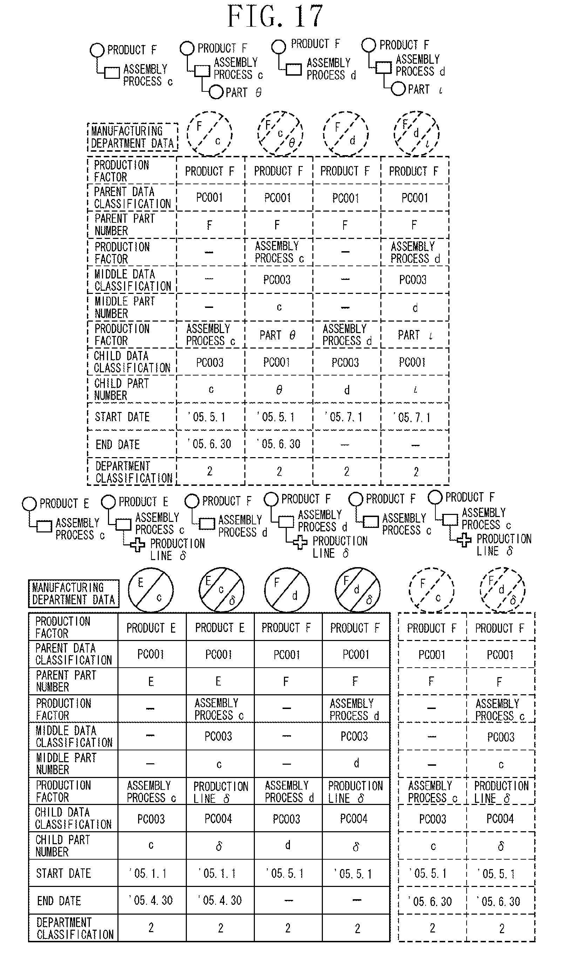

The two-term relationship between the product (F) and the assembly process (d), the three-term relationship among the product (F), the assembly process (d), and the part (θ), and the three-term relationship among the product (F), the assembly process (d), and the part (ξ) are treated as the data of the manufacturing department based on the department classification (2). The three-term relationship among the product (F), the assembly process (c), and the part (θ), and the two-term relationship between the product (F) and the assembly process (c) serving as a basis therefor; and the three-term relationship among the product (F), the assembly process (d), and the part (l), and the two-term relationship between the product (F) and the assembly process (d) serving as a basis therefor are stored in the subfile of the relational database 18, as shown in Fig. 17 by the dotted lines. In the relational database 18, the product (F) and the assembly process (d) are connected to each other, and the product (F) and the assembly process (d) are linked with each other based on the two-term relationship; and the product (F), the assembly process (d), and the part (θ) are connected to each other, and the product (F), the assembly process (d), and the part (θ) are linked with each other based on the three-term relationship. Further, in the relational database, the product (F) and the assembly process (d) are connected to each other, and the product (F) and the assembly process (d) are linked with each other based on the two-term relationship; and the product (F), the assembly process (d), and the part (ξ) are connected to each other, and the product (F), the assembly process (d), and the part (ξ) are linked with each other based on the three-term relationship.

The computer 11 deletes the three-term relationship among the product (F), the assembly process (c), and the production line (δ), and the two-term relationship between the product (F) and the assembly process (c) serving as a basis therefor from the relational database 18 with the change of the start date and the end date of the assembly process (c) and the assembly process (d), and changes the start date of the three-term relationship among the product (F), the assembly process (d), and the production line (δ), and the two-term relationship between the product (F) and the assembly process (d) serving as a basis therefor from July 1, 2005 to May 1, 2005. The three-term relationship among the product (F), the assembly process (c), and the production line (δ), and the two-term relationship between the product (F) and the assembly process (c) serving as a basis therefor are stored in the subfile of the relational database 18, as shown in Fig. 17 by the dotted lines.

The treatment process (e) before the change is inputted into the old second production factor area (3) among the two-term relationship change areas, and the treatment process (g) after the change is inputted into the new second production factor area (3) among them. Further, the part number (g) (factor-type identification number) for specifying the treatment process (g) as the child part number, and the process number (PC003) (third factor-type number) as the child data classification are inputted, and the department classification (2) is inputted into the department classification input area corresponding to the new second production factor area (3). Once these data are inputted, the computer 11 refers to the start dates and the end dates of the product (E), the product (F), the treatment process (e), the treatment process (g), the parts (ε), (κ), and the production tools (ζ) and (λ) stored in the factor-type database 17, and displays the two-term relationship before the change, the three-term relationship before the change, the two-term relationship after the change, the three-term relationship after the change, and the relation start date input area and the relation end date input area of the two-term relationship and the three-term relationship after the change on the display.

The two-term relationship before the change is the two-term relationship between the product (E) and the treatment process (e) and the two-term relationship between the product (F) and the treatment process (e), and the two-term relationship after the change is a two-term relationship between the product (E) and the treatment process (g) and a two-term relationship between the product (F) and the treatment process (g). The three-term relationship before the change is the three-term relationship among the product (E), the treatment process (e), and the part (ε), the three-term relationship among the product (E), the treatment process (e), and the production tool (ζ), the three-term relationship among the product (F), the treatment process (e), and the part (κ), and the three-term relationship among the product (F), the treatment process (e), and the production tool (λ). The three-term relationship after the change is a three-term relationship among the product (E), the treatment process (g), and the part (ε), a three-term relationship among the product (E), the treatment process (g), and the production tool (ζ), a three-term relationship among the product (F), the treatment process (g), and the part (κ), and a three-term relationship among the product (F), the treatment process (g), and the production tool (λ).

The start date (January 1, 2005) and the end date (April 30, 2005) of the two-term relationship between the product (E) and the treatment process (g) are inputted into the relation start date input area and the relation end date input area, respectively, and the start date (May 1, 2005) and the end date (-) of the two-term relationship between the product (F) and the treatment process (g) are inputted thereinto, respectively. Further, the start date (January 1, 2005) and the end date (April 30, 2005) of the three-term relationship among the product (E), the treatment process (g), and the part (ε) are inputted thereinto, respectively, and the start date (January 1, 2005) and the end date (April 30, 2005) of the three-term relationship among the product (E), the treatment process (g), and the production tool (ζ) are inputted thereinto, respectively. The start date (May 1, 2005) and the end date (-) of the three-term relationship among the product (F), the treatment process (g), and the part (κ) are inputted thereinto, respectively, and the start date (May 1, 2005) and the end date (-) of the three-term relationship among the product (F), the treatment process (g), and the production tool (λ) are inputted thereinto, respectively.

When the change instruction of the two-term relationship and the three-term relationship is inputted from the input device after these data are inputted, the computer 11 refers to the start dates and the end dates of the two-term relationship between the product (E) and the treatment process (e) and the two-term relationship between the product (F) and the treatment process (e) and also refers to the start dates and the end dates of the two-term relationship between the product (E) and the treatment process (g) and the two-term relationship between the product (F) and the treatment process (g), changes the two-term relationship between the product (E) and the treatment process (e) to the two-term relationship between the product (E) and the treatment process (g), and changes the two-term relationship between the product (F) and the treatment process (e) to the two-term relationship between the product (F) and the treatment process (g). The computer 11 refers to the start dates and the end dates of the three-term relationship among the product (E), the treatment process (e), and the part (ε), the three-term relationship among the product (E), the treatment process (e), and the production tool (ζ), the three-term relationship among the product (F), the treatment process (e), and the part (κ), the three-term relationship among the product (F), the treatment process (e), and the production tool (λ), the three-term relationship among the product (E), the treatment process (g), and the part (ε), the three-term relationship among the product (E), the treatment process (g), and the production tool (ζ), the three-term relationship among the product (F), the treatment process (g), and the part (κ), and the three-term relationship among the product (F), the treatment process (g), and the production tool (λ), and changes the three-term relationships. The computer 11 changes the three-term relationship among the product (E), the treatment process (e), and the part (ε) to the three-term relationship among the product (E), the treatment process (g), and the part (ε), and changes the three-term relationship among the product (E), the treatment process (e), and the production tool (ζ) to the three-term relationship among the product (E), the treatment process (g), and the production tool (ζ). Further, it changes the three-term relationship among the product (F), the treatment process (e), and the part (κ) to the three-term relationship among the product (F), the treatment process (g), and the part (κ), and changes the three-term relationship among the product (F), the treatment process (e), and the production tool (λ) to the three-term relationship among the product (F), the treatment process (g), and the production tool (λ).

When the two-term relationship is changed, the part number (E) for specifying the product (E) as the parent part number (first production factor), the item number (PC001) (first factor-type number) which is the parent data classification of the product (E), the part number (g) for specifying the treatment process (g) as the child part number (third production factor), the process number (PC003) (third factor-type number) which is the child data classification of the treatment process (g) are stored in the relational database 18, and the start date (January 1, 2005) and the end date (April 30, 2005) of the two-term relationship between the product (E) and the treatment process (g) are stored therein. The part number (F) for specifying the product (F) as the parent part number (first production factor), the item number (PC001) (first factor-type number) which is the parent data classification of the product (F), the part number (g) for specifying the treatment process (g) as the child part number (third production factor), the process number (PC003) (third factor-type number) which is the child data classification of the treatment process (g) are stored in the relational database 18, and the start date (May 1, 2005) and the end date (-) of the two-term relationship between the product (F) and the treatment process (g) are stored therein.

When the three-term relationship is changed, the part number (E) for specifying the product (E) as the parent part number (first production factor), the item number (PC001) (first factor-type number) which is the parent data classification of the product (E), the part number (g) for specifying the treatment process (g) as the middle part number (second production factor), the process number (PC003) (third factor-type number) which is the middle data classification of the treatment process (g), the part number (ε) for specifying the part (ε) as the child part number (third production factor), and the item number (PC001) (first factor-type number) which is the child data classification of the part (ε) are stored in the relational database 18, and the start date (January 1, 2005) and the end date (April 30, 2005) of the three-term relationship among the product (E), the treatment process (g), and the part (ε) are stored therein. The part number (E) for specifying the product (E) as the parent part number (first production factor), the item number (PC001) (first factor-type number) which is the parent data classification of the product (E), the part number (g) for specifying the treatment process (g) as the middle part number (second production factor), the process number (PC003) (third factor-type number) which is the middle data classification of the treatment process (g), the part number (ζ) for specifying the production tool (ζ) as the child part number (third production factor), and the resource number (PC004) (fourth factor-type number) which is the child data classification of the production tool (ζ) are stored in the relational database 18, and the start date (January 1, 2005) and the end date (April 30, 2005) of the three-term relationship among the product (E), the treatment process (g), and the production tool (ζ) are stored therein.

Further, the part number (F) for specifying the product (F) as the parent part number (first production factor), the item number (PC001) (first factor-type number) which is the parent data classification of the product (F), the part number (g) for specifying the treatment process (g) as the middle part number (second production factor), the process number (PC003) (third factor-type number) which is the middle data classification of the treatment process (g), the part number (κ) for specifying the part (κ) as the child part number (third production factor), and the item number (PC001) (first factor-type number) which is the child data classification of the part (κ) are stored in the relational database 18, and the start date (May 1, 2005) and the end date (-) of the three-term relationship among the product (F), the treatment process (g), and the part (κ) are stored therein. The part number (F) for specifying the product (F) as the parent part number (first production factor), the item number (PC001) (first factor-type number) which is the parent data classification of the product (F), the part number (g) for specifying the treatment process (g) as the middle part number (second production factor), the process number (PC003) (third factor-type number) which is the middle data classification of the treatment process (g), the part number (λ) for specifying the production tool (λ) as the child part number (third production factor), and the resource number (PC004) (fourth factor-type number) which is the child data classification of the production tool (λ) are stored in the relational database 18, and the start date (May 1, 2005) and the end date (-) of the three-term relationship among the product (F), the treatment process (g), and the production tool (λ) are stored therein.

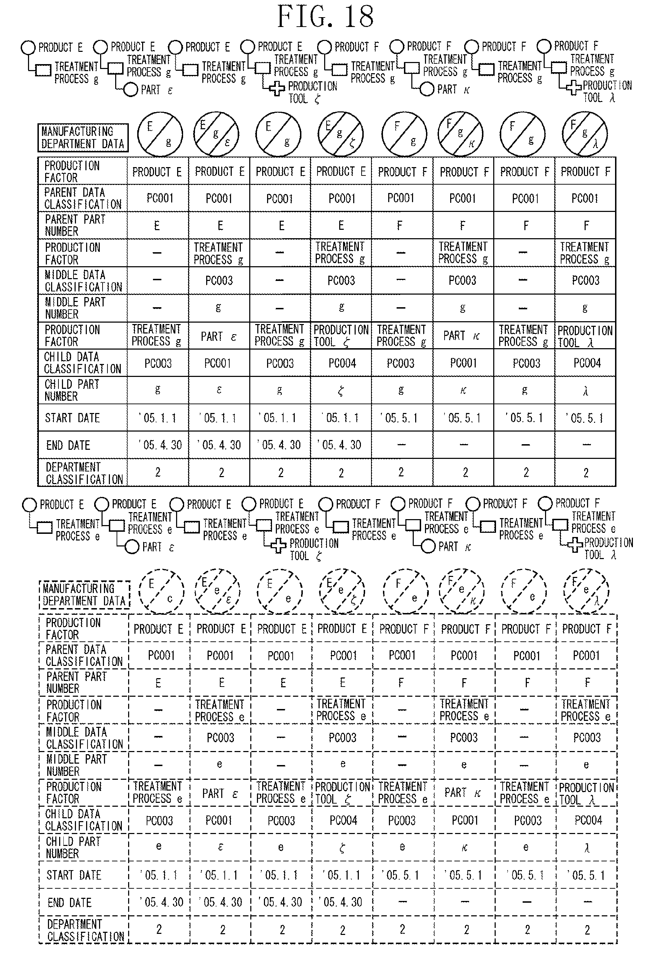

The three-term relationship among the product (E), the treatment process (g), and the part (ε), the three-term relationship among the product (E), the treatment process (g), and the production tool (ζ), and the two-term relationship between the product (E) and the treatment process (g) serving as a basis therefor, the three-term relationship among the product (F), the treatment process (g), and the part (κ), and the three-term relationship among the product (F), the treatment process (g), and the production tool (λ), and the two-term relationship between the product (F) and the treatment process (g) serving as a basis therefor are treated as the data of the manufacturing department based on the department classification (2). The two-term relationship between the product (E) and the treatment process (e), the two-term relationship between the product (F) and the treatment process (e), the three-term relationship among the product (E), the treatment process (e), and the part (ε), and the three-term relationship among the product (E), the treatment process (e), and the production tool (ζ), the three-term relationship among the product (F), the treatment process (e), and the part (κ), and the three-term relationship among the product (F), the treatment process (e), and the production tool (λ) are stored in the subfile of the relational database 18, as shown in Fig. 18 by the dotted lines.

In the relational database 18, the product (E) and the treatment process (g) are connected to each other, and the product (E) and the treatment process (g) are linked with each other based on the two-term relationship; the product (E), the treatment process (g), and the part (ε) are connected to each other, and the product (E), the treatment process (g), and the part (ε) are linked with each other based on the three-term relationship; and the product (E), the treatment process (g), and the production tool (ζ) are connected to each other, and the product (E), the treatment process (g), and the production tool (ζ) are linked with each other based on the three-term relationship. Further, in the relational database, the product (F) and the treatment process (g) are connected to each other, and the product (F) and the treatment process (g) are linked with each other based on the two-term relationship; the product (F), the treatment process (g), and the part (κ) are connected to each other, and the product (F), the treatment process (g), and the part (κ) are linked with each other based on the three-term relationship; and the product (F), the treatment process (g), and the production tool (λ) are connected to each other, and the product (F), the treatment process (g), and the production tool (λ) are linked with each other based on the three-term relationship.

The integration of a plurality of relationships of various types, and the creation of the production system of the article (1) on September 30, 2005 performed by the computer 11 after the production factor and the two-term/three-term relationship are changed will be described based on Fig. 19 as follows. It is to be noted that the creation of the production system shown in Fig. 19 shall be performed on September 30, 2005. When the creation of the production system is instructed via the input device after the production factor and the two-term/three-term relationship are changed, the computer 11 uses the changed new production factor to integrate all the two-term relationships including the new two-term relationship formed of the first and second production factors after the change, to integrate all the three-term relationships including the new three-term relationship formed of the first to third production factors after the change, and to integrate the two-term relationship and the three-term relationship. The computer 11 connects in series the production factors from a superordinate concept toward a subordinate concept thereof according to the integrated two-term relationship, the integrated three-term relationship, and the integrated two-term/three-term relationship to thereby re-create the production systems of various articles at an arbitrary point in time.

When the creation of the production system on September 30, 2005 is instructed via the input device, the computer 11 refers to the start dates and the end dates of the production factors, the two-term relationship, and the three-term relationship, extracts from the relational database 18 the two-term relationship and the three-term relationship which will serve as the creation factors of the production system at the date of September 30, 2005, and extracts from the factor-type database 17 the production factors for forming the extracted two-term relationship and three-term relationship. The computer 11 extracts from the relational database 18 the two-term relationship between the shop (G) and the warehouse (H) and the three-term relationship among the shop (G), the warehouse (H), and the product (F), as the logistics department data. Next, the computer 11 interprets the site number (PC005) of the parent data classification of the shop (G) as the site data classification (PC005) of the site database 23 to extract the data of the shop (G) from the site database 23 based on the part number (G) and the site data classification (PC005), and interprets the site number (PC005) of the middle data classification of the warehouse (H) as the site data classification (PC005) (fifth factor-type number) of the site database 23 to extract the data of the warehouse (H) from the site database 23 based on the part number (H) and the site data classification (PC005). Further, it interprets the item number (PC001) of the child data classification of the product (F) as the item data classification (PC001) (first factor-type number) of the item database 19 to extract the data of the product (F) from the item database 119 based on the part number (F) and the item data classification (PC001).

The computer 11 extracts from the relational database 18 the two-term relationship between the product (F) and the inspection process (f) and the three-term relationship among the product (F), the inspection process (f), and the inspection standard (µ), as the manufacturing department data. Next, the computer 11 interprets the process number (PC003) of the middle data classification of the inspection process (f) as the process data classification (PC003) (third factor-type number) of the process database 21 to extract the data of the inspection process (f) from the process database 21 based on the part number (f) and the process data classification (PC003), and interprets the result number (PC002) of the child data classification of the inspection standard (µ) as the result data classification (PC002) (second factor-type number) of the result database 20 to extract the data of the inspection standard (µ) from the result database 20 based on the part number (µ) and the result data classification (PC002).

The computer 11 extracts from the relational database 18 the two-term relationship between the product (F) and the assembly process (d), the three-term relationship among the product (F), the assembly process (d), and the assembly drawing (v), the three-term relationship among the product (F), the assembly process (d), and the part (ξ), and the three-term relationship among the product (F), the assembly process (d), and the production line (δ), as the manufacturing department data. Next, the computer 11 interprets the process number (PC003) of the middle data classification of the assembly process (d) as the process data classification (PC003) (third factor-type number) of the process database 21 to extract the data of the assembly process (d) from the process database 21 based on the part number (d) and the process data classification (PC003), and interprets the result number (PC002) of the child data classification of the assembly drawing (v) as the result data classification (PC002) (second factor-type number) of the result database 20 to extract assembly drawing (v) data from the result database 20 based on the part number (v) and the result data classification (PC002). The computer 11 interprets the item number (PC001) of the child data classification of the part (ξ) as the item data classification (PC001) (first factor-type number) of the item database 19 to extract the data of the part (ξ) from the item database 19 based on the part number (ξ) and the item data classification (PC001), and interprets the resource number (PC004) of the child data classification of the production line (δ) as the resource data classification (PC004) (fourth factor-type number) of the resource data base 22 to extract the data of the production line (δ) from the resource data base 22 based on the part number (δ) and the resource data classification (PC004).

The computer 11 extracts from the relational database 18 the two-term relationship between the product (F) and the treatment process (g), the three-term relationship among the product (F), the treatment process (g), and the part (κ), and the three-term relationship among the product (F), the treatment process (g), and the production tool (λ), as the manufacturing department data. Next, the computer 11 interprets the process number (PC003) of the middle data classification of the treatment process (g) as the process data classification (PC003) (third factor-type number) of the process database 21 to extract the data of the treatment process (g) from the process database 21 based on the part number (g) and the process data classification (PC003), and interprets the item number (PC001) of the child data classification of the part (κ) as the item data classification (PC001) (first factor-type number) of the item database 19 to extract the data of the part (κ) from the item database 19 based on the part number (κ) and the item data classification (PC001). The computer 11 interprets the resource number (PC004) of the child data classification of the production tool (λ) as the resource data classification (PC004) (fourth factor-type number) of the resource database 22 to extract the data of the production tool (λ) from the resource database 22 based on the part number (λ) and the resource data classification (PC004).

The computer 11 determines based on the data classification (PC001) and the part number (F) that the products (F) are the same common production factor among the three-term relationship among the shop (G), the warehouse (H), and the product (F), the three-term relationship among the product (F), the inspection process (f), and the inspection standard (µ), the two-term relationship between the product (F) and the assembly process (d), and the two-term relationship between the product (F) and the treatment process (g), and combines the products (F) in the two-term relationships and the three-term relationships. Thereby, these two-term relationships are integrated (two-term relationship integrating means), these three-term relationships are integrated (three-term relationship integrating means), and these two-term relationships and these three-term relationships are integrated (two-term/three-term relationship integrating means). A route (technical information route) in which the warehouse (H) lies just below the shop (G), the product (F) lies just below the warehouse (H), the inspection process (f), the assembly process (d), and the treatment process (g) lie just below the product (F) in parallel, and the inspection standard (µ) lies just below the inspection process (f) is built by integrating these relationships.

The computer 11 determines based on the data classification (PC001) and the part number (F) that the products (F) are the same common production factor among the three-term relationship among the product (F), the assembly process (d), and the assembly drawing (v), the three-term relationship among the product (F), the assembly process (d), and the part (ξ), the three-term relationship among the product (F), the assembly process (d), and the production line (δ), the three-term relationship among the product (F), the treatment process (g), and the part (κ), and the three-term relationship among the product (F), the treatment process (g), and the production tool (λ), and combines the products (F) in these three-term relationships. Thereby, these three-term relationships are integrated (three-term relationship integrating means). A route (technical information route) in which the assembly process (d) and the treatment process (g) lie just below the product (F) in parallel, the assembly drawing (v), the part (ξ), and the production line (δ) lie just below the assembly process (d) in parallel, and the part (κ) and the production tool (λ) lie just below the treatment process (g) in parallel is built by integrating these relationships.

Next, the computer 11 determines based on the data classification (PC001) and the part number (F), and the data classification (PC003) and the part numbers (d) and (g) that the products (F), the assembly processes (d), and the treatment processes (g) are the same common production factors, respectively, among the built route of the shop (G), the warehouse (H), the product (F), the inspection process (f), the assembly process (d), the treatment process (g), and the inspection standard (µ), and route of the product (F), the assembly process (d), the treatment process (g), the assembly drawing (v), the part (ξ), the production line (δ), the part (κ), and the production tool (λ), and combines the products (F), the assembly processes (d), and the treatment processes (g) in these routes. As a result, it builds a route in which the warehouse (H) is connected below the shop (G); the product (F), below the warehouse (H); the inspection process (f), the assembly process (d), and the treatment process (g), below the product (F); the inspection standard (µ), below the inspection process (f); the assembly drawing (v), the part (ξ), and the production line (δ), below the assembly process (d); and the part (κ) and the production tool (λ), below the treatment process (g), in series.

When integrating the two-term relationships and the three-term relationships, and building the route connected in series from the higher level toward the lower level, the computer 11 incorporates each of the production factors extracted from the factor-type database 17 in the route, and creates a production system in which a plurality of production factors of various types are connected in series from a superordinate concept toward a subordinate concept thereof (production system creating means). In the created production system, the shop (G) lies at the top, and the warehouse (H), the product (F), the inspection process (f), the assembly process (d), the treatment process (g), the inspection standard (µ), the assembly drawing (v), the part (ξ), the production line (δ), the part (κ), and the production tool (λ) are located in a line toward the lower level therefrom, as shown in Fig. 19. The computer 11 stores in the storage unit or the hard disk the created production system of the article (1) after changing the production factor and the relationship (production system storing means), and outputs the created production system of the article (1) via the output device (production system outputting means).

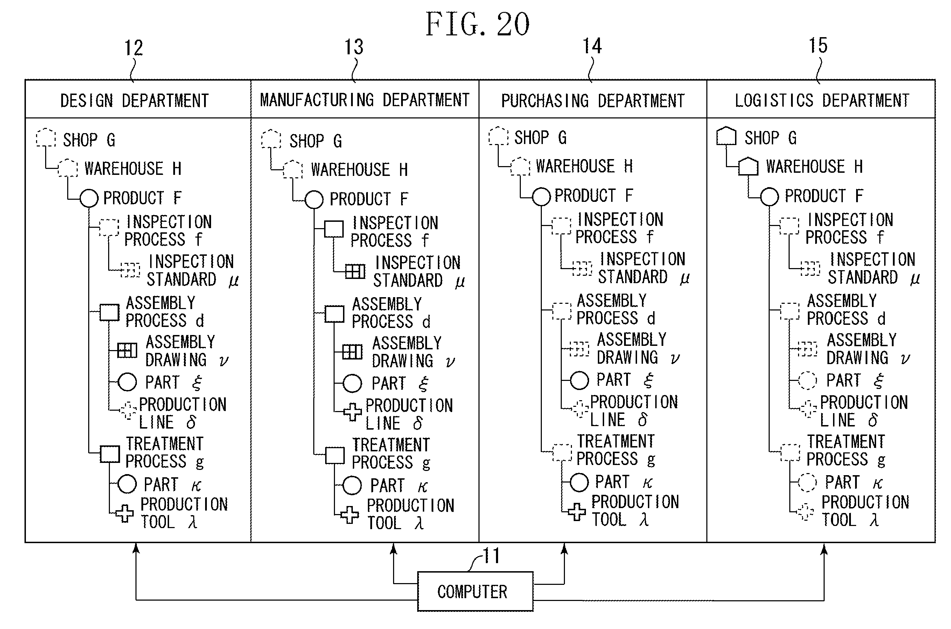

Fig. 20 is a view showing departmental production systems outputted for each of the departments 12, 13, 14, and 15. In this system 10, only the production factors represented by the solid lines shown in Fig. 20 are outputted from the output device arranged in each of the departments 12, 13, 14, and 15. The computer 11 transfers the created whole production system to the terminal device arranged in each department 12, 13, 14, and 15, causes the display arranged in each of the departments 12, 13, 14, and 15 to display the departmental production system formed only of the required production factors for each of the departments 12, 13, 14, and 15 based on the department-type numbers (1, 2, 3, 4) (departmental production system outputting means), and causes the printer arranged in each of the departments 12, 13, 14, and 15 to print the departmental production system (departmental production system outputting means).

For example, as shown in Fig. 20, the production system of the article (1) formed of the product (F), the inspection process (f), the assembly process (d), the treatment process (e), the inspection standard (µ), the assembly drawing (v), the part (ξ), the part (κ), and the production tool (λ) to which the departmental number 1 is set will be displayed on the display arranged in the design department 12, but the shop (G) and the warehouse (H) to which the departmental number 4 is set, and the production line (δ) to which the departmental number 2 is set will not be displayed thereon. The production system of the article (1) formed of the product (F), the inspection process (f), the assembly process (d), the treatment process (g), the inspection standard (µ), the assembly drawing (v), the part (ξ), the production line (δ), the part (κ), and the production tool (λ) to which the departmental number 2 is set will be displayed on the display arranged in the manufacturing department 13, but the shop (G) and the warehouse (H) to which the departmental number 4 is set will not be displayed thereon. Meanwhile, the production system of the article (1) formed of the product (F), the part (ξ), the part (κ), and the production tool (λ) to which the departmental number 3 is set will be displayed on the display arranged in the purchasing department 14, but the shop (G) and the warehouse (H) to which the departmental number 4 is set, and the inspection process (f), the assembly process (d), the treatment process (g), the inspection standard (µ), the assembly drawing (v), and the production line (δ) to which the departmental numbers 1 and 2 are set will not be displayed thereon. The production system of the article (1) formed of the shop (G), the warehouse (H), and the product (F) to which the departmental number 4 is set will be displayed on the display arranged in the logistics department 15, but the inspection process (f), the assembly process (d), the treatment process (g), the inspection standard (µ), the assembly drawing (v), the part (ξ), the production line (δ), the part (κ), and the production tool (λ) to which the departmental numbers 1, 2, and 3 are set will not be displayed thereon.

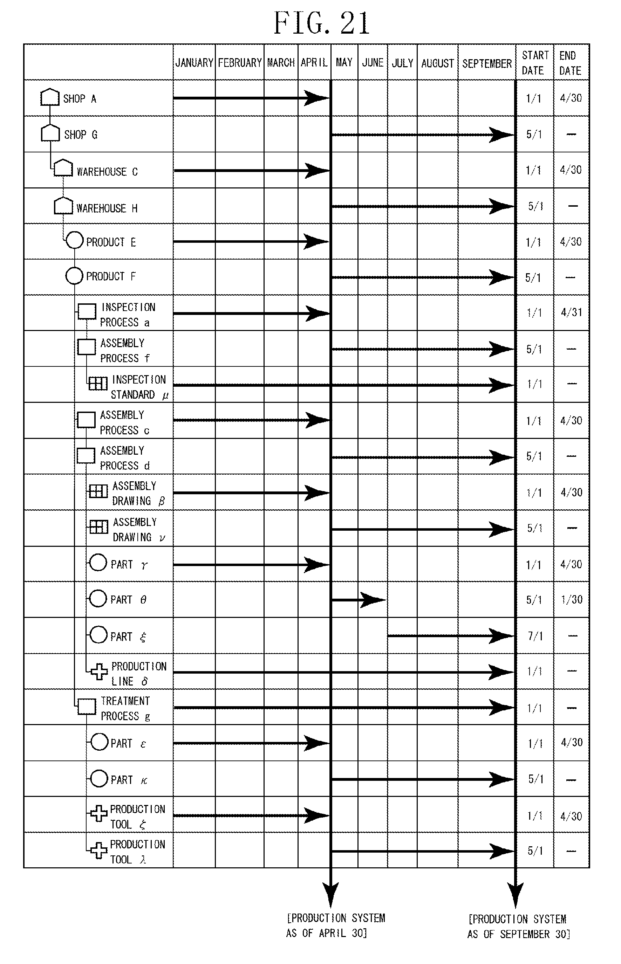

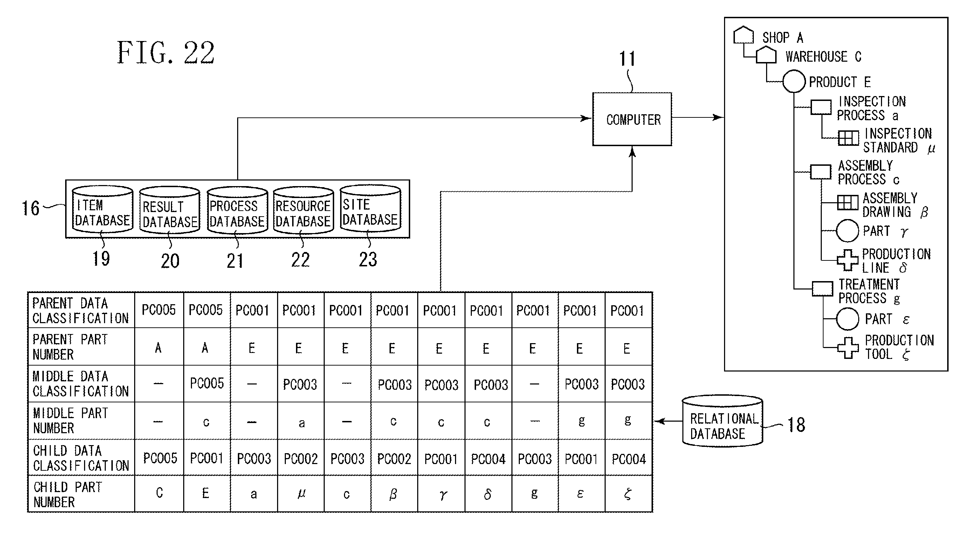

Fig. 21 is a view showing a list of the start date and the end date of each of the production factors, while Fig. 22 is an explanatory view of the production system creation on April 30. The period from January 1, 2005 to September 30 is shown in Fig. 21. This system 10 allows the production system at an arbitrary point in time going back to the past to be created after the production factor and the relationship are changed. For example, when the creation of the production system on April 30 is instructed via the input device as shown in Fig. 21, the computer 11 extracts from the relational database 18 a plurality of two-term relationships of various types and a plurality of three-term relationships of various types which will serve as the creation factors of the production system on April 30 while referring to the start dates and the end dates of the two-term relationship and the three-term relationship, and extracts from the first to fifth factor-type databases 19, 20, 21, 22, and 23 each of the production factors for forming the extracted two-term relationship and three-term relationship while referring to the start date and the end date of the production factor. Next, the computer 11 integrates the extracted two-term relationships and the three-term relationships, and connects in series a plurality of production factors of various types thus extracted from a superordinate concept toward a subordinate concept thereof according to the integrated relationship to thereby create the production system of the article (1) on those dates. The creation of the production system on April 30 will be described as follows.

When the creation of the production system on April 30, 2005 is instructed via the input device, the computer 11 refers to the start dates and the end dates of the production factors, the two-term relationship, and the three-term relationship, extracts from the relational database 18 the two-term relationship and the three-term relationship which will serve as the creation factors of the production system at the date of April 30, 2005, and extracts from the factor-type database 17 the production factors for forming the extracted two-term relationship and three-term relationship. The computer 11 extracts from the relational database 18 the two-term relationship between the shop (A) and the warehouse (C) and the three-term relationship among the shop (A), the warehouse (C), and the product (E), as the logistics department data. Next, the computer 11 interprets the site number (PC005) of the parent data classification of the shop (A) as the site data classification (PC005) of the site database 23 to extract the data of the shop (A) from the site database 23 based on the part number (A) and the site data classification (PC005), and interprets the site number (PC005) of the middle data classification of the warehouse (C) as the site data classification (PC005) (fifth factor-type number) of the site database 23 to extract the warehouse data from the site database 23 based on the part number (C) and the site data classification (PC005). Further, it interprets the item number (PC001) of the child data classification of the product (E) as the item data classification (PC001) (first factor-type number) of the item database 19 to extract the data of the product (E) from the item database 19 based on the part number (E) and the item data classification (PC001).

The computer 11 extracts from the relational database 18 the two-term relationship between the product (E) and the inspection process (a) and the three-term relationship among the product (E), the inspection process (a), and the inspection standard (µ), as the manufacturing department data. Next, the computer 11 interprets the process number (PC003) of the middle data classification of the inspection process (a) as the process data classification (PC003) (third factor-type number) of the process database 21 to extract the data of the inspection process (a) from the process database 21 based on the part number (a) and the process data classification (PC003), and interprets the result number (PC002) of the child data classification of the inspection standard (µ) as the result data classification (PC002) (second factor-type number) of the result database 20 to extract the data of the inspection standard (µ) from the result database 20 based on the part number (µ) and the result data classification (PC002).

The computer 11 extracts from the relational database 18 the two-term relationship between the product (E) and the assembly process (c), the three-term relationship among the product (E), the assembly process (c), and the assembly drawing (β), the three-term relationship among the product (E), the assembly process (c), and the part (γ), and the three-term relationship among the product (E), the assembly process (c), and the production line (δ), as the manufacturing department data. Next, the computer 11 interprets the process number (PC003) of the middle data classification of the assembly process (c) as the process data classification (PC003) (third factor-type number) of the process database 21 to extract the data of the assembly process (c) from the process database 21 based on the part number (c) and the process data classification (PC003), and interprets the result number (PC002) of the child data classification of the assembly drawing (β) as the result data classification (PC002) (second factor-type number) of the result database 20 to extract the data of the assembly drawing (β) from the result database 20 based on the part number (β) and the result data classification (PC002). The computer 11 interprets the item number (PC001) of the child data classification of the part (γ) as the item data classification (PC001) (first factor-type number) of the item database 19 to extract the data of the part (γ) from the item database 19 based on the part number (γ) and the item data classification (PC001), and interprets the resource number (PC004) of the child data classification of the production line (δ) as the resource data classification (PC004) (fourth factor-type number) of the resource data base 22 to extract the data of the production line (δ) from the resource data base 22 based on the part number (δ) and the resource data classification (PC004).

The computer 11 extracts from the relational database 18 the two-term relationship between the product (E) and the treatment process (g), the three-term relationship among the product (E), the treatment process (g), and the part (ε), and the three-term relationship among the product (E), the treatment process (g), and the production tool (ζ), as the manufacturing department data. Next, the computer 11 interprets the process number (PC003) of the middle data classification of the treatment process (g) as the process data classification (PC003) (third factor-type number) of the process database 21 to extract the data of the treatment process (g) from the process database 21 based on the part number (g) and the process data classification (PC003), and interprets the item number (PC001) of the child data classification of the part (ε) as the item data classification (PC001) (first factor-type number) of the item database 19 to extract the data of the part (ε) from the item database 19 based on the part number (ε) and the item data classification (PC001). The computer 11 interprets the resource number (PC004) of the child data classification of the production tool (ζ) as the resource data classification (PC004) (fourth factor-type number) of the resource database 22 to extract the data of the production tool (ζ) from the resource data base 22 based on the part number (ζ) and the resource data classification (PC004).

The computer 11 determines based on the data classification (PC001) and the part number (E) that the products (E) are the same common production factor among the three-term relationship among the shop (A), the warehouse (C), and the product (E), the three-term relationship among the product (E), the inspection process (a), and the inspection standard (µ), the two-term relationship between the product (E) and the assembly process (c), and the two-term relationship between the product (E) and the treatment process (g), and combines the products (E) in the two-term relationships and the three-term relationships. Thereby, these two-term relationships are integrated (two-term relationship integrating means), these three-term relationships are integrated (three-term relationship integrating means), and these two-term relationships and these three-term relationships are integrated (two-term/three-term relationship integrating means). A route (technical information route) in which the warehouse (C) lies just below the shop (A), the product (E) lies just below the warehouse (C), the inspection process (a), the assembly process (c), and the treatment process (g) lie just below the product (E) in parallel, and the inspection standard (µ) lies just below the inspection process (a) is built by integrating these relationships.

The computer 11 determines based on the data classification (PC001) and the part number (E) that the products (E) are the same common production factor among the three-term relationship among the product (E), the assembly process (c), and the assembly drawing (β), the three-term relationship among the product (E), the assembly process (c), and the part (γ), the three-term relationship among the product (E), the assembly process (c), and the production line (δ), the three-term relationship among the product (E), the treatment process (g), and the part (ε), and the three-term relationship among the product (E), the treatment process (g), and the production tool (ζ), and combines the products (E) in these three-term relationships. Thereby, these three-term relationships are integrated (three-term relationship integrating means). A route (technical information route) in which the assembly process (c) and the treatment process (g) lie just below the product (E) in parallel, the assembly drawing (β), the part (γ), and the production line (δ) lie just below the assembly process (c) in parallel, and the part (ε) and the production tool (ζ) lie just below the treatment process (g) in parallel is built by integrating these relationships.

Next, the computer 11 determines based on the data classification (PC001) and the part number (E), and the data classification (PC003) and the part numbers (c) and (g) that the products (E), the assembly processes (c), and the treatment processes (g) are the same common production factors, respectively, among the built route of the shop (A), the warehouse (C), the product (E), the inspection process (a), the assembly process (c), the treatment process (g), and the inspection standard (µ), and route of the product (E), the assembly process (c) the treatment process (g), the assembly drawing (β), the part (γ), the production line (δ), the part (ε), and the production tool (ζ), and combines the products (E), the assembly processes (c), and the treatment processes (g) in these routes. As a result, it builds a route in which the warehouse (C) is connected below the shop (A); the product (E), below the warehouse (C); the inspection process (a), the assembly process (c), and the treatment process (g), below the product (E); the inspection standard (µ), below the inspection process (a); the assembly drawing (β), the part (γ), and the production line (δ), below the assembly process (c); and the part (ε) and the production tool (ζ), below the treatment process (e), in series.

When integrating the two-term relationships and the three-term relationships, and building the route connected in series from the higher level toward the lower level, the computer 11 incorporates each of the production factors extracted from the factor-type database in the route, and creates a production system in which a plurality of production factors of various types are connected in series from a superordinate concept toward a subordinate concept thereof (production system creating means). In the created production system, the shop (A) lies at the top, and the warehouse (C), the product (E), the inspection process (a), the assembly process (c), the treatment process (g), the inspection standard (µ), the assembly drawing (β), the part (γ), the production line (δ), the part (ε), and the production tool (ζ) are located in a line toward the lower level therefrom, as shown in Fig. 22. The computer 11 stores the created production system of the article (1) in the storage unit or the hard disk (production system storing means), and outputs the created production system of the article (1) via the output device (production system outputting means).

The production system creating system 10 and the production system creating method can change the production factor and at least one of the first to third production factors at an arbitrary point in time between the past and the present, and can create the new production system at the arbitrary point in time between the past and the present by integrating the changed relationships and using the changed production factor. The new production system at the arbitrary point in time between the past and the present can be created using the changed production factor. The production system creating system 10 and the production system creating method can manage in an integrated manner the change of the production factor by the factor-type database 17, and can manage in an integrated manner the change of the two-term relationship and the three-term relationship due to the change of the first to third production factors by the relational database 18, so that it is not necessary to change the production factor and the first to third production factors for each of the departments 12, 13, 14, and 15 to thereby create and manage the production system, thus allowing time and labor due to each of the departments 12, 13, 14, and 15 individually performing the change of the production factors and the change of the first to third production factors to be omitted.

Moreover, the production system creating system 10 and the production system creating method can change the start date and the end date of the production factor at an arbitrary point in time from the past to the present, can change the start date and the end date of the two-term/three-term relationship at an arbitrary point in time from the past to the present, and can create the new production system at an arbitrary point in time between the past and the present using the changed start date and end date. This production system creating system 10 and production system creating method can manage in an integrated manner the change of the start date and the end date of the production factor by the factor-type database 17, and can manage in an integrated manner the start date and the end date of the two-term/three-term relationship by the relational database 18, so that it is not necessary to change the start date and the end date for each of the departments 12, 13, 14, and 15 to thereby create and manage the production system, thus allowing time and labor due to each of the departments 12, 13, 14, and 15 individually performing the change of the start date and the end date to be omitted.

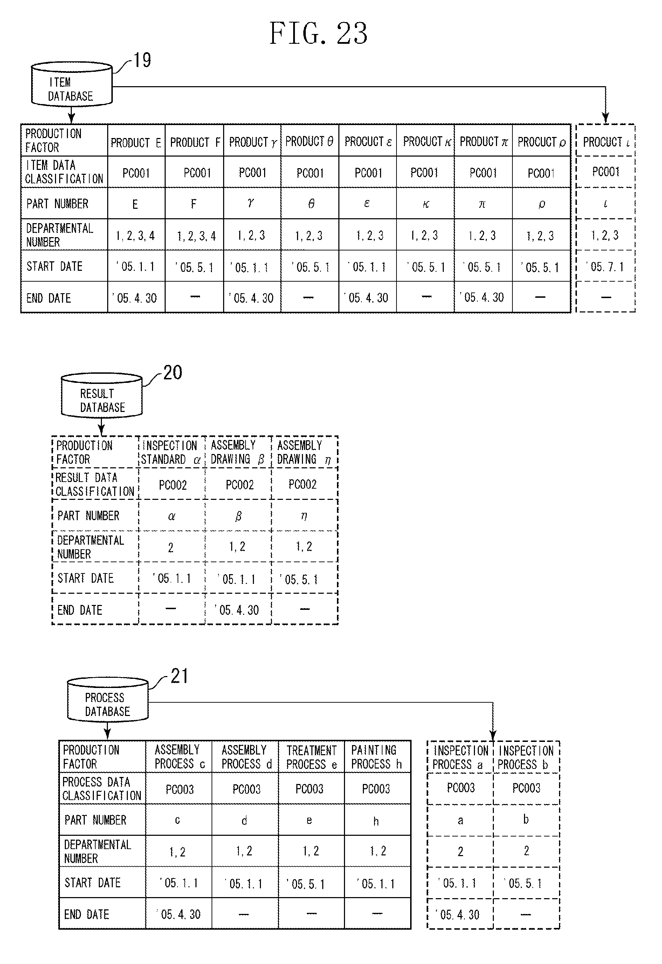

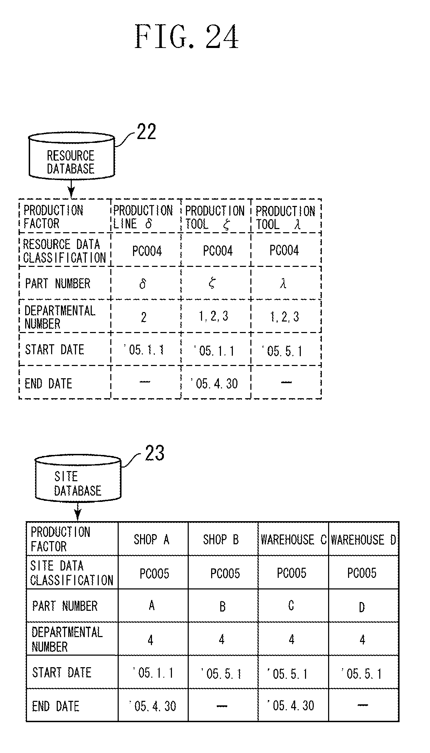

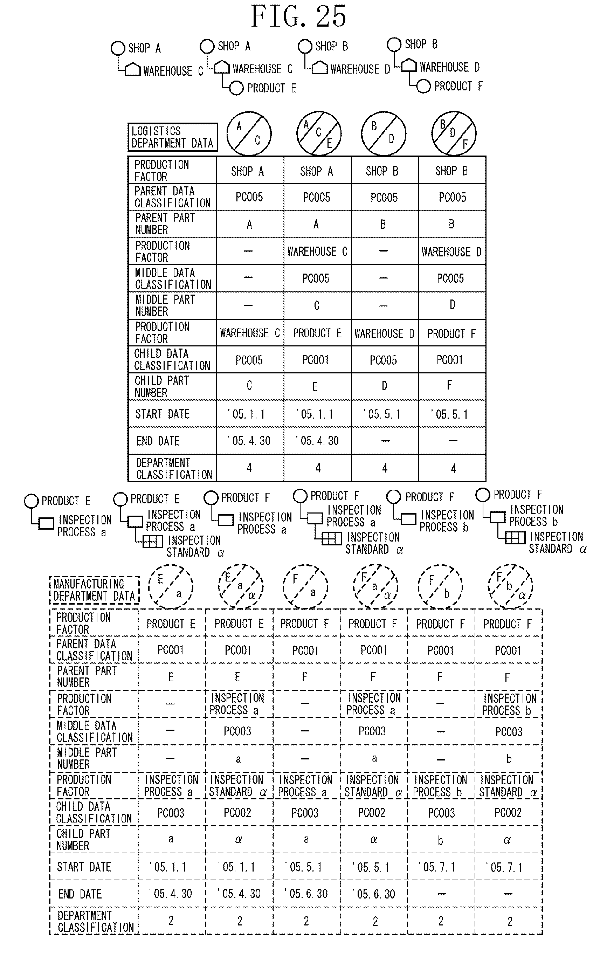

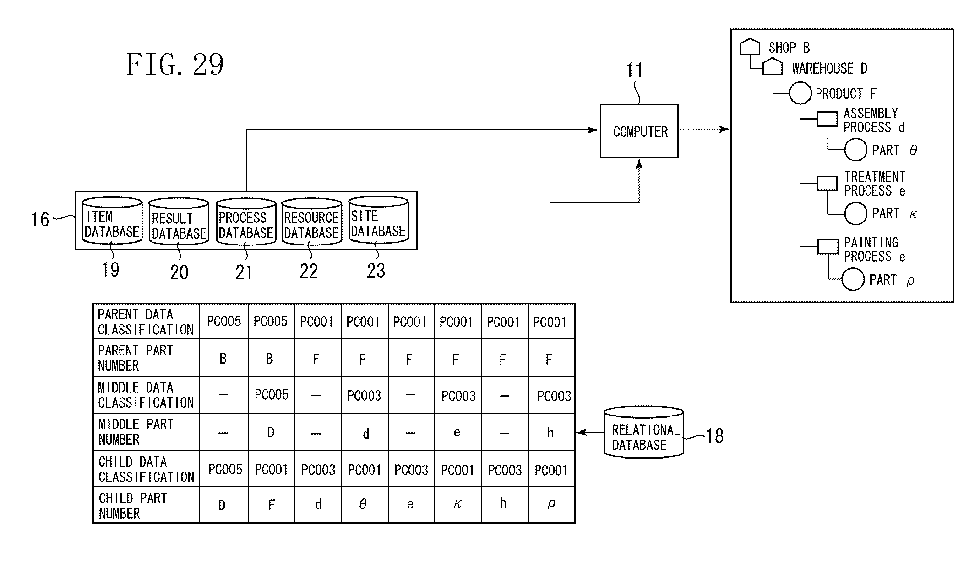

Figs. 23 and 24 are views showing another example of a plurality of production factors of various types stored in the factor-type database 17, while Fig. 25 through Fig. 28 are views showing another example of the two-term relationship and the three-term relationship between and among the production factors stored in the relational database 18. Fig. 29 is a view for explaining another example of the relation integration performed by the computer 11. Fig. 23 through Fig. 29 shall show the state on September 30, 2005.

In the embodiments shown in Fig. 23 through Fig. 29, a part of the production factors stored in the main file of the factor-type database 17 is deleted (altered) and added (altered) going back to the past (first alteration means), and a part of first to third production factors stored in the main file of the relational database 18 is deleted (altered) and added (altered) going back to the past (second alteration means). One example of the deletion of the production factors stored in the factor-type database 17 will be described using a case in which the inspection process (a), the inspection process (b), the inspection standard (α), the assembly drawing (β), the assembly drawing (η), the part (l), the production line (δ), the production tool (ζ), and the production tool (λ) are deleted from the example shown in Fig. 1 as an example as follows.

When a deletion is selected from the items displayed on the display, a production factor deletion area and a relation deletion area will be displayed on the display. The inspection process (a), the inspection process (b), the inspection standard (α), the assembly drawing (β), the assembly drawing (η), the part (l), the production line (δ), the production tool (ζ), and the production tool (λ) are inputted into the production factor deletion area. When a deletion instruction of the production factor is inputted from the input device after inputting these data into production factor deletion area, the computer 11 deletes the data of the inspection process (a) and the inspection process (b) from the main file of the process database 21, deletes the data of the inspection standard (α), the assembly drawing (β), and the assembly drawing (η) from the main file of the result database 20, deletes the data of the part (l) from the main file of the item database 19, and deletes the data of the production line (δ), the production tool (ζ), and the production tool (λ) from the main file of the resource data base 22. It is to be noted that the data of the inspection process (a) and the inspection process (b) is stored in the subfile of the process database 21, and the data of the inspection standard (α), the assembly drawing (β), and the assembly drawing (η) is stored in the subfile of the result database 20. The data of the part (l) is stored in the subfile of the item database 19, and the data of the production line (δ), the production tool (ζ), and the production tool (λ) is stored in the subfile of the resource database 22.

One example of the deletion of the two-term relationship and the three-term relationship stored in the relational database 18 will be described as follows. The three-term relationship among the product (E), the inspection process (a), and the inspection standard (α) is inputted into a three-term relationship deletion area (1) displayed on the display, and the two-term relationship between the product (E) and the inspection process (a) is inputted into a two-term relationship deletion area (1) corresponding to the three-term relationship deletion area (1). The three-term relationship among the product (F), the inspection process (a), and the inspection standard (α) is inputted into a three-term relationship deletion area (2), and the two-term relationship between the product (F) and the inspection process (a) is inputted into a two-term relationship deletion area (2) corresponding to the three-term relationship deletion area (2). The three-term relationship among the product (F), the inspection process (b), and the inspection standard (α) is inputted into a three-term relationship deletion area (3), and the two-term relationship between the product (F) and the inspection process (b) is inputted into a two-term relationship deletion area (3) corresponding to the three-term relationship deletion area (3).

The three-term relationship among the product (E), the assembly process (c), and the assembly drawing (β) is inputted into a three-term relationship deletion area (4), and the two-term relationship between the product (E) and the assembly process (c) is inputted into a two-term relationship deletion area (4) corresponding to the three-term relationship deletion area (4). The three-term relationship among the product (F), the assembly process (c), and the assembly drawing (η) is inputted into a three-term relationship deletion area (5), and the two-term relationship between the product (F) and the assembly process (c) are inputted into a two-term relationship deletion area (5) corresponding to the three-term relationship deletion area (5). The three-term relationship among the product (F), the assembly process (d), and the assembly drawing (η) is inputted into a three-term relationship deletion area (6), and the two-term relationship between the product (F) and the assembly process (d) is inputted into a two-term relationship deletion area (6) corresponding to the three-term relationship deletion area (6). The three-term relationship among the product (F), the assembly process (d), and the part (l) is inputted into a three-term relationship deletion area (7), and the two-term relationship between the product (F) and the assembly process (d) is inputted into a two-term relationship deletion area (7) corresponding to the three-term relationship deletion area (7).

The three-term relationship among the product (E), the assembly process (c), and the production line (δ) is inputted into a three-term relationship deletion area (8), and the two-term relationship between the product (E) and the assembly process (c) is inputted into a two-term relationship deletion area (8) corresponding to the three-term relationship deletion area (8). The three-term relationship among the product (F), the assembly process (c), and the production line (δ) is inputted into a three-term relationship deletion area (9), and the two-term relationship between the product (F) and the assembly process (c) are inputted into a two-term relationship deletion area (9) corresponding to the three-term relationship deletion area (9). The three-term relationship among the product (F), the assembly process (d), and the production line (δ) is inputted into a three-term relationship deletion area (10), and the two-term relationship between the product (F) and the assembly process (d) is inputted into a two-term relationship deletion area (10) corresponding to the three-term relationship deletion area (10). The three-term relationship among the product (E), the treatment process (e), and the production tool (ζ) is inputted into a three-term relationship deletion area (11), and the two-term relationship between the product (E) and the assembly process (e) is inputted into a two-term relationship deletion area (11) corresponding to the three-term relationship deletion area (11). The three-term relationship among the product (F), the treatment process (e), and the production tool (λ) is inputted into a three-term relationship deletion area (12), and the two-term relationship between the product (F) and the assembly process (e) is inputted into a two-term relationship deletion area (12) corresponding to the three-term relationship deletion area (12).

When these data are inputted into respective relation deletion areas, the three-term relationship among the product (E), the inspection process (a), and the inspection standard (α), and the two-term relationship between the product (E) and the inspection process (a) serving as a basis therefor; the three-term relationship among the product (F), the inspection process (a), and the inspection standard (α), and the two-term relationship between the product (F) and the inspection process (a) serving as a basis therefor; and the three-term relationship among the product (F), the inspection process (b), and the inspection standard (α), and the two-term relationship between the product (F) and the inspection process (b) serving as a basis therefor will be displayed on the display. The three-term relationship among the product (E), the assembly process (c), and the assembly drawing (β), and the two-term relationship between the product (E) and the assembly process (c) serving as a basis therefor; the three-term relationship among the product (F), the assembly process (c), and the assembly drawing (η), and the two-term relationship between the product (F) and the assembly process (c) serving as a basis therefor; the three-term relationship among the product (F), the assembly process (d), and the assembly drawing (η), and the two-term relationship between the product (F) and the assembly process (d) serving as a basis therefor; and the three-term relationship among the product (F), the assembly process (d), and the part (l), and the two-term relationship between the product (F) and the assembly process (d) serving as a basis therefor will be displayed on the display. Further, the three-term relationship among the product (E), the assembly process (c), and the production line (δ), and the two-term relationship between the product (E) and the assembly process (c) serving as a basis therefor; the three-term relationship among the product (F), the assembly process (c), and the production line (δ), and the two-term relationship between the product (F) and the assembly process (c) serving as a basis therefor; the three-term relationship among the product (F), the assembly process (d), and the production line (δ), and the two-term relationship between the product (F) and the assembly process (d) serving as a basis therefor; the three-term relationship among the product (E), the treatment process (e), and the production tool (ζ), and the two-term relationship between the product (E) and the assembly process (e) serving as a basis therefor; and the three-term relationship among the product (F), the treatment process (e), and the production tool (λ), and the two-term relationship between the product (F) and the assembly process (e) serving as a basis therefor will be displayed on the display.

When a deletion instruction of these relationships is inputted from the input device, the computer 11 deletes the two-term relationships and the three-term relationships displayed on the display from the main file of the relational database 18. It is to be noted that these two-term relationships and these three-term relationships deleted from the main file are stored in the subfile of the relational database 18.

One example of the addition of the production factor will be described using a case in which a painting process (h), a part (π), and a part (ρ) are added to the example shown in Fig. 1 as an example as follows. When a process addition is selected from the factor-type displayed on the display, a process addition area, a department classification input area corresponding to process addition area, a relation start date input area, and a relation end date input area will be displayed on the display. The treatment process (h) and its part number (h) (factor-type identification number) are inputted into the process addition area via the input device, the department classification is inputted into the department classification input area, and the start date and the end date of the painting process (h) are inputted into the start date input area and the end date input area, respectively. Once these data are inputted, the computer 11 refers to the factor-type, the production factor, and the factor-type number stored in the storage unit or the hard disk to determine that the painting process (h) belongs to the process, gives the process data classification (PC003) (third factor-type number) to the painting process (h), and gives the departmental numbers (1, 2) to the inspection process (h) based on the inputted department classification. The computer 11 stores in the process database 21 the painting process data, such as the process data classification (PC003) and the departmental numbers (1, 2) of the painting process (h), the part number (h) for specifying the painting process (h), the start date (January 1, 2005) of the painting process (h), the end date (-) of the painting process (h), and the like. The painting process data includes contents of the painting process (h) (painting procedure, painting color, painting time, and the like).

When an item addition is selected from the factor-type displayed on the display, an item addition area, a department classification input area corresponding to the item addition area, a relation start date input area, and a relation end date input area will be displayed on the display. The part (π), the part (ρ), and their part numbers (π) and (ρ) (factor-type identification number) are inputted into the item addition area via the input device, the department classification is inputted into the department classification input area, and the start date and the end date of the part (π) and the part (ρ) are inputted into the start date input area and the end date input area, respectively. Once these data are inputted, the computer 11 refers to the factor-type, the production factor, and the factor-type number stored in the storage unit or the hard disk to determine that the part (π) and the part (ρ) belong to the item, gives the item data classification (PC001) (first factor-type number) to the part (π) and the part (ρ), and gives the departmental numbers (1, 2, 3) to the part (π) and the part (ρ) based on the inputted department classification. The computer 11 stores in the main file of the item database 19 the part data, such as the item data classification (PC001) and the departmental numbers (1, 2, 3) of the part (π) and the part (ρ), the part numbers (π) and (ρ) for specifying the part (π) and the part (ρ), the start date of the part (π) (January 1, 2005), the end date of the part (π) (April 30, 2005), the start date of the part (ρ) (May 1, 2005), the end date (-) of the part (ρ), and the like. The part data includes contents of the part (π) and the part (ρ) (part name, producing district, instruction for use, durable years, amount of money, delivery date, and the like).

One example of the addition of the first to third production factors will be described using a case in which a two-term relationship between the product (E) and the painting process (h), a three-term relationship among the product (E), the painting process (h), and the part (π), a two-term relationship between the product (F) and the painting process (h), and a three-term relationship among the product (F), the painting process (h), and the part (ρ) are added as an example as follows. When a relation addition is selected from the factor-type displayed on the display, a relation addition area, a relation start date input area, and a relation end date input area will be displayed on the display. The product (E) and the painting process (h) are inputted into a two-term relationship addition area (1) among the relation addition areas, and the department classification (2) is inputted into the department classification input area corresponding to the two-term relationship addition area (1). Next, the part number (E) for specifying the product (E) as the parent part number (first production factor), the item number (PC001) (first factor-type number) as the parent data classification, the part number (h) for specifying the painting process (h) (factor-type identification number) as the child part number (second production factor), and the process number (PC003) (third factor-type number) as the child data classification are inputted. Further, the start date (January 1, 2005) and the end date (April 30, 2005) of the two-term relationship between the product (E) and the painting process (h) are inputted into the relation start date input area and the relation end date input area, respectively.

The product (E), the painting process (h), and the part (π) are inputted into a three-term relationship addition area (1) corresponding to the two-term relationship addition area (1), and the department classification (2) is inputted into the department classification input area corresponding to the three-term relationship addition area (1). Next, the part number (E) for specifying the product (E) as the parent part number (first production factor), the item number (PC001) (first factor-type number) as the parent data classification, the part number (h) for specifying the painting process (h) as the middle part number (second production factor), the process number (PC003) as the middle data classification (third factor-type number), the part number (π) (factor-type identification number) for specifying the part (π) as the child part number (third production factor), and the item number (PC001) (first factor-type number) as the child data classification are inputted. Further, the start date (January 1, 2005) and the end date (April 30, 2005) of the three-term relationship among the product (E), the painting process (h), and the part (π) are inputted into the relation start date input area and the relation end date input area, respectively. Once these data are inputted, the computer 11 stores these data in the relational database 18. In the relational database 18, the product (E) and the painting process (h) are connected to each other, and the product (E) and the painting process (h) are linked with each other based on the two-term relationship; and the product (E), the painting process (h), and the part (π) are connected to each other, and the product (E), the painting process (h), and the part (π) are linked with each other based on the three-term relationship.

The product (F) and the painting process (h) are inputted into a two-term relationship addition area (2) among the relation addition areas displayed on the display, and the department classification (2) is inputted into the department classification input area corresponding to the two-term relationship addition area (2). Next, the part number (F) for specifying the product (F) as the parent part number (first production factor), the item number (PC001) (first factor-type number) as the parent data classification, the part number (h) for specifying the painting process (h) (factor-type identification number) as the child part number (second production factor), and the process number (PC003) (third factor-type number) as the child data classification are inputted. Further, the start date (January 1, 2005) and the end date (-) of the two-term relationship between the product (F) and the painting process (h) are inputted into the relation start date input area and the relation end date input area, respectively.

The product (F), the painting process (h), and the part (ρ) are inputted into a three-term relationship addition area (2) corresponding to the two-term relationship addition area (2), and the department classification (2) is inputted into the department classification input area corresponding to the three-term relationship addition area (2). Next, the part number (F) for specifying the product (F) as the parent part number (first production factor), the item number (PC001) (first factor-type number) as the parent data classification, the part number (h) for specifying the painting process (h) as the middle part number (second production factor), the process number (PC003) (third factor-type number) as the middle data classification, the part number (ρ) (factor-type identification number) for specifying the part (ρ) as the child part number (third production factor), and the item number (PC001) (first factor-type number) as the child data classification are inputted. Further, the start date (May 1, 2005) and the end date (-) of the three-term relationship among the product (E), the painting process (h), and the part (π) are inputted into the relation start date input area and the relation end date input area, respectively. Once these data are inputted, the computer 11 stores these data in the relational database 18. In the relational database 18, the product (F) and the painting process (h) are connected to each other, and the product (F) and the painting process (h) are linked with each other based on the two-term relationship; and the product (F), the painting process (h), and the part (ρ) are connected to each other, and the product (F), the painting process (h), and the part (ρ) are linked with each other based on the three-term relationship. It is to be noted that the two-term relationship between the product (E) and the painting process (h), the two-term relationship between the product (F) and the painting process (h), the three-term relationship among the product (E), the painting process (h), and the part (π), and the three-term relationship among the product (F), the painting process (h), and the part (ρ) are treated as the data of the manufacturing department based on the department classification (2).

The integration of a plurality of relationships of various types, and the creation of the production system of the article (1) on September 30, 2005 performed by the computer 11 after the production factor and the two-term/three-term relationship are deleted or added will be described based on Fig. 29 as follows. It is to be noted that the creation of the production system shown in Fig. 29 shall be performed on September 30, 2005. When the creation of the production system is instructed via the input device after the production factor and the two-term/three-term relationship are deleted or added, the computer 11 uses remaining production factors and the added new production factor to integrate all the two-term relationships including the new two-term relationship formed of the first and second production factors after the deletion and the addition, to integrate all the three-term relationships including the new three-term relationship formed of the first to third production factors after the deletion and the addition, and to integrate the two-term relationship and the three-term relationship. The computer 11 connects in series the production factors from a superordinate concept toward a subordinate concept thereof according to the integrated two-term relationship, the integrated three-term relationship, and the integrated two-term/three-term relationship to thereby re-create the production systems of various articles at an arbitrary point in time.

When the creation of the production system on September 30, 2005 is instructed via the input device, the computer 11 refers to the start dates and the end dates of the production factors, the two-term relationship, and the three-term relationship, extracts from the relational database 18 the two-term relationship and the three-term relationship which will serve as the creation factors of the production system at the date of September 30, 2005, and extracts from the factor-type database 17 the production factors for forming the extracted two-term relationship and three-term relationship. The computer 11 extracts from the relational database 18 the two-term relationship between the shop (B) and the warehouse (D) and the three-term relationship among the shop (B), the warehouse (D), and the product (F), as the logistics department data. Next, the computer 11 interprets the site number (PC005) of the parent data classification of the shop (B) as the site data classification (PC005) of the site database 23 to extract the data of the shop (B) from the site database 23 based on the part number (B) and the site data classification (PC005), and interprets the site number (PC005) of the middle data classification of the warehouse (D) as the site data classification (PC005) (fifth factor-type number) of the site database 23 to extract the warehouse data from the site database 23 based on the part number (D) and the site data classification (PC005). Further, it interprets the item number (PC001) of the child data classification of the product (F) as the item data classification (PC001) (first factor-type number) of the item database 19 to extract the data of the product (F) from the item database 19 based on the part number (F) and the item data classification (PC001).

The computer 11 extracts from the relational database 18 the two-term relationship between the product (F) and the assembly process (d) and the three-term relationship among the product (F), the assembly process (d), and the part (θ), as the manufacturing department data. Next, the computer 11 interprets the process number (PC003) of the middle data classification of the assembly process (d) as the process data classification (PC003) (third factor-type number) of the process database 21 to extract the data of the assembly process (d) from the process database 21 based on the part number (d) and the process data classification (PC003), and interprets the item number (PC002) of the child data classification of the part (θ) as the item data classification (PC001) (first factor-type number) of the item database 19 to extract the data of the part (θ) from the item database 19 based on the part number (θ) and the item data classification (PC001).

The computer 11 extracts from the relational database 18 the two-term relationship between the product (F) and the treatment process (e) and the three-term relationship among the product (F), the treatment process (e), and the part (κ), as the manufacturing department data. Next, the computer 11 interprets the process number (PC003) of the middle data classification of the treatment process (e) as the process data classification (PC003) (third factor-type number) of the process database 21 to extract the data of the treatment process (e) from the process database 21 based on the part number (e) and the process data classification (PC003), and interprets the item number (PC001) of the child data classification of the part (κ) as the item data classification (PC001) (first factor-type number) of the item database 19 to extract the data of the part (κ) from the item database 19 based on the part number (κ) and the item data classification (PC001).

The computer 11 extracts from the relational database 18 the two-term relationship between the product (F) and the painting process (h), and the three-term relationship among the product (F), the painting process (h), and the part (ρ), as the manufacturing department data. Next, the computer 11 interprets the process number (PC003) of the middle data classification of the painting process (h) as the process data classification (PC003) (third factor-type number) of the process database 21 to extract the data of the painting process (h) from the process database 21 based on the part number (h) and the process data classification (PC003), and interprets the item number (PC001) of the child data classification of the part (ρ) as the item data classification (PC001) (first factor-type number) of the item database 19 to extract the data of the part (ρ) from the item database 19 based on the part number (ρ) and the item data classification (PC001).

The computer 11 determines based on the data classification (PC001) and the part number (F) that the products (F) are the same common production factor among the three-term relationship among the shop (B), the warehouse (D), and the product (F), the three-term relationship among the product (F), the assembly process (d), and the part (θ), and the three-term relationship among the product (F), the treatment process (e), and the part (κ), and the three-term relationship among the product (F), the painting process (h), and the part (ρ), and combines the products (F) in these three-term relationships. Thereby, these three-term relationships are integrated (three-term relationship integrating means), and a route (technical information route) in which the warehouse (D) lies just below the shop (B), the product (F) lies just below the warehouse (D), the assembly process (d), the treatment process (e), and the painting process (h) lie just below the product (F) in parallel, and the part (θ) lies just below the assembly process (d); the part (κ), just below the treatment process (e); and the part (ρ), just below the painting process (h) is built.

When integrating the three-term relationships, and building the route connected in series from the higher level toward the lower level, the computer 11 incorporates each of the production factors extracted from the factor-type database in the route, and creates a production system in which a plurality of production factors of various types are connected in series from a superordinate concept toward a subordinate concept thereof (production system creating means). In the created production system, the shop (B) lies at the top, and the warehouse (D), the product (F), the assembly process (d), the treatment process (e), the painting process (h), the part (θ), the part (κ), and the part (ρ) are located in a line toward the lower level therefrom, as shown in Fig. 29. The computer 11 stores in the storage unit or the hard disk the created production system of the article (1) after deleting and adding the production factor and the relationship (production system storing means), and outputs the created production system of the article (1) via the output device (production system outputting means).

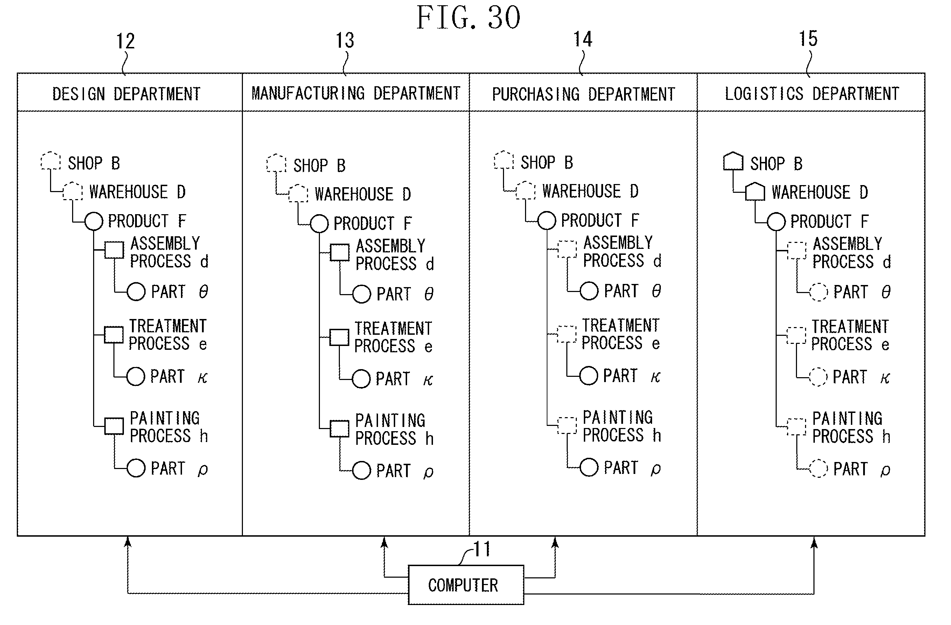

Fig. 30 is a view showing departmental production systems outputted for each of the departments 12, 13, 14, and 15. In this system 10, only the production factors represented by the solid lines shown in Fig. 30 are outputted from the output device arranged in each of the departments 12, 13, 14, and 15. The computer 11 transfers the created whole production system to the terminal device arranged in each department 12, 13, 14, and 15, causes the display arranged in each of the departments 12, 13, 14, and 15 to display the departmental production system formed only of the required production factors for each of the departments 12, 13, 14, and 15 based on the department-type numbers (1, 2, 3, 4) (departmental production system outputting means), and causes the printer arranged in each of the departments 12, 13, 14, and 15 to print the departmental production system (departmental production system outputting means).

For example, as shown in Fig. 30, the production system of the article (1) formed of the product (F), the assembly process (d), the treatment process (e), the painting process (h), the part (θ), the part (κ), and the part (ρ) to which the departmental numbers 1 and 2 is set will be displayed on the displays arranged in the design department 12 and the manufacturing department 13, but the shop (B) and the warehouse (D) to which the departmental number 4 is set will not be displayed thereon. The production system of the article (1) formed of the product (F), the part (θ), the part (κ), and the part (ρ) to which the departmental number 3 is set will be displayed on the display arranged in the purchasing department 14, but the shop (B), the warehouse (D), the assembly process (d), the treatment process (e), and the painting process (h) to which the departmental numbers 1, 2, and 4 are set will not be displayed thereon. The production system of the article (1) formed of the shop (B), the warehouse (D), and the product (F) to which the departmental number 4 is set will be displayed on the display arranged in the logistics department 15, but the assembly process (d), the treatment process (e), the painting process (h), the part (θ), the part (κ), and the part (ρ) to which the departmental numbers 1, 2, and 3 are set will not be displayed thereon.

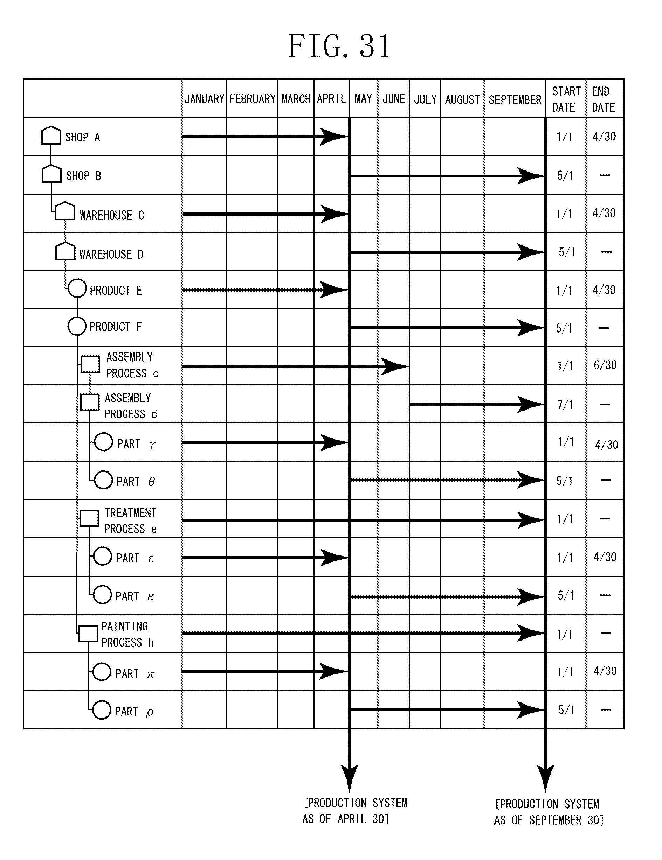

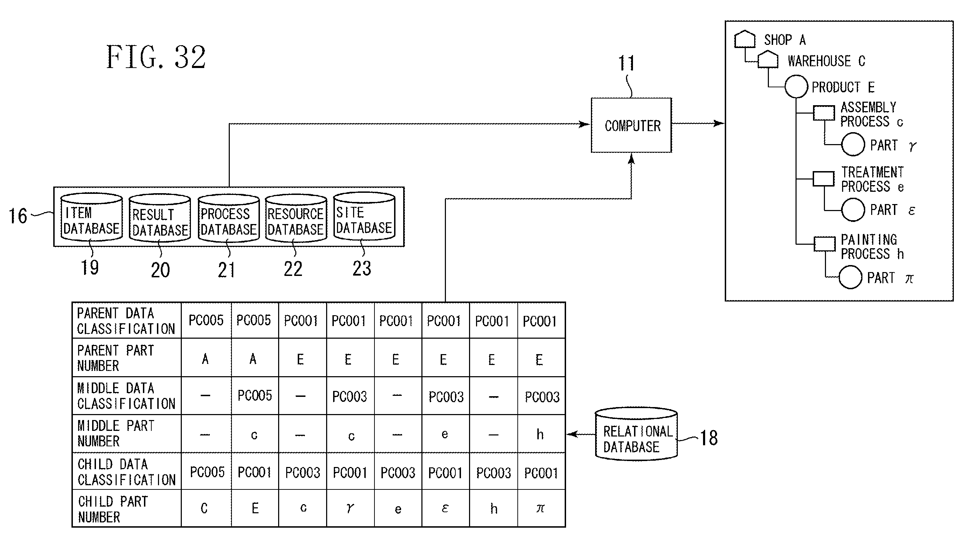

Fig. 31 is a view showing a list of the start date and the end date of each of the production factors, while Fig. 32 is an explanatory view of the production system creation on April 30. The period from January 1, 2005 to September 30 is shown in Fig. 31. This system 10 allows the production system at an arbitrary point in time going back to the past to be created after the production factor and the relationship are deleted and added. For example, when the creation of the production system on April 30 is instructed via the input device as shown in Fig. 31, the computer 11 extracts from the relational database 18 a plurality of two-term relationships of various types and a plurality of three-term relationships of various types which will serve as the creation factors of the production system on April 30 while referring to the start dates and the end dates of the two-term relationship and the three-term relationship, and extracts from the first to fifth factor-type databases 19, 20, 21, 22, and 23 each of the production factors for forming the extracted two-term relationship and three-term relationship while referring to the start date and the end date of the production factor. Next, the computer 11 integrates the extracted two-term relationships and the three-term relationships, and connects in series a plurality of production factors of various types thus extracted from a superordinate concept toward a subordinate concept thereof according to the integrated relationship to thereby create the production system of the article (1) on those dates. The creation of the production system on April 30 will be described as follows.

When the creation of the production system on April 30, 2005 is instructed via the input device, the computer 11 refers to the start dates and the end dates of the production factors, the two-term relationship, and the three-term relationship, extracts from the relational database 18 the two-term relationship and the three-term relationship which will serve as the creation factors of the production system at the date of April 30, 2005, and extracts from the factor-type database 17 the production factors for forming the extracted two-term relationship and three-term relationship. The computer 11 extracts from the relational database 18 the two-term relationship between the shop (A) and the warehouse (C) and the three-term relationship among the shop (A), the warehouse (C), and the product (E), as the logistics department data. Next, the computer 11 interprets the site number (PC005) of the parent data classification of the shop (A) as the site data classification (PC005) of the site database 23 to extract the data of the shop (A) from the site database 23 based on the part number (A) and the site data classification (PC005), and interprets the site number (PC005) of the middle data classification of the warehouse (C) as the site data classification (PC005) (fifth factor-type number) of the site database 23 to extract the warehouse data from the site database 23 based on the part number (C) and the site data classification (PC005). Further, it interprets the item number (PC001) of the child data classification of the product (E) as the item data classification (PC001) (first factor-type number) of the item database 19 to extract the data of the product (E) from the item database 19 based on the part number (E) and the item data classification (PC001).

The computer 11 extracts from the relational database 18 the two-term relationship between the product (E) and the assembly process (c) and the three-term relationship among the product (E), the assembly process (c), and the part (γ), as the manufacturing department data. Next, the computer 11 interprets the process number (PC003) of the middle data classification of the assembly process (c) as the process data classification (PC003) (third factor-type number) of the process database 21 to extract the data of the assembly process (c) from the process database 21 based on the part number (c) and the process data classification (PC003), and interprets the item number (PC002) of the child data classification of the part (γ) as the item data classification (PC001) (first factor-type number) of the item database 19 to extract data of the part (γ) from the item database 19 based on the part number (γ) and the item data classification (PC001).

The computer 11 extracts from the relational database 18 the two-term relationship between the product (E) and the treatment process (e) and the three-term relationship among the product (E), the treatment process (e), and the part (ε), as the manufacturing department data. Next, the computer 11 interprets the process number (PC003) of the middle data classification of the treatment process (e) as the process data classification (PC003) (third factor-type number) of the process database 21 to extract the data of the treatment process (e) from the process database 21 based on the part number (e) and the process data classification (PC003), and interprets the item number (PC001) of the child data classification of the part (ε) as the item data classification (PC001) (first factor-type number) of the item database 19 to extract the data of the part (ε) from the item database 19 based on the part number (ε) and the item data classification (PC001).

The computer 11 extracts from the relational database 18 the two-term relationship between the product (E) and the painting process (h) and the three-term relationship among the product (E), the painting process (h), and the part (π), as the manufacturing department data. Next, the computer 11 interprets the process number (PC003) of the middle data classification of the painting process (h) as the process data classification (PC003) (third factor-type number) of the process database 21 to extract the data of the painting process (h) from the process database 21 based on the part number (h) and the process data classification (PC003), and interprets the item number (PC001) of the child data classification of the part (π) as the item data classification (PC001) (first factor-type number) of the item database 19 to extract the data of the part (π) from the item database 19 based on the part number (π) and the item data classification (PC001).

The computer 11 determines based on the data classification (PC001) and the part number (F) that the products (F) are the same common production factor among the three-term relationship among the shop (A), the warehouse (C), and the product (E), the three-term relationship among the product (E), the assembly process (c), and the part (γ), the three-term relationship among the product (E), the treatment process (e), and the part (ε), and the three-term relationship among the product (E), the painting process (h), and the part (π), and combines the products (F) in these three-term relationships. As a result, these three-term relationships are integrated (three-term relationship integrating means), and a route (technical information route) in which the warehouse (C) lies just below the shop (A), the product (E) lies just below the warehouse (C), the assembly process (c), the treatment process (e), and the painting process (h) lie just below the product (E) in parallel, and the part (γ) lies just below the assembly process (c); the part (ε), just below the treatment process (e); and the part (π), just below the painting process (h) is built.

When integrating the three-term relationships, and building the route connected in series from the higher level toward the lower level, the computer 11 incorporates each of the production factors extracted from the factor-type database in the route, and creates a production system in which a plurality of production factors of various types are connected in series from a superordinate concept toward a subordinate concept thereof (production system creating means). In the created production system, the shop (A) lies at the top, and the warehouse (C), the product (E), the assembly process (c), the treatment process (e), the painting process (h), the part (γ), the part (ε), and the part (π) are located in a line toward the lower level therefrom, as shown in Fig. 32. The computer 11 stores in the storage unit or the hard disk the created production system of the article (1) after deleting and adding the production factor and the relationship (production system storing means), and outputs the created production system of the article (1) via the output device (production system outputting means).

The production system creating system 10 and the production system creating method can delete and add the production factor and the first to third production factors at an arbitrary point in time between the past and the present, and can create the new production system at the arbitrary point in time between the past and the present using the deleted and added production factor and first to third production factors. The production system creating system 10 and the production system creating method can manage in an integrated manner the deletion and addition of the production factor by the factor-type database 17, and can manage in an integrated manner the deletion and addition of the first to third production factors by the relational database 18. For that reason, it is not necessary to delete and add the production factor and the first to third production factors for each of the departments 12, 13, 14, and 15 to thereby create and manage the production system, thus allowing time and labor due to each of the departments 12, 13, 14, and 15 individually performing the deletion and addition of the production factor, and the deletion and addition of the first to third production factors to be omitted.

In this system 10, the start date of the production factor is set as the point in time when the production factors create the production system, the end date of the production factor is set as the point in time when the production factors separate from the production system, the start date of the two-term relationship is set as the point in time when the two-term relationship creates the production system, and the end date of the two-term relationship is set as the point in time when the two-term relationship separates from the production system, but those may be set by time (hour, minute, second) as well as by day.

## Claims

1. A production system creating system for creating a production system of an article from a combination of production factors branching from a superordinate concept toward a subordinate concept, wherein the production factors are linked with each other by an upper/lower two-term relationship between an arbitrary first production factor and a second production factor lying just below it and also linked with each other by an upper/lower three-term relationship among the first and second production factors, and a third production factor lying just below the second production factor, and the system is provided with a factor-type database for storing a plurality of the production factors of different types, and a point in time when the production factors create the production system and a point in time when the production factors separate from the production system; and a relational database for storing a plurality of the two-term relationships of different types and a plurality of the three-term relationships of different types, and a point in time when these two-term relationships and three-term relationships create the production system and a point in time when they separate from the production system, and uses these production factors to execute production system creating means for creating production system at an arbitrary point in time from the past to the present corresponding to various articles,
wherein the production system creating means refers to the point in time when the three-term relationship creates the production system and the point in time when the three-term relationship separates from the production system to extract from the relational database a plurality of the three-term relationships of various types required for the creation of the production system at the arbitrary point in time and to extract from the factor-type database a plurality of production factors of various types corresponding to the first to third production factors for forming the extracted three-term relationships, integrates these three-term relationships extracted from the relational database; and connects in series these production factors extracted from the factor-type database from a superordinate concept toward a subordinate concept thereof according to the integrated three-term relationship to thereby create production systems of various articles at the arbitrary point in time.

2. The production system creating system according to claim 1, wherein in the production system creating system, the factor-type database is classified into a plurality of first to n-th factor-type databases, first to n-th factor-type numbers for specifying a type of the production factor are individually set to these production factors, these production factors are stored in the first to n-th factor-type databases based on the first to n-th factor-type numbers, and the factor-type numbers of the first and second production factors for forming the two-term relationship and the factor-type numbers of the first to third production factors for forming the three-term relationship are stored in the relational database,
wherein the production system creating means extracts a plurality of production factors of various types corresponding to the first to third production factors for forming these extracted three-term relationships from the first to n-th factor-type databases based on the first to n-th factor-type numbers, and while referring to the first to n-th factor-type numbers of the first to third production factors of the three-term relationship extracted from the relational database, combines production factors of the same factor-type number among the production factors for forming these three-term relationships with each other to thereby integrate a plurality of the extracted three-term relationships of various types thus extracted.

3. The production system creating system according to claim 1 or 2, wherein in the production system creating system, first to n-th departmental numbers for sorting the production factors by department are individually set to these production factors, and departmental production system outputting means for outputting a departmental production system formed only of required production factors among the production systems created by the production system creating means is executed for every department,
wherein the departmental production system outputting means refers to the first to n-th departmental numbers of a plurality of production factors of various types corresponding to the first to third production factors for forming these three-term relationships extracted from the relational database, and outputs the production system formed only of production factors corresponding to the same departmental number.

4. The production system creating system according to any one of claims 1 to 3,
wherein in the production system creating system, each of the production factors stored in the factor-type database can be altered going back to the present or the past, and at least one of the first to third production factors stored in the relational database can also be altered going back to the present or the past, and
wherein when each of the production factors stored in the factor-type database and the first to third production factors stored in the relational database are altered, the production system creating means integrates the three-term relationships again using altered new production factors and using new three-term relationships formed of the first to third production factors after the alteration, and re-creates production systems corresponding to the various articles according to the integrated three-term relationship.

5. The production system creating system according to any one of claims 1 to 4,
wherein in the production system creating system, the point in time when the production factors create the production system and the point in time when the production factors separate from the production system can be changed going back to the past, and the point in time when the three-term relationship creates the production system and the point in time when the three-term relationship separates from the production system can also be changed going back to the past.

6. A production system creating method for creating a production system of an article from a combination of various production factors branching from a superordinate concept toward a subordinate concept, the production system creating method comprising:
a factor-type database for storing a plurality of the production factors of different types, and for storing a point in time when these production factors create the production system and a point in time when the production factors separate from the production system; and a relational database for storing a plurality of the two-term relationships of various types between the production factors linked by an upper/lower two-term relationship between an arbitrary first production factor and a second production factor lying just below it, for storing a plurality of the three-term relationships of various types among the production factors linked by an the upper/lower three-term relationship among the first and second production factors, and a third production factor lying just below the second production factor, and for storing a point in time when these two-term relationships and three-term relationships create the production system and a point in time when they separate from the production system,
wherein in the production system creating method, while referring to the point in time when the three-term relationship creates the production system and the point in time when the three-term relationship separates from the production system, a plurality of three-term relationships of various types required for the creation of the production system at an arbitrary point in time is extracted from the relational database and a plurality of production factors of various types corresponding to the first to third production factors for forming the extracted three-term relationships are also extracted from the factor-type database, the three-term relationships extracted from the relational database are integrated, these production factors extracted from the factor-type databases are connected in series from a superordinate concept toward a subordinate concept thereof according to the integrated three-term relationship to thereby create production systems of various articles at the arbitrary point in time, and created production systems are stored and outputted.

7. The production system creating method according to claim 6, wherein the factor-type database is classified into a plurality of first to n-th factor-type databases, first to n-th factor-type numbers for specifying a type of the production factor are individually set to these production factors, these production factors are stored in the first to n-th factor-type databases based on the first to n-th factor-type numbers, and the factor-type numbers of the first and second production factors for forming the two-term relationship and the factor-type numbers of the first to third production factors for forming the three-term relationship are stored in the relational database,
wherein in the production system creating method, a plurality of production factors of various types corresponding to the first to third production factors for forming these extracted three-term relationships are extracted from the first to n-th factor-type databases based on the first to n-th factor-type numbers, and while referring to the first to n-th factor-type numbers of the first to third production factors of the three-term relationship extracted from the relational database, the production factors of the same factor-type number among the production factors for forming these three-term relationships are combined with each other to thereby integrate these extracted three-term relationships of various types.

8. The production system creating method according to claim 6 or 7, wherein in the production system creating method, first to n-th departmental numbers for sorting the production factors by department are individually set to these production factors, the first to n-th departmental numbers of a plurality of production factors of various types corresponding to the first to third production factors for forming these three-term relationships extracted from the relational database are referred to, and a departmental production system formed only of the production factors corresponding to the same departmental number among the created production systems is outputted.

9. The production system creating method according to any one of claims 6 to 8,
wherein in the production system creating method, each of the production factors stored in the factor-type database can be altered going back to the present or the past and at least one of the first to third production factors stored in the relational database can also be altered, and when each of the production factors stored in the factor-type database and the first to third production factors stored in the relational database are altered, altered new production factors are used, new three-term relationships formed of the first to third production factors after the alteration are used to thereby integrate the three-term relationships again, and production systems corresponding to the various articles are re-created according to the integrated three-term relationship.

10. The production system creating method according to any one of claims 6 to 9,
wherein in the production system creating method, the point in time when the production factors create the production system and the point in time when the production factors separate from the production system can be changed going back to the past, and the point in time when the three-term relationship creates the production system and the point in time when the three-term relationship separates from the production system can also be changed going back to the past.
